# EUROPEAN PATENT APPLICATION

(11) **EP 4 835 030 A1**
(43) Date of publication of application: **04.11.2026**
(21) Application number: 26183398.2
(22) Date of filing: 01.03.2023
(51) Int. Cl.: C09J 7/38, B32B 5/20, B32B 27/36

(54) **FOAMING ADHESIVE SHEET AND PRODUCTION METHOD FOR ARTICLE**

(30) Priority: 01.03.2022 JP 2022030698; 11.03.2022 JP 2022038255
(62) Document number(s) of the earlier application(s) in accordance with Art. 76 EPC: 23763496.9 / 4 488 344
(71) Applicant: Dai Nippon Printing Co., Ltd., Tokyo 162-8001 (JP)
(72) Inventor: HASEGAWA, Izumi, Tokyo, 162-8001 (JP); SHIMADA, Shinya, Tokyo, 162-8001 (JP); HOSHI, Kentaro, Tokyo, 162-8001 (JP); SEGAWA, Toshikazu, Tokyo, 162-8001 (JP); MAEDA, Nao, Tokyo, 162-8001 (JP)
(74) Representative: Beck Greener LLP

(57) **Abstract**

The present disclosure provides a foaming adhesive sheet including a first adhesive layer, a substrate, and a second adhesive layer, in this order, wherein the first adhesive layer and the second adhesive layer contain a curable adhesive agent; at least one of the first adhesive layer and the second adhesive layer further contains a foaming agent; a tack of the first adhesive layer is 0 gf or more and less than 10 gf; a tack of the second adhesive layer is 10 gf or more and 500 gf or less; and a loop stiffness is 50 mN/10 mm or more.

## Description

### Technical Field

The present disclosure relates to a foaming adhesive sheet and a method for producing a product using the same.

### Background Art

An adhesive agent adhering materials has been widely used in a variety of fields. For example, an adhesive agent is used when, in a hole, a groove or the like of one member, the other member is fixed. In specific, in an embedded magnet type motor, an adhesive agent is used when a permanent magnet is fixed in a hole of the core.

As an adhesive agent used for a motor, a liquid adhesive agent has been mainly used. However, in the case of the liquid adhesive agent, there are problems such that coating unevenness, extrusion, liquid dripping and the like occur to complicate the adhering step.

Meanwhile, in recent years, instead of the liquid adhesive agent, usage of a sheet-shaped adhesive agent (foaming adhesive sheet) containing a foaming agent has been suggested (for example, see Patent Document 1). With the foaming adhesive sheet, the above described occurrence of defect in the case of the liquid adhesive agent can be inhibited.

### Citation List

### Patent Document

Patent Document 1: Japanese Patent No. 6874867

### Summary

### Technical Problem

For example, when in a hole, a groove or the like of one member, the other member is fixed, as described in Patent Document 1, a foaming adhesive sheet is adhered to the other member to temporally fix, the other member to which the foaming adhesive sheet is adhered is disposed in the hole, the groove, or the like of one member, and then the foaming adhesive sheet is foamed and cured to adhere and fix the two members.

In the case of fixing the other member in the hole, the groove or the like of one member, a space between the two members tends to be narrow. For this reason, in the foaming adhesive sheet to be used, overall thickness needs to be thin. However, when the thickness of the foaming adhesive sheet is thin, the foaming adhesive sheet easily falls by its own weight at the time of conveyance. For example, when the foaming adhesive sheet is sucked and conveyed, if the thickness of the foaming adhesive sheet is thin, the shape of the foaming adhesive sheet tends to have the both ends falling by its own weight. For this reason, when the foaming adhesive sheet is sucked and conveyed, and adhered to the other member, there are problems such that the foaming adhesive sheet may be folded, kinked, bent, and biting of bubbles may occur. Further, when the foaming adhesive sheet in a condition including such a defect is adhered to the other member, a protrusion is generated in the foaming adhesive sheet, and thus there is also a problem that the foaming adhesive sheet may be scratched and peeled off when the other member to which the foaming adhesive sheet is adhered is inserted to the hole, the groove or the like of one member. In such a case, the adhesion after foamed and cured is degraded and it is less reliable.

Also, in the adhering and fixing method as described above, the foaming adhesive sheet is adhered to the other member and temporally fixed utilizing the pressure-sensitive adhesion of the foaming adhesive sheet. However, when the pressure-sensitive adhesion of the foaming adhesive sheet is high, there is a problem that the inserting property may be degraded when the other member to which the foaming adhesive sheet is adhered is inserted to the hole, the groove or the like of one member.

First embodiment of the present disclosure has been made in view of the above circumstances and a main object thereof is to provide a foaming adhesive sheet with excellent adhering property and inserting property.

Also, when the other member is fixed in the hole, the groove or the like of one member, for example, as described in Patent Document 1, a foaming adhesive sheet is adhered to the other member to temporally fix, the other member to which the foaming adhesive sheet is adhered is disposed in the hole, the groove, or the like of one member, and then the foaming adhesive sheet is foamed and cured to adhere and fix the two members.

In the case of fixing the other member in the hole, the groove or the like of one member, a space between the two members tends to be narrow. For this reason, in the foaming adhesive sheet to be used, overall thickness needs to be thin.

Incidentally, in the foaming adhesive sheet, it has been suggested that adhesive layers are disposed on both surfaces of a substrate so as to make the characteristics of the two adhesive layers different. For example, Patent Document 1 discloses that the expansion rates of the two adhesive layers are made different.

However, in the foaming adhesive sheet, when the two adhesive layers are different, curling may occur. In particular, when the thickness of the adhesive sheet is made thin, curling easily occurs. In this case, there are problems such that the adhering of the foaming adhesive sheet to a member is inhibited, and lifting off or peeling off may be generated in the foaming adhesive sheet. In such a case, the adhesion after foamed and cured is degraded, and it is less reliable.

Also, when the thickness of the foaming adhesive sheet is thin, the foaming adhesive sheet easily falls by its own weight at the time of conveying the foaming adhesive sheet. For example, when the foaming adhesive sheet is sucked and conveyed, if the thickness of the foaming adhesive sheet is thin, the shape of the foaming adhesive sheet tends to have the both ends falling by its own weight. For this reason, when the foaming adhesive sheet is sucked and conveyed, and adhered to a member, there are problems such that the foaming adhesive sheet may be folded, kinked, bent, and biting of bubbles may occur. Further, when the foaming adhesive sheet in a condition including such a defect is adhered to a member, a protrusion is generated in the foaming adhesive sheet, and thus there is also a problem that the foaming adhesive sheet may be scratched and peeled off when the other member to which the foaming adhesive sheet is adhered is inserted to the hole, the groove or the like of one member. In such a case also, the adhesion after foamed and cured is degraded, and it is less reliable.

Second embodiment of the present disclosure has been made in view of the above circumstances, and a main object thereof is to provide a foaming adhesive sheet of which curling can be prevented, with excellent adhering property.

### Solution to Problem

One aspect of the first embodiment of the present disclosure provides a foaming adhesive sheet including a first adhesive layer, a substrate, and a second adhesive layer, in this order, wherein the first adhesive layer and the second adhesive layer contain a curable adhesive agent; at least one of the first adhesive layer and the second adhesive layer further contains a foaming agent; a tack of the first adhesive layer is 0 gf or more and less than 10 gf; a tack of the second adhesive layer is 10 gf or more and 500 gf or less; and a loop stiffness is 50 mN/10 mm or more.

The other aspect of the first embodiment of the present disclosure provides a foaming adhesive sheet including a first adhesive layer, a substrate, a second adhesive layer, and a pressure-sensitive adhesive layer, in this order, wherein the first adhesive layer and the second adhesive layer contain a curable adhesive agent and a foaming agent; the pressure-sensitive adhesive layer contains a pressure-sensitive adhesive agent or a curable adhesive agent; a tack of the first adhesive layer is 0 gf or more and less than 10 gf; a tack of the pressure-sensitive adhesive layer is 10 gf or more; and a loop stiffness is 50 mN/10 mm or more.

One aspect of the second embodiment of the present disclosure provides a foaming adhesive sheet including a first adhesive layer, a substrate, and a second adhesive layer, in this order, wherein a composition of the first adhesive layer is different from a composition of the second adhesive layer; the first adhesive layer and the second adhesive layer contain a thermosetting adhesive agent; at least one of the first adhesive layer and the second adhesive layer further contains a foaming agent, and a curvature radius of a curl of the foaming adhesive sheet after placed still at a temperature of 60°C and a humidity of 10 %RH or less for 15 hours is 15 mm or more; and a loop stiffness is 45 mN/10 mm or more.

Another aspect of the present disclosure provides a method for producing a product, the method including: a disposing step of disposing the above described foaming adhesive sheet between a first member and a second member; and an adhering step of adhering the first member and the second member by foaming and curing the foaming adhesive sheet.

### Advantageous Effects

The foaming adhesive sheet in the first embodiment of the present disclosure exhibits effects such that adhering property and inserting property are excellent.

Also, the foaming adhesive sheet in the second embodiment of the present disclosure exhibits effects such that the curling is prevented, and adhering property is excellent.

### Brief Description of Drawings

FIG. 1 is a schematic cross-sectional view exemplifying the foaming adhesive sheet in the present disclosure.
FIG. 2A is a schematic plan view and FIG. 2B is a cross-sectional view exemplifying a loop stiffness measurement device.
FIGS. 3A and 3B are diagrams explaining a method for measuring the loop stiffness.
FIGS. 4A to 4C are diagrams explaining a method for measuring the loop stiffness.
FIG. 5 is a schematic cross-sectional view exemplifying the foaming adhesive sheet in the present disclosure.
FIG. 6 is a schematic cross-sectional view exemplifying the foaming adhesive sheet in the present disclosure.
FIG. 7 is a schematic cross-sectional view exemplifying the foaming adhesive sheet in the present disclosure.
FIGS. 8A to 8C are process drawings exemplifying the method for producing a product in the present disclosure.
FIGS. 9A to 9C are process drawings exemplifying the method for producing the product in the present disclosure.
FIGS. 10A and 10B are diagrams explaining a method for measuring a falling amount.
FIGS. 11A and 11B are diagrams explaining a method for measuring a curvature radius of a curl.
FIG. 12 is a schematic cross-sectional view exemplifying the foaming adhesive sheet in the present disclosure.
FIG. 13 is a schematic cross-sectional view exemplifying the foaming adhesive sheet in the present disclosure.
FIGS. 14A and 14B are process drawings exemplifying the method for producing the product in the present disclosure.

### Description of Embodiments

Embodiments in the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present description and each drawing, for the factor same as that described in the figure already explained, the same reference sign is indicated and the explanation thereof may be omitted.

In the present description, upon expressing an aspect of arranging one member on the other member, when it is expressed simply "on" or "below", both of when the other member is directly arranged on or below the one member so as to contact with each other, and when the other member is arranged on or below the one member further interposing an additional member, can be included unless otherwise described regarded as foaming. Also, in the present descriptions, on the occasion of expressing an aspect wherein some member is placed on the surface of the other member, when described as merely "on the surface side" or "on the surface", unless otherwise stated, it includes both of the following cases: a case wherein some member is placed directly on or directly below the other member so as to be in contact with the other member, and a case wherein some member is placed on the upper side or the lower side of the other member via yet another member.

Also, in the present description, a "sheet" includes a member called a "film". Also, the "film" includes a member called a "sheet".

The present disclosure will be hereinafter described by dividing thereof into the first embodiment and the second embodiment.

### I. First embodiment

First, the foaming adhesive sheet in the first embodiment of the present disclosure, and a method for producing a product using the same will be explained.

### A. Foaming adhesive sheet

The foaming adhesive sheet in the present embodiment has two aspects. In the following, each aspect will be explained.

### α) First aspect

The first aspect of the foaming adhesive sheet in the present embodiment is a foaming adhesive sheet including a first adhesive layer, a substrate, and a second adhesive layer, in this order, wherein the first adhesive layer and the second adhesive layer contain a curable adhesive agent; at least one of the first adhesive layer and the second adhesive layer further contains a foaming agent; a tack of the first adhesive layer is 0 gf or more and less than 10 gf; a tack of the second adhesive layer is 10 gf or more and 500 gf or less; and a loop stiffness is 50 mN/10 mm or more.

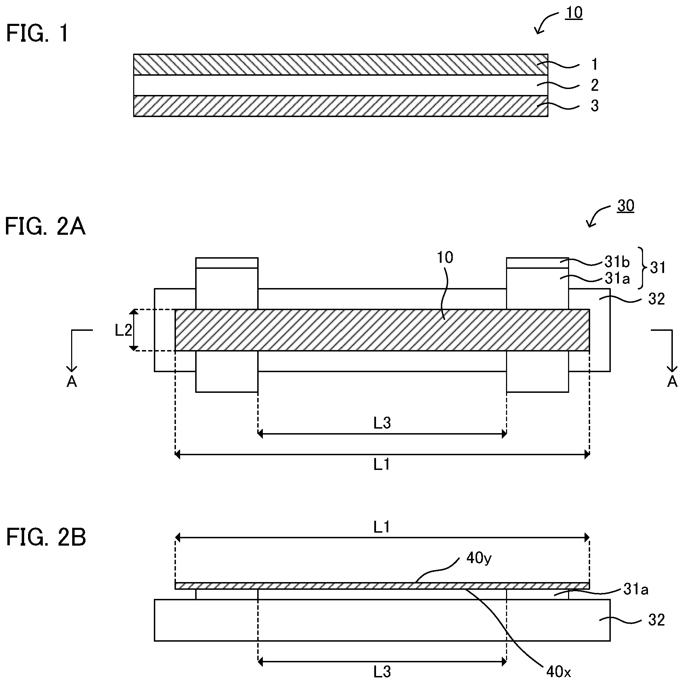

FIG. 1 is a schematic cross-sectional view exemplifying the foaming adhesive sheet in the present aspect. Foaming adhesive sheet 10 in FIG. 1 includes first adhesive layer 1, substrate 2, and second adhesive layer 3, in this order. The first adhesive layer 1 and the second adhesive layer 3 contain a curable adhesive agent, and at least one of the first adhesive layer 1 and the second adhesive layer 3 further contains a foaming agent. Also, a tack of the first adhesive layer 1 and a tack of the second adhesive layer 3 are respectively in the specified range, and a loop stiffness of the foaming adhesive sheet 10 is in the specified range.

In the present aspect, when the tack of the second adhesive layer is in the specified range, the second adhesive layer may have excellent adhesion to a member. In specific, when the other member is adhered to a hole, a groove or the like of one member and fixed, in the case where the second adhesive layer surface of the foaming adhesive sheet is adhered to the other member, the other member to which the foaming adhesive sheet is adhered is inserted to the hole, the groove or the like of one member, and then the foaming adhesive sheet is foamed and cured to adhere one member with the other member, if the tack of the second adhesive layer is in the specified range, the second adhesive layer surface of the foaming adhesive sheet can be adhered to the other member utilizing the tack of the second adhesive layer, and thereby the adhesion of the second adhesive layer to the member can be improved. In this manner, when the other member to which the foaming adhesive sheet is adhered is inserted to the hole, the groove or the like of one member, a peel off and a positional displacement of the foaming adhesive sheet can be inhibited.

Also, in the present aspect, when the tack of the second adhesive layer is in the specified range, the second adhesive layer may have excellent reworkability. For this reason, for example, in the above described adhering and fixing method, when the second adhesive layer surface of the foaming adhesive sheet is adhered to one member utilizing the tack of the second adhesive layer, the positional displacement of the foaming adhesive sheet can be corrected.

Also, in the present aspect, when the tack of the second adhesive layer is in the specified range, for example, in the case the second adhesive layer is formed by a transferring method, a lifting of the second adhesive layer can be inhibited. Further, as described later, in the case a second separator is disposed on a surface of the second adhesive layer that is opposite side to the first adhesive layer, when the tack of the second adhesive layer is in the specified range, the second separator can be easily peeled off, and the workability can be improved.

Also, in the present aspect, the tack of the first adhesive layer is the specified value or less, and thus the first adhesive layer can be substantially non-pressure-sensitive adhesive (tack free), and the first adhesive layer may have excellent slippage. For this reason, for example, in the above described adhering and fixing method, when the other member to which the foaming adhesive sheet is adhered is inserted to the hole, the groove or the like of one member, the other member to which the forming adhesive sheet is adhered can be smoothly inserted, and the inserting property can be improved. Thereby, the peel-off and the positional displacement of the foaming adhesive sheet can be inhibited. Also, in the above described adhering and fixing method, when positional matching is performed by moving the other member with respect to one member, the other member can be smoothly moved with respect to one member in a state the other member is inserted to the hole, the groove or the like of one member, and the positional matching can be easily done.

Further, in the present aspect, the tack of the first adhesive layer is the specified value or less, and the first adhesive layer is substantially non-pressure-sensitive adhesive (tack-free), and thus the first adhesive layer may have excellent slippage as well as excellent blocking resistance. Thus, the handling of the foaming adhesive sheet can also be improved.

Also, in the present aspect, as described above, the second adhesive layer is excellent in adhesion with a member, and the first adhesive layer is excellent in slippage, and thus the peel-off and the positional displacement of the foaming adhesive sheet can be inhibited. Thus, the degrade in adhesion of the foaming adhesive sheet after foamed and cured due to the peel-off and the positional displacement of the foaming adhesive sheet can be inhibited, and also the unevenness of the adhesive strength of the foaming adhesive sheet after foamed and cured due to the peel-off and the positional displacement of the foaming adhesive sheet can be decreased. Therefore, usage of the foaming adhesive sheet in the present aspect can realize the adhesion with high adhesive strength, high reliability, and high quality.

Here, when the other member is adhered and fixed in the hole, the groove or the like of one member, as described above, the space between the two members tends to be narrow. For this reason, in the foaming adhesive sheet to be used, overall thickness needs to be thin. However, when the thickness of the foaming adhesive sheet is thin, the foaming adhesive sheet easily falls by its own weight at the time of conveyance. Then, the inventors of the present disclosure focused on the rigidity (stiffness) of the foaming adhesive sheet. When the thickness of the foaming adhesive sheet is thick, the rigidity tends to be high. However, to begin with, since the thickness of the foaming adhesive sheet needs to be thin, it is not suitable to increase the thickness of the foaming adhesive sheet. Also, when the foaming adhesive sheet includes adhesive layers on both surfaces of the substrate, if the thickness of the substrate is thick, the rigidity tends to be high. However, when the thickness of the substrate is relatively increased while keeping the thickness of the foaming adhesive sheet thin, the thickness of the adhesive layer becomes relatively thin, and there is a risk that adhesion property and foaming property of the adhesive layer may be degraded. Also, in general, in the adhesive layer, the larger the pressure-sensitive adhesion (tack), the softer it tends to be, and the smaller the pressure-sensitive adhesion (tack), the harder it tends to be. For this reason, when the foaming adhesive sheet includes an adhesive layer with pressure-sensitive adhesion (tack), the rigidity tends to be low. Then, the inventors of the present disclosure have found out that the fall of the foaming adhesive sheet by its own weight can be suppressed when the loop stiffness of the foaming adhesive sheet is in the specified range. Further, they have found out that the rigidity can be improved while improving the inserting property when the first adhesive layer is substantially non-pressure-sensitive adhesive (tack-free), among the first adhesive layer and the second adhesive layer.

Note that the loop stiffness is a parameter showing a strength of stiffness of a sheet or a film. The larger the value of the loop stiffness, the stronger the stiffness of the sheet or the film. The loop stiffness is used as a parameter showing the strength of the stiffness of the sheet or the film used for wrapping materials for example, but it is not generally used in the field of adhesive sheet.

In the foaming adhesive sheet of the present aspect, the loop stiffness is the specified value or more, and thus the stiffness can be strong. For this reason, falling of the foaming adhesive sheet by its own weight at the time of conveying the foaming adhesive sheet can be inhibited. Thus, for example, when the foaming adhesive sheet is sucked and conveyed, and adhered to the other member, problems such that the foaming adhesive sheet may be folded, kinked, bent, and occurrence of biting of bubbles can be inhibited. Therefore, the adhering property can be improved. Furthermore, since generation of a protrusion in the foaming adhesive sheet due to these defects can be inhibited, when the other member to which the foaming adhesive sheet is adhered is inserted to the hole, the groove or the like of one member, the foaming adhesive sheet is less likely scratched. Thereby, the peel-off of the foaming adhesive sheet during the insertion can be inhibited. Therefore, from these points also, usage of the foaming adhesive sheet in the present aspect can realize the adhesion with high adhesive strength, high reliability, and high quality.

Here, "pressure-sensitive adhesion" is a concept included in "adhesion". The pressure-sensitive adhesion is used as a meaning of a temporary adhesion phenomenon, whereas the adhesion is distinguished in some cases from a viewpoint that it is used as a meaning of a practically permanent adhesion phenomenon (Physical and Chemical Science Dictionary Fifth Edition, published by Iwanami Shoten). "Pressure-sensitive adhesion" and "pressure-sensitive adhesive force" indicate a property to adhere by pressure sensing and the adhesive force at that time.

It should be noted that, in the present specification, "the pressure-sensitive adhesion of the adhesive layer" and "the pressure-sensitive adhesive force of the adhesive layer" refer to the pressure-sensitive adhesion and the pressure-sensitive adhesive force of the adhesive layer before cured, unless otherwise described. Also, in the present specification, "the adhesion of the adhesive layer" and "the adhesive force of the adhesive layer" refer to the adhesion and the adhesive force of the adhesive layer after cured, unless otherwise described.

Each configuration of the foaming adhesive sheet in the present aspect will be hereinafter explained.

### 1. Characteristics

In the present aspect, the tack of the first adhesive layer is 0 gf or more and less than 10 gf, may be 5 gf or less, and may be 2 gf or less. When the tack of the first adhesive layer is in the above range, the first adhesive layer can be substantially non-pressure-sensitive adhesive (tack free), and the first adhesive layer with excellent slippage and blocking resistance can be achieved.

In the present aspect, the tack of the second adhesive layer is 10 gf or more, may be 30 gf or more, and may be 50 gf or more. When the tack of the second adhesive layer is too low, for example, in the above described adhering and fixing method, there is a possibility that the close adhesion of the second adhesive layer and the other member may be degraded at the time of adhering the second adhesive layer surface of the foaming adhesive sheet to the other member utilizing the tack of the second adhesive layer, and there is a possibility that the adhering property of the first adhesive layer and the second adhesive layer after foamed and cured may be degraded and the adhesive strength may vary due to the peel-off of the foaming adhesive sheet and the positional displacement of the foaming adhesive sheet caused by the adhesion defect of the second adhesive layer and the other member at the time of inserting the other member, to which the foaming adhesive sheet is adhered, to the hole, the groove or the like of one member. Also, the tack of the second adhesive layer is 500 gf or less, may be 400 gf or less, and may be 300 gf or less. When the tack of the second adhesive layer is too high, the reworkability is degraded, and there is a possibility that the correction of the positional displacement of the foaming adhesive sheet may be difficult at the time of adhering the second adhesive layer surface of the foaming adhesive sheet to the other member utilizing the tack of the second adhesive layer, for example, in the above described adhering and fixing method.

Here, the tack of the first adhesive layer and the second adhesive layer can be measured by a probe tack test. As a probe tack test machine, for example, a tacking test machine "TAC-II" from RHESCA CO., LTD can be used. The details of the method for measuring the tack of the first adhesive layer and the second adhesive layer will be described in the section of Examples later.

In the present aspect, the tack of the first adhesive layer can be in the specified range by, for example, adjusting the composition of the first adhesive layer. In specific, in the first adhesive layer containing an epoxy resin and a curing agent, the pressure-sensitive adhesion of the first adhesive layer can be degraded by using the epoxy resin which is solid at a normal temperature, and by using the curing agent which is solid at a normal temperature. Also, in the first adhesive layer containing the epoxy resin and the curing agent, the pressure-sensitive adhesion of the first adhesive layer can be degraded by including the epoxy resin with high softening temperature, or by including the epoxy resin with large weight average molecular weight. For example, the pressure-sensitive adhesion of the first adhesive layer can be degraded by including a plural kinds of epoxy resins with different softening temperature in the first adhesive layer, that is when the first adhesive layer contains one epoxy resin, and the other epoxy resin of which softening temperature is 25°C or more and is higher in 10°C or more than the softening temperature of the one epoxy resin. Also, for example, the pressure-sensitive adhesion of the first adhesive layer can be degraded by including a plural of epoxy resins with different weight average molecular weights in the first adhesive layer, that is when the first adhesive layer contains one epoxy resin, and the other epoxy resin of which weight average molecular weight is 370 or more and is larger in 300 or more than the weight average molecular weight of the one epoxy resin. In more specific, in the first adhesive layer containing the epoxy resin and the curing agent, as described later, as the epoxy resin, a first epoxy resin with low softening temperature and low molecular weight, and a second epoxy resin with high softening temperature and high molecular weight may be included to degrade the pressure-sensitive adhesion of the first adhesive layer. Also, in the first adhesive layer containing the epoxy resin and the curing agent, as described later, the pressure-sensitive adhesion of the first adhesive layer can be degraded by including an acrylic resin soluble with the epoxy resin.

In the present aspect, the tack of the second adhesive layer can be controlled by, for example, adjusting the composition of the second adhesive layer. In specific, in the second adhesive layer containing an epoxy resin and a curing agent, the pressure-sensitive adhesion of the second adhesive layer tends to be high when using the epoxy resin which is liquid at a normal temperature, and when using the curing agent which is liquid at a normal temperature. Also, in the second adhesive layer containing the epoxy resin and the curing agent, the pressure-sensitive adhesion of the second adhesive layer tends to be high when including the epoxy resin with low softening temperature, or when including the epoxy resin with small weight average molecular weight. Also, the pressure-sensitive adhesion of the second adhesive layer tends to be high when a tackifier is added to the second adhesive layer. It should be noted that although the pressure-sensitive adhesion tends to be high when using the curing agent that is liquid at a normal temperature, since there is a possibility that the storage stability may be degraded, the tack of the second adhesive layer is preferably adjusted by adjusting the properties and kinds of components other than the curing agent such as the epoxy resin.

In the present aspect, a static friction coefficient of the surface of the first adhesive layer opposing to the second adhesive layer is, for example, preferably 0.33 or less, may be 0.30 or less, and may be 0.26 or less. When the static friction coefficient of the first adhesive layer surface is in the above range, the first adhesive layer may have excellent slippage. Also, the static friction coefficient may be, for example, 0.16 or more.

Here, the static friction coefficient of the surface of the first adhesive layer can be obtained in accordance with JIS K7125 corresponding to ISO 8295. In specific, a static friction coefficient of the first adhesive layer of the foaming adhesive sheet with a metal plate is measured by the following method. First, the foaming adhesive sheet is cut into 80 mm * 200 mm. Next, the foaming adhesive sheet is placed still on a metal plate (SUS plate) in a square shape that is horizontally placed still, and a slipping piece (63 mm * 63 mm, 200 g weight, bottom surface: felt) is put on the first adhesive layer of the foaming adhesive sheet, and a friction is measured in the conditions of the test speed of 100 mm/min, the test length of 50 mm, the load cell of 10 N, and the temperature of 23°C to calculate the static friction coefficient. As a device, for example, a friction measurement machine FRICTION TESTER TR-2 from Toyo Seiki Seisaku-sho, Ltd. can be used.

In the present aspect, the static friction coefficient of the surface of the first adhesive layer can be controlled by, for example, adjusting the composition of the first adhesive layer. In specific, when the first adhesive layer further contains a foaming agent, the static friction coefficient of the surface of the first adhesive layer can be controlled by the average particle size or the content of the foaming agent included in the first adhesive layer. In more specific, as the average particle size of the foaming agent increases, the static friction coefficient of the surface of the first adhesive layer tends to decrease. Also, as the content of the foaming agent increases, the static friction coefficient of the surface of the first adhesive layer tends to decrease.

In the present aspect, the arithmetic average roughness (Ra) of the surface of the first adhesive layer opposing to the second adhesive layer is, for example, preferably 0.3 µm or more, may be 0.5 µm or more, and may be 0.7 µm or more. When the Ra of the first adhesive layer is in the above range, the first adhesive layer may have excellent slippage. Also, the Ra of the first adhesive layer may be, for example, 1.5 µm or less, may be 1.3 µm or less, and may be 1.1 µm or less.

Here, the Ra of the first adhesive layer can be measured using a white interferometer. In specific, the Ra of the first adhesive layer can be measured using the white interferometer NewView7300 from Zygo Corporation, with observation filed: 0.55 mm * 0.55 mm and sampling space: 0.55 µm.

In the present aspect, the Ra of the first adhesive layer can be controlled by, for example, adjusting the composition of the first adhesive layer. In specific, when the first adhesive layer further contains a foaming agent, the Ra of the first adhesive layer can be controlled by the average particle size or the content of the foaming agent included in the first adhesive layer. In more specific, as the average particle size of the foaming agent increases, the Ra of the first adhesive layer tends to increase. Also, as the content of the foaming agent increases, the Ra of the first adhesive layer tends to increase.

In the foaming adhesive sheet of the present aspect, the loop stiffness is 50 mN/10 mm or more, preferably 75 mN/10 mm or more, and more preferably 100 mN/10 mm or more. When the loop stiffness of the foaming adhesive sheet is in the above range, for example, on the occasion of sucking and conveying the foaming adhesive sheet and adhering to a member, the foaming adhesive sheet is prevented from falling by its own weight, and the adhering property can be improved. Meanwhile, there is no upper limit of the loop stiffness.

The loop stiffness is, as described above, a parameter showing the strength of the stiffness of a film or a sheet. A method for measuring the loop stiffness will be hereinafter explained with reference to FIGS. 2A to 4C.

FIG. 2A is a schematic plan view showing a loop stiffness measurement device, and FIG. 2B is a cross-sectional view of A-A line in FIG. 2A. A test piece of the foaming adhesive sheet 10 is a rectangular having a long side and a short side. In the present aspect, length L1 of the long side of the test piece of the foaming adhesive sheet 10 is 200 mm, and length L2 of the short side is 10 mm. As the loop stiffness measurement device 30, Loop Stiffness Tester (registered trademark) from Toyo Seiki Seisaku-sho, Ltd. can be used. Note that the length L1 of the long side of the test piece of the foaming adhesive sheet 10 can be adjusted as long as the test piece of the foaming adhesive sheet 10 can be held by a pair of chuck part 31 described later.

The loop stiffness measurement device 30 includes a pair of chuck part 31 for holding a pair of end parts of the long side direction of the test piece of the foaming adhesive sheet 10, and supporting member 32 that supports the chuck part 31. The chuck part 31 includes first chuck 31a and second chuck 31b. The foaming adhesive sheet 10 is disposed on a pair of the first chuck 31a, and the second chuck 31b has not held the foaming adhesive sheet 10 between the first chuck 31a yet. As described later, at the time of the measurement, the foaming adhesive sheet 10 is held between the first chuck 31a and the second chuck 31b of the chuck part 31. The second chuck 31b may be connected to the first chuck 31a via a hinge mechanism.

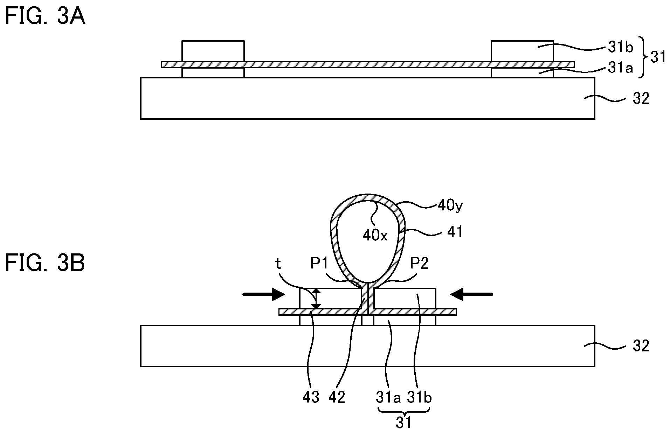

First, as shown in FIGS. 2A and 2B, the test piece of the foaming adhesive sheet 10 is placed on the first chuck 31a of a pair of the chuck part 31 disposed interposing space L3. On this occasion, in the present aspect, the space L3 is set so that the length of later described loop part 41 (hereinafter also referred to as loop length) becomes 60 mm. Also, the test piece of the foaming adhesive sheet 10 is disposed so that inner surface 40x is the surface of the first adhesive layer, and outer surface 40y is the surface of the second adhesive layer. Subsequently, as shown in FIG. 3A, the second chuck 31b is disposed on the test piece of the foaming adhesive sheet 10 so that the end part of the long side direction of the test piece of the foaming adhesive sheet 10 is held between the first chuck 31a and the second chuck 31b.

Next, as shown in FIG. 3B, in a direction which the space between the pair of the chuck part 31 contracts, at least one of the pair of the chuck part 31 is slid on the supporting member 32. Thereby, loop part 41 can be formed in the foaming adhesive sheet 10. The test piece of the foaming adhesive sheet 10 shown in FIG. 3B includes the loop part 41 and a pair of intermediate part 42 and a pair of fixing part 43. The pair of the fixing part 43 is, among the members in the test piece of the foaming adhesive sheet 10, a member held by the pair of the chuck part 31. The pair of the intermediate part 42 is, among the members in the test piece of the foaming adhesive sheet 10, a member positioned between the loop part 41 and the pair of the intermediate part 42. The chuck part 31 is slid on the supporting member 32 until the inner surfaces 40x of the pair of the intermediate part 42 of the foaming adhesive sheet 10 contact each other. Thereby, the loop part 41 having the loop length of 60 mm can be formed. The loop length of the loop part 41 is a length of the test piece of the foaming adhesive sheet 10 between position P1 where the loop part 41 side surface of one of the second chuck 31b crosses the test piece of the foaming adhesive sheet 10, and position P2 where the loop part 41 side surface of the other of the second chuck 31b crosses the test piece of the foaming adhesive sheet 10. The above described space L3 is a value in which 2 * t is added to the length of the loop part 41, when ignoring the thickness of the test piece of the foaming adhesive sheet 10. The "t" is a thickness of the second chuck 31b of the chuck part 31.

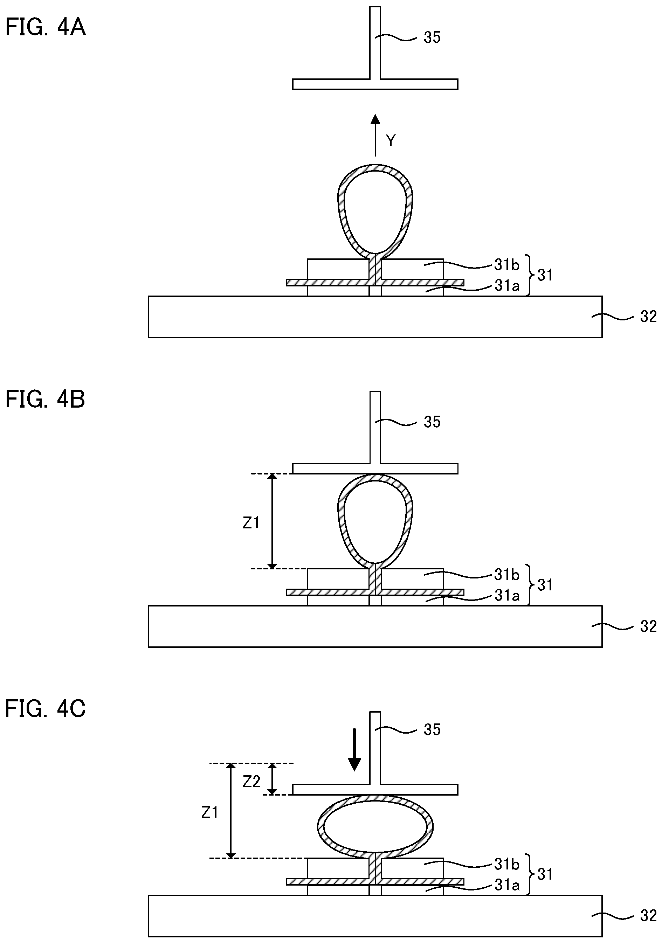

Next, as shown in FIG. 4A, position of the chuck part 31 is adjusted so that protruding direction Y of the loop part 41 to the chuck part 31 is horizontal direction. For example, by moving the supporting member 32 so that the normal direction of the supporting member 32 faces to the horizontal direction, the position of the chuck part 31 supported by the supporting member 32 is adjusted. In the example shown in FIG. 4A, the protruding direction Y of the loop part 41 matches the thickness direction of the chuck part 31. Also, in the protruding direction Y of the loop part 41, load cell 35 is prepared in a position distanced from the second chuck part 31b.

Subsequently, as shown in FIG. 4B, the load cell 35 is moved toward the loop part 41 of the test piece of the foaming adhesive sheet 10, so that the load cell 35 contacts the loop part 41. The distance Z1 is a distance between the load cell 35 and the second chuck 31b of the chuck part 31.

After that, as shown in FIGS. 4B to 4C, the loop part 41 is pushed in the distance Z2 to the chuck part 31 side, by the load cell 35. In the present aspect, the distance Z2 is 15 mm.

Next, as shown in FIG. 4C, the load cell 35 is moved to the chuck part 31 side in the distance Z2, and in a state that the load cell 35 pushes in the loop part 41 of the test piece of the foaming adhesive sheet 10, after when the value of the load applied from the loop part 41 to the load cell 35 is stabled, the value of the load is recorded. The value of the load obtained in this manner is regarded as the loop stiffness of the foaming adhesive sheet 10. In the present specification, unless otherwise described, the environment at the time of measuring the loop stiffness is temperature 23°C and relative humidity 50%.

It should be noted that on the occasion of measuring the loop stiffness of the foaming adhesive sheet, when the foaming adhesive sheet includes a first separator and a second separator as described later, the loop stiffness of the foaming adhesive sheet is measured after peeling off the first separator and the second separator.

In the present aspect, the loop stiffness of the foaming adhesive sheet can be controlled by adjusting, for example, the thickness and the composition of the first adhesive layer, the thickness and the composition of the second adhesive layer, and the thickness and the composition of the substrate. For example, when the thickness of the substrate is thick, the loop stiffness tends to increase. Also, for example, when the thickness of the first adhesive layer is thick, the loop stiffness tends to increase. For these reasons, the thickness of each layer is preferably adjusted so as to obtain the desired loop stiffness. Also, when the tack of the first adhesive layer is decreased by adjusting the composition of the first adhesive layer, the loop stiffness tends to increase.

The adhesion of the foaming adhesive sheet in the present aspect after formed and cured is preferably high. In the foaming adhesive sheet after foamed and cured, the shear strength (adhesive strength) based on JIS K6850 corresponding to ISO 4587 at 23°C may be, for example, 1.50 MPa or more, may be 1.80 MPa or more, and may be 2.10 MPa or more.

Also, the shear strength (adhesive strength) at 130°C may be, for example, 0.50 MPa or more, may be 0.75 MPa or more, and may be 1.00 MPa or more. For example, in a high-strength acrylic foam pressure-sensitive adhesive tape not necessary to be heated, the shear strength (adhesive strength) is approximately 1 MPa or more and 2 MPa or less at ordinary temperature, and is not resistant to 200°C. Therefore, when the shear strength (adhesive strength) at 23°C is in the range described above, it is superior in the strength. Also, when the shear strength (adhesive strength) at 130°C is in the range described above, it may be employed to the use application such as those used in the vicinity of an engine of a vehicle, and those requiring the heat resistance equivalent thereto.

It is preferable that the foaming adhesive sheet in the present aspect has high electrical insulation after foamed and cured. In the foaming adhesive sheet after formed and cured, the dielectric breakdown voltage based on JIS C2107 corresponding to IEC 60454-2 is, for example, preferably 3 kV or more, and more preferably 5 kV or more. When the dielectric breakdown voltage is in the above range, it may be applied to an anticorrosion application or to copper wiring surroundings. Also, in the foaming adhesive sheet after foamed and cured, the thermal conductivity is, for example, preferably 0.05 W/mK or more. When the thermal conductivity is in the above range, the parts may be decreased in size, and the curing reaction during the heating may be proceeded.

### 2. First adhesive layer

### (1) Materials of first adhesive layer

The first adhesive layer in the present aspect contains a curable adhesive agent.

### (a) Curable adhesive agent

As the curable adhesive agent included in the first adhesive layer in the present aspect, a curable adhesive agent commonly used for an adhesive layer of a foaming adhesive sheet can be used. Examples of the curable adhesive agent may include a thermosetting adhesive agent and a photo curing adhesive agent. Among them, the thermosetting adhesive agent is preferable. The thermosetting adhesive agent may be applied even when the member is not transparent, such as in a case of a metal member.

Also, examples of the curable adhesive agent may include an epoxy resin-based adhesive agent, an acrylic resin-based adhesive agent, a phenolic resin-based adhesive agent, an unsaturated polyester resin-based adhesive agent, an alkyd resin-based adhesive agent, a urethane resin-based adhesive agent, and a thermosetting polyimide resin-based adhesive agent.

Among those, the curable adhesive agent is preferably the epoxy resin-based adhesive agent. That is, the curable adhesive agent preferably includes an epoxy resin and a curing agent. In general, the epoxy resin-based adhesive agent is excellent in properties such as mechanical strength, heat resistance, insulating property and chemical resistance, curing shrinkage is small, so that it may be used in a wide variety of applications.

A case wherein the curable adhesive agent is the epoxy resin-based adhesive agent will be hereinafter explained with reference to examples.

### (i) Epoxy resin

The epoxy resin in the present aspect is a compound including at least one or more epoxy group or glycidyl group, and cured by causing a cross-linking polymerization reaction by being used in combination with a curing agent. The epoxy resin also includes a monomer including at least one or more epoxy group or glycidyl group.

An epoxy resin generally used for an adhesive layer of a foaming adhesive sheet may be used as the epoxy resin. Among them, as the epoxy resin, the curable adhesive agent preferably includes a first epoxy resin with softening temperature of 50°C or more and an epoxy equivalent of 5000 g/eq or less, and a second epoxy resin with softening temperature higher than that of the first epoxy resin and a weight-average molecular weight of 20,000 or more. By using the first epoxy resin and the second epoxy resin in combination, the pressure-sensitive adhesion (tack property) of the adhesive layer may be decreased so that a foaming adhesive sheet having excellent slippage may be obtained. Further, a first adhesive layer having excellent blocking resistance and excellent adhesion after foamed and cured may be obtained.

When attempting only an improvement in adhesion after foamed and cured, for example, it is effective to use an epoxy resin with a lower molecular weight (low epoxy equivalent) than an epoxy resin with a high molecular weight (high epoxy equivalent). However, when the epoxy resin with a low molecular weight (low epoxy equivalent) is used, the epoxy resins with a low molecular weight (low epoxy equivalent) are assimilated with each other when, for example, the foaming adhesive sheet is rolled up into a roll, and the blocking easily occurs.

In contrast to this, if a first epoxy resin with relatively low softening temperature (relatively high crystallinity) and a low molecular weight (low epoxy equivalent) is used, when the temperature is higher than the softening temperature, the first epoxy resin is rapidly melted and turned into a liquid with a low viscosity. Therefore, it is easy to improve the adhesion after foamed and cured. Meanwhile, since the first epoxy resin is relatively high in crystallinity, the blocking may be suppressed from occurring, compared to an epoxy resin with relatively low crystallinity or an epoxy resin with no crystallinity. However, when only the first epoxy resin is used, there is a possibility that the blocking suppressing effect is not sufficient, or that the pressure-sensitive adhesion (tack property) of the first adhesive layer may be too high. Therefore, when a second epoxy resin with relatively high softening temperature (with relatively low crystallinity) and high molecular weight is further used, the blocking suppressing effect may be improved, and the pressure-sensitive adhesion (tack property) of the first adhesive layer may be kept low.

### (i-1) First epoxy resin

The first epoxy resin has softening temperature of 50°C or more, and an epoxy equivalent of 5000 g/eq or less. The first epoxy resin has relatively low softening temperature (relatively high crystallinity) as compared with the second epoxy resin to be described later. Since the first epoxy resin has relatively high crystallinity and low molecular weight, it is easy to improve the adhesion after foamed and cured and the blocking resistance. Also, since the first epoxy resin has a low molecular weight, a cross-linking density may be increased so that a first adhesive layer having good mechanical strength, chemical resistance, and curability may be obtained. Also, it is preferable that the first epoxy resin is a solid epoxy resin at ordinary temperature (23°C).

The softening temperature of the first epoxy resin is usually 50°C or more, may be 55°C or more, and may be 60°C or more. Meanwhile, the softening temperature of the first epoxy resin is, for example, 150°C or less. The softening temperature may be measured by a ring and ball method according to JIS K7234.

The epoxy equivalent of the first epoxy resin is, for example, 5000 g/eq or less, may be 3000 g/eq or less, may be 1000 g/eq or less, and may be 600 g/eq or less. Meanwhile, the epoxy equivalent of the first epoxy resin is, for example, 90 g/eq or more, may be 100 g/eq or more, and may be 110 g/eq or more. The epoxy equivalent may be measured by a method according to JIS K7236 corresponding to ISO 3001 (Plastics Epoxy compounds-Determination of epoxy equivalent), and is a number of grams of a resin including an epoxy group of 1 gram equivalent.

The first epoxy resin may be a monofunctional epoxy resin, may be a bifunctional epoxy resin, may be a trifunctional epoxy resin, and may be an epoxy resin of a tetrafunctional or more.

Also, the weight-average molecular weight (Mw) of the first epoxy resin is usually lower than the weight-average molecular weight (Mw) of the second epoxy resin to be described later. Mw of the first epoxy resin is, for example 6000 or less, may be 4000 or less, and may be 3000 or less. Meanwhile, Mw of the first epoxy resin is, for example, 400 or more. Mw is a value in terms of polystyrene when measured with a gel permeation chromatography (GPC).

The melt viscosity at 150°C of the first epoxy resin is, for example, 0.005 Pa·s or more, may be 0.015 Pa·s or more, may be 0.03 Pa·s or more, may be 0.05 Pa·s or more, and may be 0.1 Pa·s or more. When the melt viscosity is too low, preferable foaming property may not be obtained. Also, when the melt viscosity of the first epoxy resin is too low (when the crystallinity of the first epoxy resin is too high), the pressure-sensitive adhesion (tack property) of the first adhesive layer to be obtained may be high. The reason therefor is presumed that, when the melt viscosity of the first epoxy resin is too low (when the crystallinity of first epoxy resin is too high), the crystallinity thereof greatly decreases when it is compatibilized with the second epoxy resin or the acrylic resin so that Tg of the first adhesive layer is decreased. Meanwhile, the melt viscosity of the first epoxy resin at 150°C is, for example, 10 Pa·s or less, may be 5 Pa·s or less, and may be 2 Pa·s or less.

When the melt viscosity is too high, the uniformity of the first adhesive layer to be obtained may be decreased. The melt viscosity may be determined by measuring with a Brookfield type single cylinder rotary viscosimeter and a thermocell for heating a solution, according to JIS K6862 corresponding to ISO 2555 (Resins in the liquid state or as emulsions or dispersions Determination of Brookfield RV viscosity).

Next, a configuration of the first epoxy resin will be described. Examples of the first epoxy resin may include an aromatic epoxy resin, an aliphatic epoxy resin, an alicyclic epoxy resin, and a heterocyclic epoxy resin. Specific examples of the first epoxy resin may include bisphenol type epoxy resins such as a bisphenol A type epoxy resin and a bisphenol F type epoxy resin; novolac type epoxy resins such as a bisphenol A novolac type epoxy resin and a cresol novolac type epoxy resin; and modified epoxy resins such as a urethane modified epoxy resin and a rubber modified epoxy resin. Further, other specific example may include a biphenyl type epoxy resin, a stilbene type epoxy resin, a triphenol methane type epoxy resin, an alkyl-modified triphenol methane type epoxy resin, a triazine nucleus-containing epoxy resin, a dicyclopentadiene-modified phenol type epoxy resin, a naphthalene type epoxy resin, a glycol type epoxy resin, and a pentaerythritol type epoxy resin. The first epoxy resin may be one kind, and may be two kinds or more.

The bisphenol A type epoxy resin may be present in a liquid state at ordinary temperature or in a solid state at ordinary temperature according to the number of repeating units of the bisphenol skeleton. The bisphenol A type epoxy resin wherein the bisphenol skeleton of the main chain is, for example, 2 or more and 10 or less is solid at ordinary temperature. In particular, the bisphenol A type epoxy resin is preferable in the point of attempting to improve the heat resistance.

Particularly, the first epoxy resin is preferably a bisphenol A novolac type epoxy resin represented by the following general formula (1).

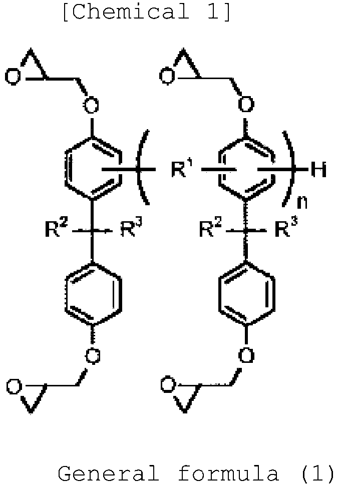

In general formula (1), R¹ is a group represented by CₘH₂ₘ ("m" is 1 or more and 3 or less), R² and R³ are respectively and independently a group represented by CₚH₂ₚ₊₁ ("p" is 1 or more and 3 or less), and "n" is 0 or more and 10 or less.

In general formula (1), "m" in R¹ is preferably 1, that is, R¹ is preferably -CH₂-. Similarly, "p" in R² and R³ is preferably 1, that is, R² and R³ are preferably -CH₃. Also, the hydrogen that bonds to the benzene ring in general formula (1) may be substituted with another element or another group.

The content of the first epoxy resin when the resin component included in the first adhesive layer is regarded as 100 mass parts is, for example, 1 mass part or more, may be 3 mass parts or more, may be 5 mass parts or more, may be 10 mass parts or more, may be 15 mass parts or more, and may be 25 mass parts or more. When the content of the first epoxy resin is too low, the adhesion after foamed and cured and the blocking resistance may be deteriorated. Meanwhile, the content of the first epoxy resin when the resin component included in the first adhesive layer is regarded as 100 mass parts is, for example, 90 mass parts or less, may be 80 mass parts or less, may be 70 mass parts or less, may be 60 mass parts or less, may be 50 mass parts or less, and may be 40 mass parts or less. When the content of the first epoxy resin is too much, the content of the second epoxy resin and the acrylic resin will be relatively low so that there is a possibility that the non-pressure-sensitive adhesion, the blocking resistance, the close adhesion with respect to the substrate after foamed and cured, the cracking resistance after foamed and cured, and the adhesion after foamed and cured may not be balanced.

### (i-2) Second epoxy resin

The softening temperature of the second epoxy resin is higher than that of the first epoxy resin and the weight-average molecular weight is 20,000 or more. The second epoxy resin has relatively high softening temperature (relatively low crystallinity), compared to the above described first epoxy resin. Since the second epoxy resin has relatively low crystallinity and has high molecular weight, the blocking resistance is easily improved. Further, since the second epoxy resin has relatively low crystallinity and has high molecular weight, the increase of the pressure-sensitive adhesion (tack property) due to the first epoxy resin may be suppressed. Also, the second epoxy resin is preferably a solid epoxy resin at ordinary temperature (23°C).

The weight-average molecular weight (Mw) of the second epoxy resin is usually higher than the weight-average molecular weight (Mw) of the first epoxy resin. Mw of the second epoxy resin is usually, 20,000 or more, may be 30,000 or more, and may be 35,000 or more. Meanwhile, Mw of the second epoxy resin is, for example, 100,000 or less.

The epoxy equivalent of the second epoxy resin may be higher than, less than, or equal to the epoxy equivalent of the first epoxy resin. The epoxy equivalent of the second epoxy resin is, for example, 4000 g/eq or more, may be 5000 g/eq or more, and may be 6000 g/eq or more. Meanwhile, the epoxy equivalent of the second epoxy resin is, for example, 20000 g/eq or less.

The second epoxy resin may be a monofunctional epoxy resin, may be a bifunctional epoxy resin, may be a trifunctional epoxy resin, and may be an epoxy resin of a tetrafunctional or more.

The softening temperature of the second epoxy resin is usually higher than the softening temperature of the first epoxy resin. The difference between the two is, for example, 10°C or more, may be 20°C or more, and may be 30°C or more. The softening temperature of the second epoxy resin is, for example, 80°C or more, and may be 90°C or more. Meanwhile, the softening temperature of the second epoxy resin is, for example, 180°C or less.

The configuration of the second epoxy resin is similar to that of the above describe first epoxy resin; thus, the description herein is omitted.

The content of the second epoxy resin when the resin component included in the first adhesive layer is regarded as 100 mass parts is, for example, 10 mass parts or more, may be 15 mass parts or more, may be 20 mass parts or more, may be 25 mass parts or more, may be 30 mass parts or more, may be 35 mass parts or more, may be 40 mass parts or more, and may be 45 mass parts or more. When the content of the second epoxy resin is too low, the close adhesion may be high, and the blocking resistance may be deteriorated. Meanwhile, the content of the second epoxy resin when the resin component included in the first adhesive layer is regarded as 100 mass parts is, for example, 90 mass parts or less, may be 85 mass parts or less, may be 80 mass parts or less, and may be 75 mass parts or less. When the content of the second epoxy resin is too much, the content of the first epoxy resin and the acrylic resin will be relatively low so that there is a possibility that the non-pressure-sensitive adhesion, the blocking resistance, the close adhesion with respect to the substrate after foamed and cured, the cracking resistance after foamed and cured, and the adhesion after foamed and cured may not be balanced.

The proportion of the first epoxy resin with respect to the total of the first epoxy resin and the second epoxy resin is, for example, 5 mass% or more, may be 10 mass% or more, may be 15 mass% or more, and may be 20 mass% or more. Meanwhile, the proportion of the first epoxy resin is, for example, 80 mass% or less, may be 75 mass% or less, and may be 60 mass% or less.

Also, the proportion of the total of the first epoxy resin and the second epoxy resin with respect to all the epoxy resins included in the first adhesive layer is, for example, 50 mass% or more, may be 70 mass% or more, may be 90 mass% or more, and may be 100 mass%.

### (ii) Acrylic resin

When the curable adhesive agent is the epoxy resin-based adhesive agent, the first adhesive layer may further include an acrylic resin compatible with the epoxy resin. The acrylic resin is a resin compatibilized with the epoxy resin. Since the acrylic resin is compatible with the epoxy resin, the toughness of the first adhesive layer is likely to be improved. As the result, the adhesion after foamed and cured may be improved. Further, the acrylic resin is believed to function as a compatibilizing agent of the foaming agent (such as a foaming agent whose shell part is an acrylonitrile copolymer resin), and the adhesion after foamed and cured is improved by being uniformly dispersed and foamed. Also, the flexibility due to the acrylic resin is exhibited so that the close adhesion with respect to the substrate after foamed and cured, and cracking resistance after foamed and cured may be improved. Also, the hardness of the first adhesive layer surface may be maintained at high level, by the acrylic resin being compatibilized with the epoxy resin. Meanwhile, if the acrylic resin is incompatible with the epoxy resin, a flexible part is formed on the first adhesive layer surface so that the interface with the adherend is not slippery enough, and the workability may be deteriorated.

The acrylic resin in the present aspect is compatibilized with the epoxy resin. Here, the state that the acrylic resin being compatibilized with the epoxy resin may be confirmed by, for example, observing the cross-section of the first adhesive layer of the foaming adhesive sheet with a scanning electron microscope (SEM) or a transmission electron microscope (TEM), to confirm that a micron sized island is not formed. More specifically, the average particle size of the island is preferably 1 µm or less. Above all, the average particle size of the island may be 0.5 µm or less, and may be 0.3 µm or less. The number of the samples is preferably large, and is, for example, 100 or more. The area of the observed region is in a range of 100 µm * 100 µm or, when the thickness of the first adhesive layer is 100 µm or less, the observation is carried out in a range of thickness * 100 µm.

The weight-average molecular weight (Mw) of the acrylic resin is, for example, 50,000 or more, may be 70,000 or more, and may be 100,000 or more. The first epoxy resin is relatively high in crystallinity so that the melt viscosity (or dynamic viscoelasticity) upon heating may be too low, and a shrinkage may occur during curing after foaming (the term from the completion of foaming of the foaming agent until the first adhesive layer is cured). However, by using the acrylic resin having a certain level of molecular weight, the melt viscosity may be suppressed from being too low so that the shrinkage during curing after foaming is less likely to occur. Meanwhile, Mw of the acrylic resin is, for example, 1,500,000 or less. The weight-average molecular weight of the acrylic resin may be measured by GPC (eluent: THF, standard substance: PS, sample: 20 µL, flow: 1 mL/min, column temperature: 40°C).

The glass transition temperature (Tg) of the acrylic resin is, for example, 90°C or more, and may be 100°C or more. Meanwhile, Tg of the acrylic resin is, for example, 180°C or less. Tg may be measured by a thermal analysis such as differential scanning calorimetry (DSC) according to JIS K7121 corresponding to ISO 3146.

The storage elastic modulus (E') of the acrylic resin at foaming start temperature may be 1 * 10⁶ Pa or less. By E' being low at the start of the foaming, the flowability is improved so that preferable foaming ability may be obtained. Meanwhile, E' at foaming start temperature is, for example, 1 * 10⁵ Pa or more. Incidentally, foaming start temperature is temperature that varies depending on the kind of the foaming agent. Also, when two kinds or more of the foaming agents are used as the foaming agent, start temperature of the main foaming reaction is regarded as the foaming start temperature.

The storage elastic modulus (E') of the acrylic resin at curing start temperature may be 1 * 10⁵ Pa or more. As described above, the shrinkage may occur during curing after foaming (the term from the completion of foaming of the foaming agent until the first adhesive layer is cured). However, the shrinkage may be suppressed and excellent shape retainability may be obtained by E' being high at curing start temperature. Note that curing start temperature is temperature that varies depending on the kind of the curing agent. Also, when two kinds or more of the curing agents are used as the curing agent, start temperature of the main curing reaction is regarded as the curing start temperature.

Also, the average value of the storage elastic modulus (E') of the acrylic resin at 0°C or more and 100°C or less may be 1 * 10⁶ Pa or more. An excellent non-pressure-sensitive adhesion and blocking resistance may be obtained by the average value of E' before the foaming being high. Meanwhile, the average value of the storage elastic modulus (E') at 0°C or more and 100°C or less is, for example, 1 * 10⁸ Pa or less.

The acrylic resin may include a polar group. Examples of the polar group may include an epoxy group, a hydroxyl group, a carboxyl group, a nitrile group, and an amide group.

The acrylic resin may be a homopolymer of acrylic acid ester monomers that is a mixture component including two kinds or more of the above described homopolymer; and may be a copolymer of two kinds or more acrylic acid ester monomers that is a component including one or more copolymer. Also, the acrylic resin may be a mixture component of the homopolymer and the copolymer. The "acrylic acid" in the acrylic acid ester monomers includes the concept of a methacrylic acid. Specifically, the acrylic resin may be a mixture of the methacrylate polymer and the acrylate polymer, and may be an acrylic acid ester polymer such as acrylate-acrylate, methacrylate-methacrylate, and methacrylate-acrylate. Among them, the acrylic resin preferably includes a copolymer of two kinds or more acrylic acid ester monomers ((meth)acrylic acid ester copolymer).

Examples of the monomer component constituting the (meth)acrylic acid ester copolymer may include the monomer component described in Japanese Patent Application Laid-Open (JP-A) No. 2014-065889. The monomer component may include the above described polar group. Examples of the

(meth)acrylic acid ester copolymer may include an ethyl acrylate-butyl acrylate-acrylonitrile copolymer, an ethyl acrylate-acrylonitrile copolymer, and a butyl acrylate-acrylonitrile copolymer. Incidentally, the "acrylic acid" such as acrylic acid methyl and acrylic acid ethyl include "methacrylic acid" such as (meth)acrylic acid methyl and (meth)acrylic acid ethyl.

As the (meth) acrylic acid ester copolymer, a block copolymer is preferable, and an acrylic block copolymer such as a methacrylate-acrylate copolymer is further preferable. Examples of the (meth) acrylate constituting the acrylic block copolymer may include methyl acrylate, ethyl acrylate, propyl acrylate, butyl acrylate, lauryl acrylate, 2-ethylhexyl acrylate, cyclohexyl acrylate, and benzyl acrylate. These "acrylic acid" also includes "methacrylic acid".

Specific examples of the methacrylate-acrylate copolymer may include acrylic copolymers such as methyl methacrylate-butyl acrylate-methyl methacrylate (MMA-BA-MMA) copolymers. MMA-BA-MMA copolymers also include block copolymers of polymethylmethacrylate-polybutylacrylate-polymethylmethacrylate (PMMA-PBA-PMMA).

The acrylic copolymer may not include a polar group, and may be a modified product wherein the above described polar group is introduced into a part. Since the modified product is easily compatible with an epoxy resin, adhesion is further improved.

Among them, the acrylic resin is preferably a (meth) acrylic acid ester copolymer including a first polymer portion having glass transition temperature (Tg) of 10°C or less, and a second polymer portion having glass transition temperature (Tg) of 20°C or more. Such a (meth) acrylic acid ester copolymer includes a first polymer portion to be a soft segment and a second polymer portion to be a hard segment.

The expression of the above effect may be estimated as follows. By using an acrylic resin including both of a soft segment and a hard segment, such as the above (meth) acrylic acid ester copolymer, the hard segment contributes to heat resistance, and the soft segment contributes to toughness or flexibility, so that a first adhesive layer having good heat resistance, toughness, and flexibility may be obtained.

At least one of the first polymer portion and the second polymer portion included in the above (meth) acrylic acid ester copolymer has compatibility with the epoxy resin. When the first polymer portion has compatibility with the epoxy resin, flexibility may be increased. Also, when the second polymer portion has compatibility with the epoxy resin, it is possible to enhance the cohesiveness and toughness.

When one of the first polymer portion and the second polymer portion has no compatibility with the epoxy resin, the (meth) acrylic acid ester copolymer includes a compatible site that is a polymer portion compatible with the epoxy resin and an incompatible site that is a polymer portion not compatible with the epoxy resin. In this case, when the above (meth) acrylic acid ester copolymer is added, the compatible site is compatibilized with the epoxy resin, and the incompatible site is not compatibilized with the epoxy resin, so that fine phase separation occurs. As the result, a fine sea-island structure is developed. The sea-island structure varies depending on the type of the (meth) acrylic acid ester copolymer, the compatibility of the first polymer portion and the second polymer portion included in the (meth) acrylic acid ester copolymer, and whether the modification by introducing a polar group is done or not. Examples of the sea-island structure may include a sea-island structure wherein a cured product of the epoxy resin and a compatible site of the (meth) acrylic acid ester copolymer are seas, and a non-compatible site of the (meth) acrylic acid ester copolymer is an island; a sea-island structure wherein a non-compatible site of the (meth) acrylic acid ester copolymer is a sea, and a cured product of the epoxy resin and a compatible site of the (meth) acrylic acid ester copolymer are islands; and a sea-island structure wherein the (meth) acrylic acid ester copolymer is a sea, and a cured product of the epoxy resin is an island. By having such a sea-island structure, it is possible to easily disperse the stress, so that it is possible to avoid interfacial breakage and to obtain excellent adhesion after foamed and cured.

Among the above, the (meth) acrylic acid ester copolymer is preferably a block copolymer, and particularly preferably an A-B-A block copolymer including a polymer block A as a compatible site and a polymer block B as a non-compatible site. Further, it is preferable to be a A-B-A block copolymer wherein the first polymer portion is a non-compatible site and the second polymer portion is a compatible site, and the first polymer portion is a polymer block B and the second polymer portion is a polymer block A. By using such an A-B-A block copolymer as an acrylic resin, the island portion may be decreased in the sea-island structure wherein a cured product of the epoxy resin and a compatible site of the (meth) acrylic acid ester copolymer are seas, and a non-compatible site of the (meth) acrylic acid ester copolymer is an island. Also, the sea portion may be decreased in the case of the sea-island structure wherein a non-compatible site of the (meth) acrylic acid ester copolymer is a sea, and a cured product of the epoxy resin, and a compatible site of the (meth) acrylic acid ester copolymer are islands; or in the case of the sea-island structure wherein the (meth) acrylic acid ester copolymer is a sea and a cured product of the epoxy resin is an island.

Further, the above (meth) acrylic acid ester copolymer may be a modified product obtained by introducing the above mentioned polar group into a part of the first polymer portion or the second polymer portion.

The upper limit of Tg of the first polymer portion included in the (meth) acrylic acid ester copolymer is 10°C or less, and above all, it is 0°C or less, and in particular, it may be -10°C or less. Meanwhile, the lower limit of Tg is -150°C or more, and above all, it is -130°C or more, and in particular, it may be -110°C or more.

Incidentally, Tg of the first polymer portion may be determined by calculating according to the following formula based on Tg (K) of each homopolymer described in "POLYMERHANDBOOK 3rd Edition" (issued by John Wiley & Sons, Ink.).$1 / Tg \left(K\right) = {W}_{1} {/ Tg}_{1} + {W}_{2} {/ Tg}_{2} + ⋯ + {W}_{n} {/ Tg}_{n}$
Wₙ; mass fraction of each monomer
Tgₙ; Tg (K) of the homopolymer of the each monomer and publicly available listed values such as those in the Polymer Handbook (3rd Ed., J. Brandrup and E. H. Immergut, WILEY INTERSCIENCE) may be used. The same applies to Tg of the second polymer portion described later.

The first polymer portion included in the above (meth) acrylic acid ester copolymer may be a homopolymer, and may be a copolymer; among them, a homopolymer is preferable. The monomer component and the polymer component constituting the first polymer portion may be any monomer component and polymer component capable of obtaining a first polymer portion with Tg in a predetermined range, and examples thereof may include acrylic acid ester monomers such as acrylic acid butyl, acrylic acid 2-ethylhexyl, acrylic acid isononyl, and acrylic acid methyl; other monomers such as vinyl acetate, acetal, and urethane; a polar group containing monomer including the above described polar group; and copolymers such as EVA.

The lower limit of Tg of the second polymer portion included in the (meth) acrylic acid ester copolymer is 20°C or more, and above all, it is 30°C or more, and in particular, it may be 40°C or more. Meanwhile, the upper limit of Tg may be 150°C or less.

Also, the second polymer portion included in the (meth) acrylic acid ester copolymer may be a homopolymer, and may be a copolymer, but among them, a homopolymer is preferable. The monomer component constituting the second polymer portion may be any monomer component capable of obtaining a second polymer portion with Tg in a predetermined range, and examples thereof may include acrylic acid ester monomers such as methyl methacrylate; other monomers such as acrylamide, styrene, vinyl chloride, amide, acrylonitrile, cellulose acetate, phenol, urethane, vinylidene chloride, methylene chloride, and methacrylonitrile; and a polar group containing monomers including the above described polar group.

Specific examples of the (meth) acrylic acid ester copolymer including the first polymer portion and the second polymer portion described above may include the above described MMA-BA-MMA copolymers.

The content of the acrylic resin when the resin component included in the first adhesive layer is regarded as 100 mass parts is, for example, 1 mass part or more, may be 3 mass parts or more, may be 5 mass parts or more, may be 7 mass parts or more, and may be 10 mass parts or more. When the content of the acrylic resin is too little, there is a possibility that the close adhesion with respect to the substrate after foamed and cured, the cracking resistance after foamed and cured, and the adhesion after foamed and cured may be deteriorated. Meanwhile, the content of the acrylic resin when the resin component included in the first adhesive layer is regarded as 100 mass parts is, for example, 60 mass parts or less, may be 50 mass parts or less, may be 40 mass parts or less, may be 35 mass parts or less, and may be 30 mass parts or less. When the content of the acrylic resin is too much, the content of the first epoxy resin and the second epoxy resin will be relatively low so that there is a possibility that the non-pressure-sensitive adhesion, the blocking resistance, the close adhesion with respect to the substrate after foamed and cured, the cracking resistance after foamed and cured, and the adhesion after foamed and cured may not be balanced. Also, when the content of the acrylic resin is too much, there is a possibility that the strength of the film may be decreased.

### (iii) Curing agent

As the curing agent in the present aspect, a curing agent generally used in an epoxy resin based adhesive agent may be used. The curing agent is preferably solid at an ordinary temperature (23°C). The curing agent that is solid at the ordinary temperature may improve storage stability (pot life), compared to the curing agent that is liquid at the ordinary temperature. Also, the curing agent may be a latent curing agent. Also, the curing agent may be a curing agent wherein a curing reaction occurs by heat, and may be a curing agent wherein a curing reaction occurs by light. Also, a curing agent may be used alone, and two kinds or more thereof may be used.

Reaction start temperature of the curing agent is, for example, 110°C or more, and may be 130°C or more. When the reaction start temperature is too low, the reaction may be started early, and curing may occur in a condition where the flexibility and fluidity of the resin component are low, and uniform curing may hardly occur. Meanwhile, the reaction start temperature of the curing agent is, for example, 200°C or less. When the reaction start temperature is too high, there is a possibility that the resin component may be deteriorated. Incidentally, in addition to the epoxy resin, for example, when a resin having high heat resistance such as a phenol resin is used, since deterioration of the resin component is small, reaction start temperature of the curing agent may be, for example, 300°C or less. The reaction start temperature of the curing agent may be determined by differential scanning calorimetry (DSC).

Specific examples of the curing agent may include an imidazole based curing agent, a phenol based curing agent, an amine based curing agent, an acid anhydride based curing agent, an isocyanate based curing agent, and a thiol based curing agent.

Examples of the imidazole based curing agent may include imidazoles, 2-phenyl-4,5-dihydroxymethylimidazole, 2-phenyl-4-methyl-5-hydroxymethylimidazole, 2-methylimidazole, 2-ethylimidazole, 2-ethyl-4-methylimidazole, 2-isopropylimidazole, 2-phenylimidazole, carboxylates of imidazole compounds, and adducts with epoxy compounds. Also, it is preferable that the imidazole based curing agent includes a hydroxyl group. Since it crystallizes by hydrogen bonding between hydroxy groups, reaction start temperature tends to be high.

Examples of the phenol based curing agent may include phenol resins. Further, examples of the phenol resin may include a resol type phenol resin and a novolac type phenol resin. From the viewpoint of the close adhesion with respect to the substrate after foamed and cured, and cracking resistance after foamed and cured, for example, a phenol type novolac resin having a Tg of 110°C or less is particularly preferable. Also, a phenol based curing agent and an imidazole based curing agent may be used in combination. In this case, it is preferable to use an imidazole based curing agent as a curing catalyst.

Examples of the amine based curing agent may include aliphatic amines, aromatic amines, alicyclic amines, and polyamidoamines.

Examples of the aliphatic amines may include diethylenetriamine (DETA), triethylenetetraamine (TETA), and meth-xylylenediamine (MXDA). Examples of the aromatic amines may include diaminodiphenylmethane (DDM), m-phenylenediamine (MPDA), and diaminodiphenylsulfone (DDS).

Also, as an amine based curing agent, a dicyandiamide based curing agent such as dicyandiamide (DICY); an organic acid dihydrazide based curing agent; an amine adduct based curing agent; and a ketimine based curing agent may be used.

Examples of the acid anhydride based curing agent may include alicyclic acid anhydrides (liquid acid anhydrides), and aromatic acid anhydrides.

Examples of the alicyclic acid anhydrides (liquid acid anhydrides) may include hexahydrophthalic anhydride (HHPA), and methyltetrahydrophhthalic anhydride (MTHPA). Also, examples of the aromatic acid anhydrides may include trimellitic anhydride (TMA), pyromellitic dianhydride (PMDA), and benzophenone tetracarboxylic dianhydride (BTDA).

Examples of the isocyanate based curing agent may include blocked isocyanate.

Examples of the thiol based curing agent may include an ester binding type thiol compound, an aliphatic ether binding type thiol compound, and an aromatic ether binding type thiol compound.

The content of the curing agent when the resin component included in the first adhesive layer is regarded as 100 mass parts is, for example, 1 mass part or more and 40 mass parts or less. For example, when an imidazole based curing agent is used as a main component as the curing agent, the content of the curing agent when the resin component included in the first adhesive layer is regarded as 100 mass parts is preferably, for example, 1 mass part or more and 15 mass parts or less. Meanwhile, when a phenol based curing agent is used as a main component as a curing agent, the content of the curing agent when the resin component included in the first adhesive layer is regarded as 100 mass parts is preferably, for example, 5 mass parts or more and 40 mass parts or less. Incidentally, the use of an imidazole based curing agent or a phenol based curing agent as a main component as the curing agent means that the mass proportion of the imidazole based curing agent or the phenol based curing agent is the highest in the curing agent.

### (b) Foaming agent

The first adhesive layer in the present aspect may or may not contain a foaming agent, but among them, preferably contains the foaming agent. When the foaming agent is included, the surface roughness increases and the friction coefficient decreases, and thus the slippage may further improve. For this reason, among the first adhesive layer and the second adhesive layer, the foaming agent is preferably included in the first adhesive layer of which tack is lower.

As the foaming agent, a foaming agent generally used for an adhesive layer of a foaming adhesive sheet may be used. Also, the foaming agent may be a foaming agent wherein a foaming reaction occurs by heat, and may be a foaming agent wherein a foaming reaction occurs by light.

It is preferable that foaming start temperature of the foaming agent is softening temperature or more of the base resin of the curable adhesive agent such as the epoxy resin and also, activation temperature or less of the curing reaction of the base resin of the curable adhesive agent such as the epoxy resin. Foaming start temperature of the foaming agent is, for example, 70°C or more, and may be 100°C or more. When the foaming start temperature is too low, there is a possibility that the reaction may be started early, and foaming may occur in a condition where the flexibility and fluidity of the resin component are low, and uniform foaming may hardly occur. Meanwhile, the foaming start temperature of the foaming agent is, for example, 210°C or less. When the foaming start temperature is too high, there is a possibility that the resin component is deteriorated.

The softening temperature of the main agent of the curable adhesive agent such as the epoxy resin may be measured using the ring and ball type softening temperature testing method specified in JIS K7234.

Examples of the foaming agent may include a microcapsule type foaming agent. It is preferable that the microcapsule type foaming agent includes a thermal expansion agent such as a hydrocarbon as a core, and a resin such as an acrylonitrile copolymer as a shell.

Also, as the foaming agent, for example, an organic based foaming agent and an inorganic based foaming agent may be used. Examples of the organic based foaming agent may include azo foaming agents such as azodicarbonamide (ADCA), azobisformamide, and azobisisobutyronitrile; a fluorinated alkane based foaming agents such as trichloromonofluoromethane; a hydrazine based foaming agents such as paratoluenesulfonylhydrazide; a semicarbazide based foaming agents such as p-toluenesulfonylsemicarbazide; a triazole based foaming agent such as 5-morpholyl-1,2,3,4-thiatriazole; and N-nitroso based foaming agents such as a N,N-dinitrosoterephthalamide. Meanwhile, examples of the inorganic based foaming agent may include ammonium carbonate, ammonium hydrogencarbonate, ammonium nitrite, ammonium borohydride, and azides.

The average particle size of the foaming agent may be, for example, 10 µm or more, may be 13 µm or more, and may be 17 µm or more. When the average particle size of the foaming agent is in the above range, the static friction coefficient of the first adhesive layer surface may be decreased so that the slippage of the first adhesive layer may be excellent. Also, the average particle size of the foaming agent is preferably the thickness of the first adhesive layer or less, may be, for example 44 µm or less, may be 30 µm or less, and may be 24 µm or less.

Incidentally, the average particle size of the foaming agent is a particle size at integrated value of 50% in the particle size distribution determined by a laser diffraction scattering method. Also, when measuring the average particle size of the foaming agent, the foaming agent is separated by dissolving the first adhesive layer in a solvent. The solvent is not particularly limited as long as the solvent is capable of dissolving the components other than the foaming agent included in the first adhesive layer, and is appropriately selected according to the type, for example, of the curable adhesive agent included in the first adhesive layer. For example, a solvent used for an adhesive composition used to form the first adhesive layer may be used. Specifically, methyl ethyl ketone, ethyl acetate, toluene and the like may be used.

The content of the foaming agent when the resin component included in the first adhesive layer is regarded as 100 mass parts is, for example, 0.5 mass parts or more, may be 2 mass parts or more, may be 3 mass parts or more, may be 4 mass parts or more, and may be 5 mass parts or more. Meanwhile, the content of the foaming agent when the resin component included in the first adhesive layer is regarded as 100 mass parts is, for example, 25 mass parts or less, may be 20 mass parts or less, and may be 15 mass parts or less. When the content of the foaming agent is too little, there is a possibility that the static friction coefficient of the first adhesive layer surface may be increased. Also, when the content of the foaming agent is too much, since the content of the curable adhesive agent is relatively decreased, the adhesion after foamed and cured may be deteriorated.

### (c) Other component

For example, when the curable adhesive agent is the epoxy resin based adhesive agent, the first adhesive layer in the present aspect may include only the epoxy resin and the acrylic resin as the resin component, and may further include additional resins. Examples of the additional resin may include a urethane resin.

The proportion of the total of the first epoxy resin, the second epoxy resin and the acrylic resin with respect to the resin components included in the first adhesive layer is, for example, 70 mass% or more, may be 80 mass% or more, may be 90 mass% or more, and may be 100 mass%.

The content of the resin components included in the first adhesive layer is, for example, 60 mass% or more, may be 70 mass% or more, may be 80 mass% or more, and may be 90 mass% or more.

The first adhesive layer may include, if necessary, for example, additives such as a silane coupling agent, a filler, an antioxidant, a light stabilizer, an ultraviolet absorber, a lubricant, a plasticizer, an antistatic agent, a cross-linking agent, and a colorant. Examples of the silane coupling agent may include an epoxy based silane coupling agent. Examples of the filler may include inorganic fillers such as calcium carbonate, aluminum hydroxide, magnesium hydroxide, antimony trioxide, zinc borate, molybdenum compounds, and titanium dioxide. Examples of the antioxidant may include a phenol based antioxidant and a sulfur based antioxidant.

### (2) Constitution of first adhesive layer

When the first adhesive layer further contains a foaming agent, the first adhesive layer is capable of foaming at foaming magnification of, for example, 4 times or more and 15 times or less. For example, when only the first adhesive layer among the first adhesive layer and the second adhesive layer contains the foaming agent, the foaming magnification may be, for example, 5 times or more, may be 7 times or more, and may be 9 times or more. Also, in the above case, the foaming magnification may be, for example, 14 times or less, may be 13 times or less, and may be 12 times or less. Meanwhile, for example, when the both of the first adhesive layer and the second adhesive layer among the first adhesive layer and the second adhesive layer contain the foaming agent, the foaming magnification may be, for example, 5 times or more, may be 6 times or more, and may be 7 times or more. Also, in the above case, the foaming magnification may be, for example, 14 times or less, may be 12 times or less, and may be 10 times or less. When the foaming magnification is too low and too high, the adhesion after foamed and cured may be decreased.

Here, the foaming magnification may be determined by the following formula: 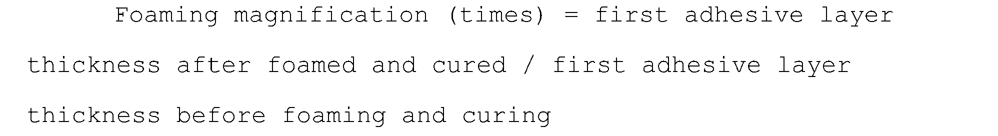 Foaming magnification (times) = first adhesive layer thickness after foamed and cured / first adhesive layer thickness before foaming and curing

The thickness of the first adhesive layer is not particularly limited, but when the first adhesive layer contains the foaming agent, it is preferably average particle size of the foaming agent or more; for example, it is 10 µm or more, may be 15 µm or more, and may be 20 µm or more. When the first adhesive layer is too thin, the close adhesion with respect to the substrate and the adhesion after foamed and cured may not be sufficiently obtained. Meanwhile, the thickness of the first adhesive layer is, for example, 200 µm or less, may be 150 µm or less, and may be 100 µm or less. When the first adhesive layer is too thick, the quality of the surface may be deteriorated.

Here, the thickness of the first adhesive layer is a value measured from a cross-section in the thickness direction of the foaming adhesive sheet observed with a transmission electron microscope (TEM), a scanning electron microscope (SEM), or a scanning transmission type electron microscope (STEM), and may be an average value of the thickness at 10 locations selected at random. Incidentally, this is similar to a method for measuring the thickness of other layer included in the foaming adhesive sheet.

The first adhesive layer may be a continuous layer, and may be a discontinuous layer. Example of the discontinuous layer may include patterns such as stripes and dots. Also, the surface of the first adhesive layer may have a concavo-convex shape such as emboss.

The first adhesive layer may be formed, for example, by applying an adhesive composition including the curable adhesive agent, the foaming agent, and the like, and removing a solvent. Examples of application methods may include roll coating, reverse roll coating, transfer roll coating, gravure coating, gravure reverse coating, comma coating, rod coating, blade coating, bar coating, wire bar coating, die coating, lip coating, and dip coating.

The adhesive composition may include a solvent and may not include a solvent. Incidentally, the solvent in the present descriptions is in a broad sense including not only a strict solvent (a solvent for dissolving a solute) but also a dispersion medium. Also, the solvent included in the adhesive composition is volatilized and removed when the adhesive composition is applied and dried to form an adhesive layer.

The adhesive composition may be obtained by mixing each of the above described components and kneading and dispersing them, if necessary. As the mixing and dispersing methods, common kneading dispersers such as twin roll mills, triple roll mills, pebble mills, trommels, Szegvari attritors, high-speed impeller dispersers, high-speed stone mills, high-speed impact mills, Despar, high-speed mixers, ribbon blenders, cokneaders, intensive mixers, tumblers, blenders, dispersers, homogenizers, and ultrasonic dispersers, can be applied.

### 3. Second adhesive layer

### (1) Materials of second adhesive layer

The second adhesive layer in the present aspect contains a curable adhesive agent.

### (a) Curable adhesive agent

The curable adhesive agent included in the second adhesive layer in the present aspect may be the same as the curable adhesive agent used for the first adhesive layer. Among those, the curable adhesive agent is preferably the epoxy resin-based adhesive agent.

A case wherein the curable adhesive agent is the epoxy resin-based adhesive agent will be hereinafter explained with reference to examples.

### (i) Epoxy resin

The epoxy resin in the present aspect may be the same as the epoxy resin used for the first adhesive layer.

An epoxy resin generally used for an adhesive layer of a foaming adhesive sheet may be used as the epoxy resin.

Examples of the epoxy resin may include an aromatic epoxy resin, an aliphatic epoxy resin, an alicyclic epoxy resin, and a heterocyclic epoxy resin.
Specific examples of the epoxy resin may be the same as the specific examples of the first epoxy resin used for the first adhesive layer.

The epoxy resin may be a monofunctional epoxy resin, may be a bifunctional epoxy resin, may be a trifunctional epoxy resin, and may be an epoxy resin of a tetrafunctional or more.

Among those, as the epoxy resin, epoxy resins that are liquid at an ordinary temperature such as a bisphenol A type epoxy resin and a bisphenol F type epoxy resin, and epoxy resins with low softening point are preferably used. The reason therefor is that the tack of the second adhesive layer can be easily adjusted to the specified range by using these epoxy resins.

### (ii) Acrylic resin

When the curable adhesive agent is the epoxy resin-based adhesive agent, the second adhesive layer may further include an acrylic resin compatible with the epoxy resin. The film formability can be improved.

The acrylic resin may be the same as the acrylic resin used for the first adhesive layer.

### (iii) Curing agent

The curing agent in the present aspect may be the same as the curing agent used for the first adhesive layer. Also, as the curing agent, a curing agent that is solid at an ordinary temperature, and a curing agent that is liquid at an ordinary temperature may be used, but from the viewpoint of storage stability, it is preferable to use the curing agent that is solid at an ordinary temperature.

### (b) Foaming agent

The second adhesive layer in the present aspect may or may not contain a foaming agent, but among them, it is preferable to include the foaming agent. When the both of the first adhesive layer and the second adhesive layer contain the foaming agent, the adhesion of the first adhesive layer and the second adhesive layer after foamed and cured can be improved.

The foaming agent may be the same as the foaming agent used for the first adhesive layer.

### (c) Other component

For example, when the curable adhesive agent is the epoxy resin based adhesive agent, the second adhesive layer in the present aspect may include only the epoxy resin and the acrylic resin as the resin component, and may further include additional resins. Examples of the additional resin may include a urethane resin.

The proportion of the total of the epoxy resin and the acrylic resin with respect to the resin components included in the second adhesive layer is, for example, 70 mass% or more, may be 80 mass% or more, may be 90 mass% or more, and may be 100 mass%.

The content of the resin components included in the second adhesive layer is, for example, 60 mass% or more, may be 70 mass% or more, may be 80 mass% or more, and may be 90 mass% or more.

The second adhesive layer may contain an additive as required. The additive may be the same as the additive used for the first adhesive layer.

### (2) Constitution of second adhesive layer

When the second adhesive layer further contains the foaming agent, the second adhesive layer is capable of foaming at foaming magnification of, for example, 1.5 times or more and 12 times or less. For example, when the both of the first adhesive layer and the second adhesive layer among the first adhesive layer and the second adhesive layer contain the foaming agent, the foaming magnification may be, for example, 2 times or more, may be 3 times or more, and may be 4 times or more. Also, in the above case, the foaming magnification may be, for example, 10 times or less, may be 9 times or less, and may be 8 times or less. When the foaming magnification is too low and too high, the adhesion after foamed and cured may be decreased.

The thickness of the second adhesive layer may be the same as the thickness of the first adhesive layer.

The second adhesive layer may be a continuous layer, and may be a discontinuous layer. Also, the surface of the second adhesive layer may have a concavo-convex shape such as emboss.

The method for forming the second adhesive layer may be the same as the method for forming the first adhesive layer.

### 4. Substrate

The substrate in the present aspect is disposed between the first adhesive layer and the second adhesive layer.

The substrate preferably has an insulating property. Also, it is preferable that the substrate is in a sheet form. The substrate may have a single layer structure, and may have a multiple layer structure. Also, the substrate may or may not have a porous structure inside.

Examples of the substrate may include a resin substrate and a nonwoven fabric.

Examples of the resin included in the resin substrate may include polyester resins, polycarbonates, polyarylates, polyurethanes, polyamide resins, polyimide resins, polysulfone resins, polyetherketone resins, polyphenylene sulfides (PPS), and modified polyphenylene oxides.

Examples of the polyester resins may include polyethylene terephthalate (PET), polybutylene terephthalate, polyethylene naphthalate (PEN), and aromatic polyesters. Also, examples of the polyamide resins may include polyamides, and polyetheramides. Further, examples of the polyimide resins may include polyimides, polyetherimides, and polyamideimides. Furthermore, examples of the polysulfone resins may include polysulfones, and polyethersulfones. Moreover, examples of the polyetherketone resins may include polyetherketones, and polyether ether ketones.

The glass transition temperature of the resin is, for example, 80°C or more, may be 140°C or more, and may be 200°C or more. Also, a liquid crystal polymer (LCP) may be used as the resin.

Examples of the nonwoven fabric may include nonwoven fabrics including fibers such as cellulose fibers, polyester fibers, nylon fibers, aramid fibers, polyphenylene sulfide fibers, liquid crystal polymer fibers, glass fibers, metal fibers, and carbon fibers.

In order to improve the close adhesion with respect to the first adhesive layer and the second adhesive layer, the surface of the substrate may be subjected to a surface treatment.

It is preferable that the thickness of the substrate is thinner than the thickness of the first adhesive layer, and thinner than the thickness of the second adhesive layer. When the thickness of the substrate is made thinner than the thickness of the first adhesive layer and the thickness of the second adhesive layer, the thickness of the foaming adhesive sheet can be decreased, and the thickness of the first adhesive layer and the thickness of the second adhesive layer can be relatively increased. For this reason, the inserting property can be improved by making the thickness of the foaming adhesive sheet thin, without degrading the adhering property and the foaming property of the first adhesive layer and the second adhesive layer.

In specific, the thickness of the substrate is 200 µm or less, may be 100 µm or less, and may be 50 µm or less. Also, the thickness of the substrate is, for example, 2 µm or more, may be 5 µm or more, and may be 9 µm or more.

### 5. Other constitution

### (1) First intermediate layer and second intermediate layer

The foaming adhesive sheet in the present aspect may include a first intermediate layer between the substrate and the first adhesive layer. Also, the foaming adhesive sheet in the present aspect may include a second intermediate layer between the substrate and the second adhesive layer. By disposing the first intermediate layer and the second intermediate layer, the close adhesion of the first adhesive layer and the second adhesive layer with respect to the substrate may further be improved. Further, by disposing the first intermediate layer and the second intermediate layer, for example, the stress applied to a bent portion when the foaming adhesive sheet is bent may be eased, or the stress applied to a cut portion when the foaming adhesive sheet is cut may be eased. As the result, lifting off or peeling off of the first adhesive layer and the second adhesive layer from the substrate may be suppressed when the foaming adhesive sheet is bent or cut.

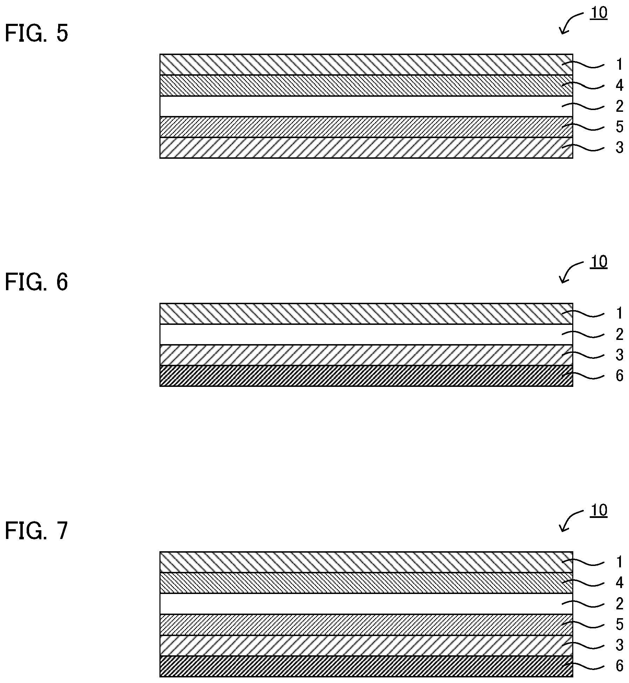

For example, in the foaming adhesive sheet 10 shown in FIG. 5, first intermediate layer 4 is disposed between the substrate 2 and the first adhesive layer 1, and second intermediate layer 5 is disposed between the substrate 2 and the second adhesive layer 3. Incidentally, in FIG. 5, although the foaming adhesive sheet 10 includes both of the first intermediate layer 4 and the second intermediate layer 5, only either one may be included.

The foaming adhesive sheet may include at least one of the first intermediate layer and the second intermediate layer, and for example, only the first intermediate layer disposed between the substrate and the first adhesive layer may be included, only the second intermediate layer disposed between the substrate and the second adhesive layer may be included, and both of the first intermediate layer disposed between the substrate and the first adhesive layer, and the second intermediate layer disposed between the substrate and the second adhesive layer may be included.

Materials included in the first intermediate layer and the second intermediate layer are not particularly limited as long as the materials are capable of improving the close adhesion of the substrate and the first adhesive layer and the second adhesive layer, and capable of releasing the stress, and the materials are appropriately selected according to the material and the like of the substrate, the first adhesive layer and the second adhesive layer. Examples thereof may include polyester, polyvinyl chloride, polyvinyl acetate, polyurethane, a polymer obtained by copolymerizing at least 2 kinds or more of them, cross-linked material thereof, and mixture thereof.

The cross-linked material is a cross-linked material wherein the resin described above is cross-linked by a curing agent. Examples of the curing agent may include an isocyanate based curing agent. Also, for example, when reactive group/NCO equivalent is regarded as 1, the isocyanate based curing agent is preferably added at proportion of 0.5 mass% or more and may be 20 mass% or less, with respect to the resin.

Among the above, the first intermediate layer and the second intermediate layer preferably include a cross-linked resin. Incidentally, the cross-linked resin means those not fused at high temperature. Thereby, the adhesive force under high temperature, that is, the heat resistance may be improved.

The thickness of the first intermediate layer and the second intermediate layer is respectively not particularly limited, and is, for example, 0.1 µm or more, may be 0.5 µm or more, and may be 1 µm or more. When the first intermediate layer and the second intermediate layer are too thin, there is a possibility that sufficient effect of suppressing the peeling off of the first adhesive layer and the second adhesive layer from the substrate when the foaming adhesive sheet is bent or cut, may not be obtained. Meanwhile, the thickness of the first intermediate layer and the second intermediate layer is respectively, for example, 4 µm or less, and may be 3.5 µm or less. Since the heat resistance of the first intermediate layer and the second intermediate layer themselves is usually not high, when the first intermediate layer and the second intermediate layer are too thick, the heat resistance (adhesive strength under high temperature) may be degraded.

The first intermediate layer and the second intermediate layer may be formed, for example, by applying a resin composition and removing a solvent. Examples of application methods may include roll coating, reverse roll coating, transfer roll coating, gravure coating, gravure reverse coating, comma coating, rod coating, blade coating, bar coating, wire bar coating, die coating, lip coating, and dip coating.

### (2) First separator and second separator

The foaming adhesive sheet in the present aspect may include a separator on a surface of the first adhesive layer that is opposite side to the second adhesive layer. Also, the foaming adhesive sheet in the present aspect may include a second separator on a surface of the second adhesive layer that is opposite side to the first adhesive layer.

The first separator and the second separator are not particularly limited as long as they may be peeled off from the first adhesive layer and the second adhesive layer, and may have a strength to the extent capable of protecting the first adhesive layer and the second adhesive layer. Examples of such first separator and second separator may include a releasing film, and a releasing paper. Also, the first separator and the second separator may have a single layer structure, and may have a multiple layer structure.

Examples of the separator having a single layer structure may include a fluorine resin based film.

Also, Examples of the separator having a multiple layer structure may include a stacked body including a releasing layer on one surface or both surfaces of a substrate. Examples of the substrate layer may include resin films such as polypropylene, polyethylene, and polyethylene terephthalate; and paper such as high-quality paper, coated paper, and impregnated paper. The material of the releasing paper is not particularly limited as long as it has releasing property, and examples may include a silicone compound, an organic compound modified silicone compound, a fluorine compound, an amino-alkyd compound, a melamine compound, an acrylic compound, a polyester compound, and a long-chain alkyl compound. Any one of an emulsion type, a solvent type, and a solventless type of these compounds may be used.

The first separator and the second separator may be the same and may be different. Above all, it is preferable that the first separator has heavy removability, and the second separator has light removability. In the foaming adhesive sheet, the first adhesive layer is substantially non-pressure-sensitive adhesive (tack free), and the second adhesive layer has a tack. For this reason, for example, in a case of adhering a rotor and a permanent magnet in an embedded magnet type motor, when a second member to which the foaming adhesive sheet is disposed is inserted to a hole of a first member after disposing the foaming adhesive sheet in the second member, by adhering the second adhesive layer surface of the foaming adhesive sheet to the second member so as to make the first adhesive layer surface of the foaming adhesive sheet the front surface, the close adhesion of the second member and the foaming adhesive sheet, and inserting property of the second member to which the foaming adhesive sheet is disposed during the insertion can be improved. In this case, among the first separator and the second separator, peeling off is done from the second separator, and thus, when the first separator has heavy removability and the second separator has light removability, the second separator can be more easily peeled off compared to the first separator.

Note that light removing and heavy removing refer to the level of force required to peel off the first separator and the second separator from the first adhesive layer and the second adhesive layer, and the light removing means that the peel force is smaller than that of heavy removing.

### 6. Foaming adhesive sheet

The thickness of the foaming adhesive sheet in the present aspect is, for example, 10 µm or more, and may be 20 µm or more. Meanwhile, the thickness of the foaming adhesive sheet is, for example, 1000 µm or less, and may be 200 µm or less.

The application of the foaming adhesive sheet in the present aspect is not particularly limited. The foaming adhesive sheet in the present aspect may be used, for example, when two members are adhered to each other by placing the foaming adhesive sheet between the two members, and then, forming and curing the foaming adhesive sheet. Above all, the foaming adhesive sheet in the present aspect is preferably used when the second member to which the foaming adhesive sheet is disposed is inserted to the hole of the first member after disposing the foaming adhesive sheet in the second member, and the first member and the second member are adhered to each other by foaming and curing the foaming adhesive sheet.

The method for producing the foaming adhesive sheet in the present aspect is not particularly limited, and appropriately selected depending on the layer structure of the foaming adhesive sheet. For example, below two methods for producing the foaming adhesive sheet can be exemplified.

In the first method for producing the foaming adhesive sheet, for example, first, an adhesive composition for forming the first adhesive layer is applied on one surface of the substrate, and dried to form the first adhesive layer. Also, an adhesive composition for forming the second adhesive layer is applied on the second separator and dried to form the second adhesive layer. Then, a stacked body including the substrate and the first adhesive layer, and a stacked body including the second separator and the second adhesive layer are laminated. Thereby, a foaming adhesive sheet is obtained. It should be noted that the first intermediate layer and the second intermediate layer may be formed. In this method, since the drying step to the first adhesive layer is once, the foaming adhesive sheet can be efficiently produced.

In the second method for producing the foaming adhesive sheet, for example, first, an adhesive composition for forming the first adhesive layer is applied on one surface of the substrate, and dried to form the first adhesive layer. Then, an adhesive composition for forming the second adhesive layer is applied on the other surface of the substrate, and dried to form the second adhesive layer. Subsequently, the second separator is laminated on the second adhesive layer. Thereby, a foaming adhesive sheet is obtained. It should be noted that the first intermediate layer and the second intermediate layer may be formed.

### β) Second aspect

The second aspect of the foaming adhesive sheet in the present embodiment is a foaming adhesive sheet including a first adhesive layer, a substrate, a second adhesive layer, and a pressure-sensitive adhesive layer, in this order, wherein the first adhesive layer and the second adhesive layer contain a curable adhesive agent and a foaming agent; the pressure-sensitive adhesive layer contains a pressure-sensitive adhesive agent or a curable adhesive agent; a tack of the first adhesive layer is 0 gf or more and less than 10 gf; a tack of the pressure-sensitive adhesive layer is 10 gf or more; and a loop stiffness is 50 mN/10 mm or more.

FIG. 6 is a schematic cross-sectional view exemplifying the foaming adhesive sheet in the present aspect. Foaming adhesive sheet 10 in FIG. 6 includes first adhesive layer 1, substrate 2, second adhesive layer 3, and pressure-sensitive adhesive layer 6, in this order. The first adhesive layer 1 and the second adhesive layer 3 contain a curable adhesive agent and a foaming agent, and the pressure-sensitive adhesive layer 6 contains a pressure-sensitive adhesive agent or a curable adhesive agent. Also, the tack of the first adhesive layer 1 and the tack of the pressure-sensitive adhesive layer 6 are respectively in the specified range, and the loop stiffness of the foaming adhesive sheet 10 is in the specified range.

In the present aspect, the tack of the pressure-sensitive adhesive layer is in the specified range, and thus the pressure-sensitive adhesive layer may have excellent adhesion to a member. In specific, in a case of adhering and fixing the other member in the hole, the groove or the like of one member, when the pressure-sensitive adhesive layer surface of the foaming adhesive sheet is adhered to the other member, and the other member to which the foaming adhesive sheet is adhered is inserted to the hole, the groove or the like of one member, and then one member and the other member are adhered by foaming and curing the foaming adhesive sheet, if the tack of the pressure-sensitive adhesive layer is in the specified range, the pressure-sensitive adhesive layer surface of the foaming adhesive sheet can be adhered to the other member utilizing the tack of the pressure-sensitive adhesive layer, and the close adhesion of the pressure-sensitive adhesive layer to the member can be improved. In this manner, when the other member to which the foaming adhesive sheet is adhered is inserted to the hole, the groove or the like of one member, a peel off and a positional displacement of the foaming adhesive sheet can be inhibited.

Also, in the present aspect, the tack of the first adhesive layer is the specified value or less, and thus the first adhesive layer can be substantially non-pressure-sensitive adhesive (tack free), and the first adhesive layer may have excellent slippage. For this reason, for example, in the above described adhering and fixing method, when the other member to which the foaming adhesive sheet is adhered is inserted to the hole, the groove or the like of one member, the other member to which the forming adhesive sheet is adhered can be smoothly inserted, and the inserting property can be improved. Thereby, the peel-off and the positional displacement of the foaming adhesive sheet can be inhibited. Also, in the above described adhering and fixing method, when positional matching is performed by moving the other member with respect to one member, the other member can be smoothly moved with respect to one member in a state the other member is inserted to the hole, the groove or the like of one member, and the positional matching can be easily done.

Further, in the present aspect, the tack of the first adhesive layer is the specified value or less, and the first adhesive layer is substantially non-pressure-sensitive adhesive (tack-free), and thus the first adhesive layer may have excellent slippage as well as excellent blocking resistance. Thus, the handling of the foaming adhesive sheet can also be improved.

Also, in the present aspect, as described above, since the close adhesion of the pressure-sensitive adhesive layer with a member is excellent, and the slippage of the first adhesive layer is excellent, peel-off and the positional displacement of the foaming adhesive sheet can be inhibited. Thus, the degrade in adhesion of the foaming adhesive sheet after foamed and cured due to the peel-off and the positional displacement of the foaming adhesive sheet can be inhibited, and also the unevenness of the adhesive strength of the foaming adhesive sheet after foamed and cured due to the peel-off and the positional displacement of the foaming adhesive sheet can be decreased. Therefore, usage of the foaming adhesive sheet in the present aspect can realize the adhesion with high adhesive strength, high reliability, and high quality.

Also, in the foaming adhesive sheet of the present aspect, the loop stiffness is the specified value or more, and thus the stiffness can be stronger. For this reason, falling of the foaming adhesive sheet by its own weight at the time of conveying the foaming adhesive sheet can be inhibited. Thus, for example, when the foaming adhesive sheet is sucked and conveyed, and adhered to the other member, problems such that the foaming adhesive sheet may be folded, kinked, bent, and occurrence of biting of bubbles can be inhibited. Therefore, the adhering property can be improved. Furthermore, since generation of a protrusion in the foaming adhesive sheet due to these defects can be inhibited, when the other member to which the foaming adhesive sheet is adhered is inserted to the hole, the groove or the like of one member, the foaming adhesive sheet is less likely scratched. Thereby, the peel-off of the foaming adhesive sheet during the insertion can be inhibited. Therefore, from these points also, usage of the foaming adhesive sheet in the present aspect can realize the adhesion with high adhesive strength, high reliability, and high quality.

Each configuration of the foaming adhesive sheet in the present aspect will be hereinafter explained.

### 1. Characteristics

The tack of the first adhesive layer in the present aspect is the same as the tack of the first adhesive layer in the first aspect.

In the present aspect, the tack of the pressure-sensitive adhesive layer is 10 gf or more, may be 30 gf or more, and may be 50 gf or more. If the tack of the pressure-sensitive adhesive layer is too low, for example, in the above described adhering and fixing method, there is a possibility that the adhesion of the pressure-sensitive adhesive layer and the other member may be degraded at the time of adhering the pressure-sensitive adhesive layer surface of the foaming adhesive sheet to the other member utilizing the tack of the pressure-sensitive adhesive layer, and there is a possibility that, when the other member to which the foaming adhesive sheet is adhered is inserted to the hole, the groove or the like of one member, the adhesion of the first adhesive layer and the pressure-sensitive adhesive layer after foamed and cured may be degraded and the adhesion strength may be uneven due to the peel off of the foaming adhesive sheet and the positional displacement of the foaming adhesive sheet caused by the adhesion defect of the pressure-sensitive adhesive layer and the other member. Also, the tack of the pressure-sensitive adhesive layer is, for example, 500 gf or less, may be 400 gf or less, and may be 300 gf or less.

In the present aspect, there are no particular limitations on the tack of the second adhesive layer. Above all, the tack of the second adhesive layer is preferably less than 10 gf. In this case, the tack of the second adhesive layer may be the same as the tack of the first adhesive layer.

The measurement method for the tack of the first adhesive layer, the second adhesive layer, and the pressure-sensitive adhesive layer is in the same contents as those described in the first aspect.

Also, the controlling method for the tack of the first adhesive layer and the second adhesive layer is in the same contents as those described in the first aspect.

In the present aspect, the static friction coefficient of the surface of the first adhesive layer opposing to the second adhesive layer, and the arithmetic average roughness (Ra) of the surface of the first adhesive layer opposing to the second adhesive layer are in the same contents as those described in the first aspect.

The loop stiffness of the foaming adhesive sheet of the present aspect is the same as the loop stiffness of the foaming adhesive sheet of the first aspect. In the present aspect, when a test piece of the foaming adhesive sheet is placed on the loop stiffness measurement device, the test piece of the foaming adhesive sheet is disposed so that the inner surface is the first adhesive layer surface, and the outer surface is the pressure-sensitive adhesive layer surface.

The adhesion and the electrical insulation of the foaming adhesive sheet of the present aspect after foamed and cured are in the same contents as those described in the first aspect.

### 2. First adhesive layer

The first adhesive layer in the present aspect contains a curable adhesive agent and a foaming agent. The materials and the constitution of the first adhesive layer may be the same as those of the first adhesive layer in the first aspect.

### 3. Second adhesive layer

The second adhesive layer in the present aspect contains a curable adhesive agent and a foaming agent. The materials and the constitution of the second adhesive layer may be the same as those of the first adhesive layer in the first aspect, and may be the same as those of the second adhesive layer in the first aspect.

### 4. Pressure-sensitive adhesive layer

The pressure-sensitive adhesive layer in the present aspect is disposed on a surface of the second adhesive layer that is opposite side to the substrate, and contains a pressure-sensitive adhesive agent or a curable adhesive agent. Also, the pressure-sensitive adhesive layer substantially does not contain a foaming agent.

As the pressure-sensitive adhesive agent included in the pressure-sensitive adhesive layer in the present aspect, a general pressure-sensitive adhesive agent may be used.

Also, the curable adhesive agent included in the pressure-sensitive adhesive layer in the present aspect may be the same as the curable adhesive agent used for the second adhesive layer.

The thickness of the pressure-sensitive adhesive layer is not particularly limited, and is, for example, 2 µm or more and 100 µm or less, may be 3 µm or more and 75 µm or less, and may be 5 µm or more and 50 µm or less. When the pressure-sensitive adhesive layer is too thin, there is a possibility that the pressure-sensitive adhesion may not be sufficiently obtained.

The pressure-sensitive adhesive layer may be a continuous layer, and may be a discontinuous layer. Example of the discontinuous layer may include patterns such as stripes and dots. Also, the surface of the pressure-sensitive adhesive layer may have a concavo-convex shape such as emboss.

The method for forming the pressures-sensitive adhesive layer may be the same as the method for forming the first adhesive layer and the second adhesive layer.

### 5. Substrate

The substrate in the present aspect is disposed between the first adhesive layer and the second adhesive layer. The substrate is the same as the substrate in the first aspect.

### 6. Other constitution

### (1) First intermediate layer and second intermediate layer

The foaming adhesive sheet in the present aspect may include a first intermediate layer between the substrate and the first adhesive layer. Also, the foaming adhesive sheet in the present aspect may include a second intermediate layer between the substrate and the second adhesive layer. The first intermediate layer and the second intermediate layer are the same as the first intermediate layer and the second intermediate layer in the first aspect.

For example, in the foaming adhesive sheet 10 shown in FIG. 7, first intermediate layer 4 is disposed between the substrate 2 and the first adhesive layer 1, and second intermediate layer 5 is disposed between the substrate 2 and the second adhesive layer 3. Incidentally, in FIG. 7, although the foaming adhesive sheet 10 includes both of the first intermediate layer 4 and the second intermediate layer 5, only either one may be included.

### (2) First separator and second separator

The foaming adhesive sheet in the present aspect may include a separator on a surface of the first adhesive layer that is opposite side to the second adhesive layer. Also, the foaming adhesive sheet in the present aspect may include a second separator on a surface of the pressure-sensitive adhesive layer that is opposite side to the second adhesive layer. The first separator and the second separator may be the same as the first separator and the second separator in the first aspect.

### 7. Foaming adhesive sheet

The thickness and the applications of the foaming adhesive sheet in the present aspect are the same as those of the first aspect.

The method for producing the foaming adhesive sheet in the present aspect is not particularly limited, and appropriately selected depending on the layer structure of the foaming adhesive sheet.

### B. Method for producing a product

The method for producing a product in the present embodiment includes: a placing step of placing the foaming adhesive sheet described above between a first member and a second member; and an adhering step of adhering the first member and the second member by foaming and curing the foaming adhesive sheet.

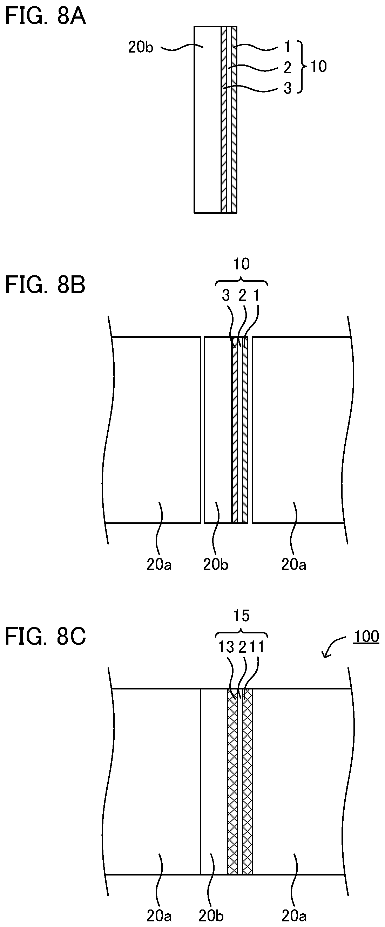

FIGS. 8A to 8C are process drawings illustrating an example of a method for producing a product in the present embodiment. First, as shown in FIG. 8A, second adhesive layer 3 surface of foaming adhesive sheet 10 is adhered to second member 20b. Next, as shown in FIG. 8B, the second member 20b on which the foaming adhesive sheet 10 is disposed is inserted to a hole of first member 20a. Then, as shown in FIG. 8C, by heating, for example, the first adhesive layer 1 and the second adhesive layer 3 of the foaming adhesive sheet 10 are foamed and cured. The first member 20a and the second member 20b are adhered (joined) by adhesive sheet 13 including first adhesive layer 11 and second adhesive layer 12 after foamed and cured. Thereby, product 100 in which the adhesive sheet 13 is disposed between the first member 20a and the second member 20b is obtained.

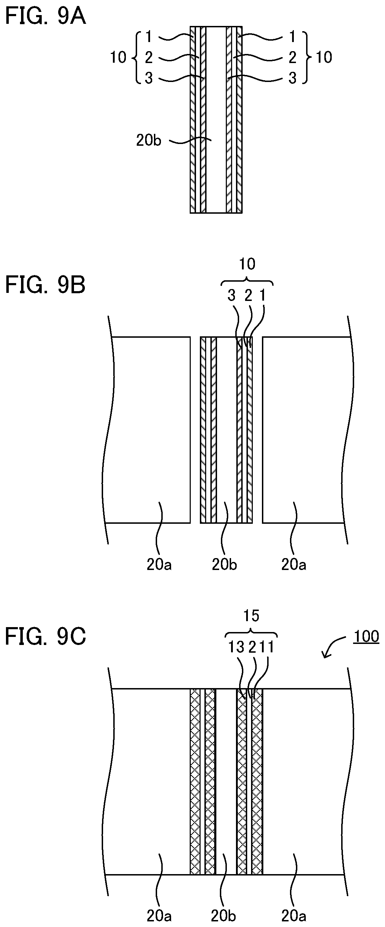

FIGS. 9A to 9C are process drawings illustrating another example of the method for producing a product in the present embodiment. In FIG. 9A, the foaming adhesive sheet is adhered to the both sides of the second member 20b. Note that the disposing step and the adhering step are the same as FIGS. 8A to 8C.

The method for producing a product in the present embodiment will be hereinafter explained.

### 1. Foaming adhesive sheet

In the method for producing a product in the present embodiment, as a foaming adhesive sheet, the foaming adhesive sheet described above is used.

When the foaming adhesive sheet includes a first separator and a second separator, the first separator and the second separator are peeled off from the foaming adhesive sheet at the time of disposing the foaming adhesive sheet between the first member and the second member.

Incidentally, the details of the foaming adhesive sheet are described in the section "A. Foaming adhesive sheet" above; thus, the description herein is omitted.

### 2. Disposing step

In the disposing step in the present embodiment, a method for disposing the foaming adhesive sheet between the first member and the second member is appropriately selected according to the type of the first member and the second member. For example, when the first member includes a hole or a groove, and the first member and the second member are adhered and fixed by disposing thereof in the hole or the groove of the first member, examples of the method may include a method wherein the second adhesive layer surface or the pressure-sensitive adhesive layer surface of the foaming adhesive sheet is adhered to the second member utilizing the tack of the second adhesive layer or the pressure-sensitive adhesive layer of the foaming adhesive sheet, and then the second member to which the foaming adhesive sheet is adhered is disposed in the hole or the groove of the first member; and a method wherein the foaming adhesive sheet is disposed in the hole or the groove of the first member, the second adhesive layer surface or the pressure-sensitive adhesive layer surface of the foaming adhesive sheet is adhered to the hole or the groove of the first member utilizing the tack of the second adhesive layer or the pressure-sensitive adhesive layer of the foaming adhesive sheet, and then the second member is disposed in the hole or the groove of the first member to which the foaming adhesive sheet is adhered.

### 3. Adhering step

In the adhering step in the present embodiment, examples of a method for foaming and curing the foaming adhesive sheet may include a heating and a light irradiation. Among them, the foaming adhesive sheet is preferably foamed and cured by heating. The method by heating may be applied even when the first member and the second member are not transparent, such as a metal member.

The heating conditions are appropriately set according to, for example, the type of the curable adhesive agent and foaming agent included in the first adhesive layer and the second adhesive layer, and the type of the substrate. The heating temperature may be, for example, 130°C or more, and 200°C or less. Also, the heating time may be, for example, 3 minutes or more and 3 hours or less.

### II. Second embodiment

Next, the foaming adhesive sheet, and the method for producing a product using the same in the second embodiment of the present disclosure will be hereinafter described in details.

### A. Foaming adhesive sheet

The foaming adhesive sheet in the present embodiment is a foaming adhesive sheet including a first adhesive layer, a substrate, and a second adhesive layer, in this order, wherein a composition of the first adhesive layer is different from a composition of the second adhesive layer; the first adhesive layer and the second adhesive layer contain a thermosetting adhesive agent; at least one of the first adhesive layer and the second adhesive layer further contains a foaming agent, and a curvature radius of a curl of the foaming adhesive sheet after placed still at a temperature of 60°C and a humidity of 10 %RH or less for 15 hours is 15 mm or more; and a loop stiffness is 45 mN/10 mm or more.

FIG. 1 is a schematic cross-sectional view exemplifying the foaming adhesive sheet in the present embodiment. Foaming adhesive sheet 10 in FIG. 1 includes first adhesive layer 1, substrate 2, and second adhesive layer 3, in this order. The first adhesive layer 1 and the second adhesive layer 3 contain a thermosetting adhesive agent, and at least one of the first adhesive layer 1 and the second adhesive layer 3 further contains a foaming agent. Also, in the foaming adhesive sheet 10, the curvature radius of a curl after placed still at the specified temperature with the specified humidity for the specified time is in the specified range, and the loop stiffness is in the specified range.

Here, when the other member is adhered and fixed in a hole, a groove or the like of one member, as described above, the space between the two members tends to be narrow. For this reason, in the foaming adhesive sheet to be used, overall thickness needs to be thin. However, in the case the foaming adhesive sheet includes the first adhesive layer, the substrate and the second adhesive layer in this order, when the compositions of the first adhesive layer and the second adhesive layer are different and the thickness of the foaming adhesive sheet is thin, curling may easily occur. Also, when the thickness of the foaming adhesive sheet is thin, the foaming adhesive sheet easily falls by its own weight at the time of conveying the foaming adhesive sheet.

In contrast, in the present embodiment, the curvature radius of the curl after placed still at the specified temperature with the specified humidity for the specified time is in the specified range, and thus the foaming adhesive sheet is prevented from curling even when the thickness of the foaming adhesive sheet is thin in the case the compositions of the first adhesive layer and the second adhesive layer are different. For this reason, for example, the inserting property can be improved on the occasion of inserting the foaming adhesive sheet between the two members, on the occasion of inserting the other member to the hole, the groove or the like of one member on which the foaming adhesive sheet is disposed after disposing the foaming adhesive sheet in the hole, the groove or the like of one member, and on the occasion of inserting the other member, on which the foaming adhesive sheet is disposed, to the hole, the groove or the like of one member after disposing the foaming adhesive sheet on the other member. Also, for example, when the tack of the first adhesive layer is lower than the tack of the second adhesive layer, in the case the second adhesive layer surface of the foaming adhesive sheet is adhered to a member utilizing the tack of the second adhesive layer, lifting and peel-off of the foaming adhesive sheet to the member can be inhibited. Also, in the above case, occurrence of problems such that the foaming adhesive sheet is folded, kinked, bent, and biting of bubbles are generated, may be inhibited. Thus, the adhesion defect after foamed and cured may be inhibited.

Also, the inventors of the present disclosure have focused on the rigidity (stiffness) of the foaming adhesive sheet. Since the rigidity tends to increase when the thickness of the foaming adhesive sheet is thick, it is considered that the curing can be inhibited and the falling by its own weight can be inhibited. However, when the space between the two members is narrow, and when the thickness of the foaming adhesive sheet is made thick, the inserting property is degraded. In this manner, since the thickness of the foaming adhesive sheet needs to be thin to begin with, it is not suitable to increase the thickness of the foaming adhesive sheet. Also, since the rigidity tends to increase when the thickness of the substrate is thick, it is considered that the curing can be inhibited and the falling by its own weight can be inhibited. However, when the thickness of the substrate is increased, the thickness of the foaming adhesive sheet increases, and thus the inserting property is degraded similarly to the above case. Also, when the thickness of the substrate is relatively increased while keeping the thickness of the foaming adhesive sheet thin, the thicknesses of the first adhesive layer and the second adhesive layer will be relatively thin, and thus there is a risk that the adhering property and foaming property of the first adhesive layer and the second adhesive layer may be degraded.

Then, the inventors of the present disclosure have repeatedly studied and found out that the foaming adhesive sheet can be prevented from falling by its own weight when the loop stiffness of the foaming adhesive sheet is set in the specified range.

Note that the loop stiffness is a parameter showing a strength of stiffness of a sheet or a film. The larger the value of the loop stiffness, the stronger the stiffness of the sheet or the film. The loop stiffness is used as a parameter showing the strength of the stiffness of the sheet or the film used for wrapping materials for example, but it is not generally used in the field of adhesive sheet.

In the foaming adhesive sheet in the present embodiment, the loop stiffness is the specified value or more, and thus the stiffness can be improved. For this reason, falling of the foaming adhesive sheet by its own weight at the time of conveying the foaming adhesive sheet can be inhibited. Thus, for example, when the foaming adhesive sheet is sucked and conveyed, and adhered to a member, at the time of adhering, occurrence of problems such that the foaming adhesive sheet is folded, kinked, bent, and biting of bubbles are generated, may be inhibited. Therefore, the adhering property can be improved. Furthermore, since generation of a protrusion in the foaming adhesive sheet due to these defects can be inhibited, when the other member to which the foaming adhesive sheet is adhered is inserted to the hole, the groove or the like of one member, the foaming adhesive sheet is less likely scratched. Thereby, the peel-off of the foaming adhesive sheet during the insertion can be inhibited.

Therefore, usage of the foaming adhesive sheet in the present embodiment can realize the adhesion with high adhesive strength, high reliability, and high quality.

Here, "pressure-sensitive adhesion" is a concept included in "adhesion". The pressure-sensitive adhesion is used as a meaning of a temporary adhesion phenomenon, whereas the adhesion is distinguished in some cases from a viewpoint that it is used as a meaning of a practically permanent adhesion phenomenon (Physical and Chemical Science Dictionary Fifth Edition, published by Iwanami Shoten). "Pressure-sensitive adhesion" and "pressure-sensitive adhesive force" indicate a property to adhere by pressure sensing and the adhesive force at that time.

It should be noted that, in the present specification, "the pressure-sensitive adhesion of the adhesive layer" and "the pressure-sensitive adhesive force of the adhesive layer" refer to the pressure-sensitive adhesion and the pressure-sensitive adhesive force of the adhesive layer before cured, unless otherwise described. Also, in the present specification, "the adhesion of the adhesive layer" and "the adhesive force of the adhesive layer" refer to the adhesion and the adhesive force of the adhesive layer after cured, unless otherwise described.

Each constitution of the foaming adhesive sheet in the present embodiment will be hereinafter described.

### 1. Characteristics

In the foaming adhesive sheet in the present embodiment, the curvature radius of a curl after placed still at a temperature of 60°C and a humidity of 10 %RH or less for 15 hours is 15 mm or more, preferably 20 mm or more, and more preferably 25 mm or more. When the curvature radius is in the above range, the curing can be inhibited. For this reason, for example, the inserting property can be improved on the occasion of inserting the foaming adhesive sheet between the two members, on the occasion of inserting the other member to the hole, the groove or the like of one member on which the foaming adhesive sheet is disposed after disposing the foaming adhesive sheet in the hole, the groove or the like of one member, and on the occasion of inserting the other member, on which the foaming adhesive sheet is disposed, to the hole, the groove or the like of one member after disposing the foaming adhesive sheet on the other member. Also, for example, when the tack of the first adhesive layer is lower than the tack of the second adhesive layer, in the case the second adhesive layer surface of the foaming adhesive sheet is adhered to a member utilizing the tack of the second adhesive layer, lifting and peel-off of the foaming adhesive sheet to the member can be inhibited. Also, in the above case, occurrence of problems such that the foaming adhesive sheet is folded, kinked, bent, and biting of bubbles are generated, may be inhibited. Thus, the adhesion defect after foamed and cured may be inhibited. Meanwhile, the larger the curvature radius, the smaller the curing, and thus there are no particular limitations on the upper limit of the curvature radius.

When the foaming adhesive sheet is used for, for example, adhering a coil and a stator in a motor, or adhering a rotor and a permanent magnet in an embedded magnet type motor, the length of the foaming adhesive sheet is often about 100 mm. For this reason, in the present embodiment, when the length of a test piece of the foaming adhesive sheet is made 100 mm, it is presumed that the practical use is possible when the test piece does not make the circuit of the length direction, and thereby the curvature radius is made 15 mm or more.

Also, in the thermosetting adhesive agent, contraction of curing and thermal contraction occur in the process of curing. A curl is generated by the contractions. In general, the thermosetting adhesive agent is considered to start contracting at about 60°C. For this reason, since the main contraction factor of the thermosetting adhesive agent is a heat, in order to eliminate the influence from humidity, the conditions in the present embodiment are made 60°C for 15 hours, and the humidity is set to 10 %RH or less.

Here, the curvature radius of the curl of the foaming adhesive sheet may be measured in the following manners.

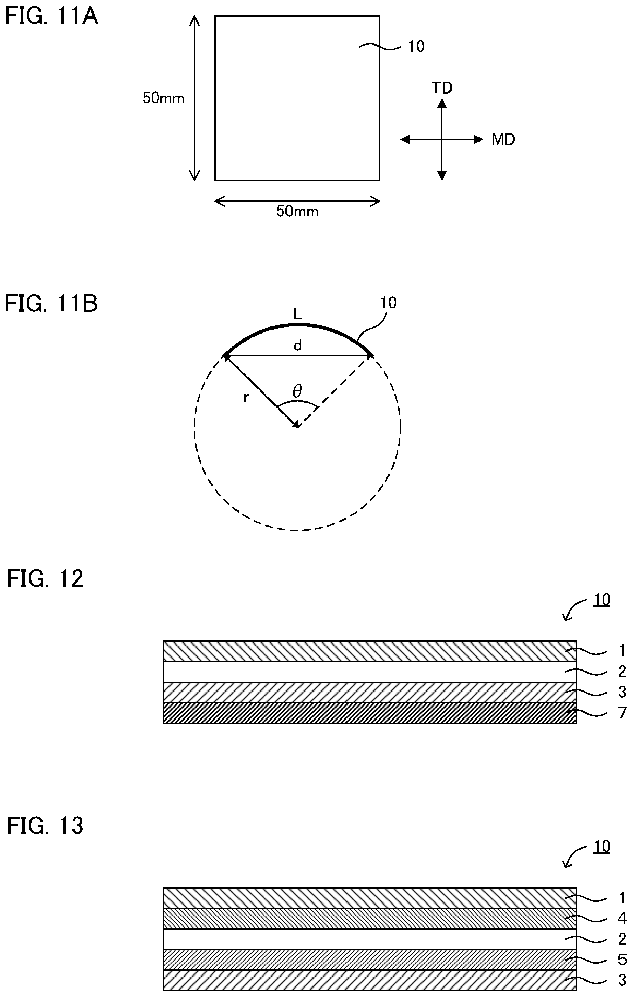

First, the foaming adhesive sheet is cut in a square of 50 mm * 50 mm, and a test piece for the curl measurement is produced. On this occasion, as shown in FIG. 11A, the side directions of the square are regarded as MD direction and TD direction of the foaming adhesive sheet. Note that the MD direction of the foaming adhesive sheet refers to a longer direction of the foaming adhesive sheet when the foaming adhesive sheet is produced in a long shape. Also, the TD direction of the foaming adhesive sheet refers to the direction orthogonal to the MD direction. The MD direction and the TD direction of the foaming adhesive sheet can be specified by the following method. When the foaming adhesive sheet is in a long shape, the longer direction of the foaming adhesive sheet is the MD direction. Also, in the case where the foaming adhesive sheet is in a sheet shape, when the substrate, the first adhesive layer and the second adhesive layer are known to have isotropy in advance, the tensile strength and elongation of the substrate, the first adhesive layer and the second adhesive layer are measured, and the MD direction and the TD direction of the foaming adhesive sheet can be specified from the tensile strength and the elongation. Also, in the case where the foaming adhesive sheet is in a sheet shape, when the isotropy of the substrate, and the isotropy of the first adhesive layer and the second adhesive layer are unclear, the foaming adhesive sheet may be cut into a circle shape having a diameter of about 50 mm to produce a test piece for direction measurement, the test piece for the direction measurement is placed still at a temperature of 60°C, and the direction to which the test piece for the direction measurement curls can be determined as the MD direction of the foaming adhesive sheet.

Next, the test piece for the curl measurement is placed still at a temperature of 60°C and a humidity of 10 %RH or less for 15 hours. On this occasion, when at least one of the first adhesive layer and the second adhesive layer includes pressure-sensitive adhesion, the test piece for the curl measurement is in a state the adhesive layer surface including the pressure-sensitive adhesion does not contact the surroundings. Above all, the test piece for the curl measurement is preferably in a state the own weight is not applied to the curling direction. Next, as shown in FIG. 11B, chord length d of a curl of the test piece for the curl measurement is measured. Then, curvature radius r is calculated using the below equations. $L = r * θ$ $d = 2 * r * sin \left(θ/2\right)$ (In the equations, L represents the arc length, d represents the chord length, r represents the curvature radius, and θ represents a central angle.)
Note that the chord length d is measured respectively in cases where the direction of the chord length d is in the MD direction, in the TD direction, and in 45° direction to the MD direction, and thereby the curvature radius r is calculated. Then, the smallest value among curvature radius r in these cases is adopted. When the direction of the chord length d is set to the MD direction or the TD direction, the arc length L is 50 mm. Also, when the direction of the chord length d is set to 45° direction to the MD direction, the arc length L is L = 50 * √2 = 70.7 mm.

In the present embodiment, the curvature radius of the curl of the foaming adhesive sheet may be controlled by, for example, adjusting the thickness and the hardness of each layer. For example, when the thickness of the substrate is thick, the curvature radius tends to increase. Also, for example, when the hardness of the substrate is high, the curvature radius tends to increase. Also, for example, when the hardness of the first adhesive layer is higher than the hardness of the second adhesive layer, as the thickness of the second adhesive layer increases, the curvature radius tends to increase. Also, in the case the hardness of the first adhesive layer and the second adhesive layer is about the same, when the thickness of the first adhesive layer and the second adhesive layer is made about the same, the curvature radius tends to increase.

Note that the hardness of the first adhesive layer and the second adhesive layer can be controlled by adjusting the compositions of the first adhesive layer and the second adhesive layer. Also, in the first adhesive layer and the second adhesive layer, when the tack is low, the hardness tends to increase, and when the tack is high, the hardness tends to decrease. Also, in the first adhesive layer and the second adhesive layer, when the storage elastic modulus is high, the hardness tends to increase, and when the storage elastic modulus is low, the hardness tends to decrease. Also, in the first adhesive layer and the second adhesive layer, when the pencil hardness is high, the hardness tends to increase, and when the pencil hardness is low, the hardness tends to decrease. Also, in the first adhesive layer and the second adhesive layer, when the static friction coefficient is low, the hardness tends to increase, and when the static friction coefficient is high, the hardness tends to decrease.

In the foaming adhesive sheet in the present embodiment, the loop stiffness is 45 mN/10 mm or more, preferably 75 mN/ 10 mm or more, and more preferably 100 mN/10 mm or more. The loop stiffness is, as described above, a parameter showing the strength of the stiffness of a film or a sheet. When the loop stiffness of the foaming adhesive sheet is in the above range, the stiffness of the foaming adhesive sheet can be improved. Thus, the inserting property can be improved at the time of disposing the foaming adhesive sheet between two members. Also, for example, when the foaming adhesive sheet is sucked and conveyed, and adhered to a member, the foaming adhesive sheet is prevented from falling by its own weight, and the adhering property can be improved. Meanwhile, there are no particular limitations on the upper limit of the loop stiffness.

The method for measuring the loop stiffness can be the same as the descriptions in the section "I. First embodiment A. Foaming adhesive sheet α) First aspect 1. Characteristics" above; thus, the descriptions herein are omitted.

In the measurement of the loop stiffness of the foaming adhesive sheet, when the test piece of the foaming adhesive sheet 10 is disposed on the loop stiffness measurement device 30, the measurement is performed in both cases where the test piece is disposed so that the first adhesive layer surface is the inner surface 40x and the second adhesive layer surface is the outer surface 40y, and where the test piece is disposed so that the second adhesive layer surface is the inner surface 40x and the first adhesive layer surface is the outer surface 40y. Then, the larger value among these cases is adopted as the loop stiffness.

Also, on the occasion of measuring the loop stiffness of the foaming adhesive sheet, when the foaming adhesive sheet includes a separator as described later, the loop stiffness of the foaming adhesive sheet is to be measured after peeling off the separator. This is because the separator is peeled off from the foaming adhesive sheet when the foaming adhesive sheet is disposed between two members.

In the present embodiment, the loop stiffness of the foaming adhesive sheet may be controlled by, for example, adjusting the thickness and hardness of each layer. For example, when the thickness of the substrate is thick, the loop stiffness tends to increase. Also, for example, when the hardness of the substrate is high, the loop stiffness tends to increase. Also, for example, when the hardness of the first adhesive layer is higher than the hardness of the second adhesive layer, the thicker the thickness of the first adhesive layer, the larger the loop stiffness tends to be. Also, when the hardness of the first adhesive layer and the second adhesive layer is high, the loop stiffness tends to increase.

Note that the controlling method for the hardness of the first adhesive layer and the second adhesive layer is as described above.

It is preferable that the foaming adhesive sheet in the present embodiment has high adhesion after foamed and cured. Also, it is preferable that the foaming adhesive sheet in the present embodiment has high electrical insulation after foamed and cured. Descriptions about these points are the same as the descriptions in the section "I. First embodiment A. Foaming adhesive sheet α) First aspect 1. Characteristics" above; thus, the descriptions herein are omitted.

### 2. First adhesive layer and second adhesive layer

In the present embodiment, the first adhesive layer and the second adhesive layer contain a thermosetting adhesive agent. Also, at least one of the first adhesive layer and the second adhesive layer further contains a foaming agent. Also, a composition of the first adhesive layer is different from a composition of the second adhesive layer.

Here, the composition of the first adhesive layer is different from the composition of the second adhesive layer means that at least one of, the kind and the content of the main agent configuring the thermosetting adhesive agent, the kind and the content of the curing agent configuring the thermosetting adhesive agent, the kind and the content of the resin component other than the main agent configuring the thermosetting adhesive agent, the kind and the content of the foaming agent, and the kind and the content of the additives, is different.

Above all, it is preferable that the first adhesive layer and the second adhesive layer contain the thermosetting adhesive agent and the foaming agent, and the composition of the first adhesive layer is different from the composition of the second adhesive layer.

### (1) Characteristics of first adhesive layer and second adhesive layer

### (a) Hardness

In the present embodiment, it is preferable that the hardness differs in the first adhesive layer and the second adhesive layer. When the hardness differs in the first adhesive layer and the second adhesive layer, a curl is easily generated in the foaming adhesive sheet. Thus, the present embodiment is effective when the hardness differs in the first adhesive layer and the second adhesive layer.

As the hardness of the first adhesive layer and the second adhesive layer, there are no particular limitations as long as the hardness is the parameter that can be measured for the first adhesive layer and the second adhesive layer. Also, as an index of the hardness of the first adhesive layer and second adhesive layer, for example, the tack of the first adhesive layer and the second adhesive layer, and a thermophysical property such as a glass transition temperature of the first adhesive layer and the second adhesive layer, can be used.

### (b) Tack

In the present embodiment, it is preferable that the tack differs in the first adhesive layer and the second adhesive layer. Here, in general, in the adhesive layer, the larger the pressure-sensitive adhesion (tack), the softer it tends to be, and the smaller the pressure-sensitive adhesion (tack), the harder it tends to be. For this reason, when the tack differs in the first adhesive layer and the second adhesive layer, a curl is easily generated in the foaming adhesive sheet. Thus, the present embodiment is effective when the tack differs in the first adhesive layer and the second adhesive layer.

Also, in the case the tack differs in the first adhesive layer and the second adhesive layer, when the tack of the first adhesive layer is lower than the tack of the second adhesive layer, it is preferable that the tack of the first adhesive layer is, for example, 0 gf or more and less than 10 gf, and the tack of the second adhesive layer is, for example, 10 gf or more and 500 gf or less. In this case, the tack of the first adhesive layer is, for example, 5 gf or less, and may be 2 gf or less. Also, in this case, the tack of the second adhesive layer is, for example, 30 gf or more, and may be 50 gf or more. Also, the tack of the second adhesive layer may be, for example, 400 gf or less, and may be 300 gf or less.

In the above case, the tack differs in the first adhesive layer and the second adhesive layer, and thus a curl is easily generated in the foaming adhesive sheet. Therefore, the present embodiment is effective.

Also, in the above case, when the tack of the second adhesive layer is in the above range, the second adhesive layer may achieve excellent adhesion to a member. In specific, when the other member is adhered to a hole, a groove or the like of one member and fixed, in the case where the second adhesive layer surface of the foaming adhesive sheet is adhered to the other member, the other member to which the foaming adhesive sheet is adhered is inserted to the hole, the groove or the like of one member, and then the foaming adhesive sheet is foamed and cured to adhere one member and the other member, if the tack of the second adhesive layer is in the specified range, the second adhesive layer surface of the foaming adhesive sheet can be adhered to the other member utilizing the tack of the second adhesive layer, and thereby the close adhesion of the second adhesive layer to the member can be improved. In this manner, when the other member to which the foaming adhesive sheet is adhered is inserted to the hole, the groove or the like of one member, a peel off and a positional displacement of the foaming adhesive sheet can be inhibited.

Also, in the above case, when the tack of the second adhesive layer is in the above range, the second adhesive layer may achieve excellent reworkability. Thus, for example, in the above described adhering and fixing method, when the second adhesive layer surface of the foaming adhesive sheet is adhered to a member utilizing the tack of the second adhesive layer, the positional displacement of the foaming adhesive sheet can be corrected.

Also, in the above case, when the tack of the second adhesive layer is in the above range, for example, in a case the second adhesive layer is formed by a transferring method, lifting of the second adhesive layer can be inhibited. Further, as described later, when the separator is disposed on a surface of the second adhesive layer that is opposite side to the substrate, when the tack of the second adhesive layer is in the specified range, the separator can be easily peeled off, and the workability can be improved.

Also, in the above case, when the tack of the first adhesive layer is in the above range, the first adhesive layer can be substantially non-pressure-sensitive adhesive (tack free), and the first adhesive layer with excellent slippage can be achieved. For this reason, for example, in the above described adhering and fixing method, when the other member to which the foaming adhesive sheet is adhered is inserted to the hole, the groove or the like of one member, the other member to which the forming adhesive sheet is adhered can be smoothly inserted, and the inserting property can be improved. Thereby, the peel-off and the positional displacement of the foaming adhesive sheet can be inhibited. Also, in the above described adhering and fixing method, when positional matching is performed by moving the other member with respect to one member, the other member can be smoothly moved with respect to one member in a state the other member is inserted to the hole, the groove or the like of one member, and the positional matching can be easily done.

Further, in the above case, since the tack of the first adhesive layer is in the above range, the first adhesive layer is substantially non-pressure-sensitive adhesive (tack free), and thus the first adhesive layer with excellent slippage and also excellent blocking resistance can be achieved. Thus, the handling of the foaming adhesive sheet can also be improved.

Also, in the above case, as described above, the second adhesive layer has excellent adhesion to a member, and the first adhesive layer has excellent slippage, and thus the peel-off and the positional displacement of the foaming adhesive sheet can be inhibited. Thus, the degrade in adhesion of the foaming adhesive sheet after foamed and cured due to the peel-off and the positional displacement of the foaming adhesive sheet can be inhibited, and also the unevenness of the adhesive strength of the foaming adhesive sheet after foamed and cured due to the peel-off and the positional displacement of the foaming adhesive sheet can be decreased. Therefore, in the above case, usage of the foaming adhesive sheet in the present embodiment can realize the adhesion with high adhesive strength, high reliability, and high quality.

Meanwhile, the tack may be the same in the first adhesive layer and the second adhesive layer.

Also, the tack may be low respectively in the first adhesive layer and in the second adhesive layer. In this case, the tack of the first adhesive layer and the second adhesive layer is respectively, for example, preferably 0 gf or more and less than 10 gf. In this case, the tack of the first adhesive layer and the second adhesive layer may be respectively, for example, 5 gf or less, and may be 2 gf or less. When the tack of the first adhesive layer and the second adhesive layer is respectively in the above range, the first adhesive layer and the second adhesive layer can be substantially non-pressure-sensitive adhesive (tack free), and the first adhesive layer and the second adhesive layer with excellent slippage can be achieved. Thus, for example, when the foaming adhesive sheet is inserted between two members, on the occasion of inserting the other member to the hole, the groove or the like of one member to which the foaming adhesive sheet is disposed after disposing the foaming adhesive sheet in the hole, the groove or the like of one member, the inserting property can be improved at the time of inserting the other member to which the foaming adhesive sheet is disposed to the hole, the groove or the like of one member after disposing the foaming adhesive sheet on the other member. Thereby, the peel-off and the positional displacement of the foaming adhesive sheet can be inhibited. Also, when the positions of the members are matched by moving the other member relative to one member, the other member can be smoothly moved relative to one member in a state the foaming adhesive sheet is disposed between the two members, and the positional matching can be easily done. Also, when the tack of the first adhesive layer and the second adhesive layer is respectively in the above range, the first adhesive layer and the second adhesive layer may also have excellent blocking resistance. Thus, the handling of the foaming adhesive sheet can also be improved.

Here, the tack of the first adhesive layer and the second adhesive layer can be measured by a probe tack test. As a probe tack test machine, for example, a tacking test machine "TAC-II" from RHESCA CO., LTD can be used. The details of the method for measuring the tack of the first adhesive layer and the second adhesive layer will be described in the section of Examples later.

In the present embodiment, the tack of the first adhesive layer and the second adhesive layer can be controlled by, for example, adjusting the composition of each adhesive layer.

In specific, in the adhesive layer containing an epoxy resin and a curing agent, the pressure-sensitive adhesion of the adhesive layer can be degraded by using the epoxy resin which is solid at a normal temperature, and by using the curing agent which is solid at a normal temperature. Meanwhile, in the adhesive layer containing an epoxy resin and a curing agent, the pressure-sensitive adhesion of the adhesive layer tends to increase when the epoxy resin which is liquid at a normal temperature is used, and when the curing agent which is liquid at a normal temperature is used.

Also, in the adhesive layer containing the epoxy resin and the curing agent, the pressure-sensitive adhesion of the adhesive layer can be degraded by including the epoxy resin with high softening temperature, or by including the epoxy resin with large weight average molecular weight. Meanwhile, in the adhesive layer containing the epoxy resin and the curing agent, the pressure-sensitive adhesion of the adhesive layer tends to increase when the epoxy resin with low softening temperature is included, or when the epoxy resin with small weight average molecular weight is included. For example, the pressure-sensitive adhesion of the adhesive layer can be degraded by including a plural kinds of epoxy resins with different softening temperature in the adhesive layer, that is when the adhesive layer contains one epoxy resin, and the other epoxy resin of which softening temperature is 25°C or more and is higher in 10°C or more than the softening temperature of the one epoxy resin. Also, for example, the pressure-sensitive adhesion of the adhesive layer can be degraded by including a plural of epoxy resins with different weight average molecular weights in the adhesive layer, that is when the adhesive layer contains one epoxy resin, and the other epoxy resin of which weight average molecular weight is 370 or more and is larger in 300 or more than the weight average molecular weight of the one epoxy resin. In more specific, in the adhesive layer containing the epoxy resin and the curing agent, as described later, as the epoxy resin, a first epoxy resin with low softening temperature and low molecular weight, and a second epoxy resin with high softening temperature and high molecular weight may be included to degrade the pressure-sensitive adhesion of the adhesive layer.

Also, in the adhesive layer containing the epoxy resin and the curing agent, as described later, the pressure-sensitive adhesion of the adhesive layer can be degraded by including an acrylic resin soluble with the epoxy resin.

Also, when a tackifier is added to the adhesive layer, the pressure-sensitive adhesion of the adhesive layer tends to increase.

Note that when the curing agent that is liquid at a normal temperature is used, although the pressure-sensitive adhesion tends to increase, there is a possibility that the storage stability may be degraded, and thus it is preferable to adjust the tack of the adhesive layer by adjusting components other than the curing agent; for example, by adjusting characteristics and kinds of a component such as the epoxy resin.

### (c) Storage elastic modulus

In the present embodiment, it is preferable that the viscoelasticity differs in the first adhesive layer and in the second adhesive layer. Here, in general, in the adhesive layer, the higher the storage elastic modulus, the harder it tends to be, and the lower the storage elastic modulus, the softer it tends to be. For this reason, when the storage elastic modulus differs in the first adhesive layer and in the second adhesive layer, a curl is easily generated in the foaming adhesive sheet. Thus, the present embodiment is effective when the storage elastic modulus differs in the first adhesive layer and in the second adhesive layer.

In the case the storage elastic modulus differs in the first adhesive layer and in the second adhesive layer, when the storage elastic modulus at 25°C E'(25) of the first adhesive layer is higher than the storage elastic modulus E'(25) of the second adhesive layer, it is preferable that the storage elastic modulus E'(25) of the first adhesive layer is, for example, 1.0 * 10⁶ Pa or more and 1.0 * 10¹⁰ Pa or less, and the storage elastic modulus E'(25) of the second adhesive layer is, for example, 1.0 * 10³ Pa or more and less than 1.0 * 10⁶ Pa. In this case, the storage elastic modulus E'(25) of the first adhesive layer may be, for example, 1.0 * 10⁷ Pa or more. Also, in this case, the storage elastic modulus E'(25) of the second adhesive layer may be, for example, 1.0 * 10⁴ Pa or more and 1.0 * 10⁵ or less.

Also, in the above case, when the storage elastic modulus of the second adhesive layer is in the above range, the second adhesive layer may have excellent close adhesion to a member. In specific, in the case of adhering and fixing the other member to the hole, the groove or the like of one member and in the case the second adhesive layer surface of the foaming adhesive sheet is adhered to the other member, the other member to which the foaming adhesive sheet is adhered is inserted to the hole, the groove or the like of one member, and then one member and the other member are adhered by foaming and curing the foaming adhesive sheet, when the storage elastic modulus of the second adhesive layer is in the specified range, the close adhesion of the second adhesive layer can be improved by following the concave and convex of the member utilizing the softness of the second adhesive layer. In this manner, when the other member to which the foaming adhesive sheet is adhered is inserted to the hole, the groove or the like of one member, a peel off and a positional displacement of the foaming adhesive sheet can be inhibited.

Also, in the above case, when the storage elastic modulus of the second adhesive layer is in the above range, the second adhesive layer may achieve excellent reworkability. Thus, for example, in the above described adhering and fixing method, the positional displacement of the foaming adhesive sheet can be corrected at the time of adhering the second adhesive layer surface of the foaming adhesive sheet to a member utilizing the softness of the second adhesive layer.

Also, in the above case, when the storage elastic modulus of the second adhesive layer is in the above range, for example, when the second adhesive layer is formed by a transferring method, lifting and deformation of the second adhesive layer can be inhibited. Further, as described later, in the case the separator is disposed on a surface of the second adhesive layer that is opposite side to the substrate, when the storage elastic modulus of the second adhesive layer is in the specified range, the separator can be easily peeled off, and the workability can be improved.

Also, in the above case, when the storage elastic modulus of the first adhesive layer is in the above range, the first adhesive layer may have excellent slippage. For this reason, for example, in the above described adhering and fixing method, when the other member to which the foaming adhesive sheet is adhered is inserted to the hole, the groove or the like of one member, the other member to which the forming adhesive sheet is adhered can be smoothly inserted, and the inserting property can be improved. Thereby, the peel-off and the positional displacement of the foaming adhesive sheet can be inhibited. Also, in the above described adhering and fixing method, when positional matching is performed by moving the other member with respect to one member, the other member can be smoothly moved with respect to one member in a state the other member is inserted to the hole, the groove or the like of one member, and the positional matching can be easily done.

Further, in the above case, when the storage elastic modulus of the first adhesive layer is in the above range, the first adhesive layer may have excellent slippage, and may also have excellent blocking resistance. Thus, the handling of the foaming adhesive sheet can also be improved.

Meanwhile, the storage elastic modulus may be the same in the first adhesive layer and in the second adhesive layer.

Also, the storage elastic modulus of the first adhesive layer and the second adhesive layer may be respectively high. In this case, the storage elastic modulus at 25°C E'(25) of the first adhesive layer and the second adhesive layer is respectively, for example, preferably 1.0 * 10⁶ Pa or more and 1.0 * 10¹⁰ Pa or less. In this case, the storage elastic modulus E'(25) of the first adhesive layer and the second adhesive layer may be respectively, for example, 1.0 * 10⁷ Pa or more. When the storage elastic modulus E'(25) of the first adhesive layer and the second adhesive layer is respectively in the above range, the first adhesive layer and the second adhesive layer may have excellent slippage. Thus, the inserting property can be improved, for example, at the time of inserting the foaming adhesive sheet between two members, at the time of inserting the other member to the hole, the groove or the like of one member where the foaming adhesive sheet is disposed after disposing the foaming adhesive sheet in the hole, the groove or the like of one member, and at the time of inserting the other member to which the foaming adhesive sheet is disposed to the hole, the groove or the like of one member after disposing the foaming adhesive sheet on the other member. Thereby, the peel-off and the positional displacement of the foaming adhesive sheet can be inhibited. Also, when the positions of members are matched by moving the other member relative to one member, the other member can be smoothly moved relative to one member in a state the foaming adhesive sheet is disposed between the two members, and the positional matching can be easily done. Also, when the E'(25) of the first adhesive layer and the second adhesive layer is respectively in the above range, the first adhesive layer and the second adhesive layer may also have excellent blocking resistance. Thus, the handling of the foaming adhesive sheet can also be improved.

Here, the storage elastic modulus of the first adhesive layer and the second adhesive layer can be measured by, for example, a dynamic mechanical properties test in accordance with JIS K7244-4:1999. As the dynamic mechanical properties testing machine, for example, a dynamic viscoelasticity measurement device from TA Instruments can be used. Also, the measurement conditions may be, attachment mode: compression mode, frequency: 1 Hz, temperature: 25°C, and temperature rising speed: 10°C/min.

In the present embodiment, the storage elastic modulus at 25°C of the first adhesive layer and the second adhesive layer can be controlled by, for example, adjusting the composition of each adhesive layer.

In specific, in the adhesive layer containing an epoxy resin and a curing agent, the storage elastic modulus of the adhesive layer can be increased by using the epoxy resin which is solid at a normal temperature, and by using the curing agent which is solid at a normal temperature. Meanwhile, in the adhesive layer including an epoxy resin and a curing agent, the storage elastic modulus of the adhesive layer tends to decrease when an epoxy resin that is liquid at a normal temperature is used, and when a curing agent that is liquid at a normal temperature is used.

Also, in the adhesive layer containing the epoxy resin and the curing agent, the storage elastic modulus of the adhesive layer can be increased when the epoxy resin with high softening temperature is included, or when the epoxy resin with large weight average molecular weight is included. Meanwhile, in the adhesive layer containing the epoxy resin and the curing agent, the storage elastic modulus of the adhesive layer tends to decrease when the epoxy resin with low softening temperature is included, or when the epoxy resin with small weight average molecular weight is included.

For example, the storage elastic modulus of the adhesive layer can be increased when a plural kinds of epoxy resins with different softening temperature are included in the adhesive layer, that is when the adhesive layer contains one epoxy resin, and the other epoxy resin of which softening temperature is 25°C or more and is higher in 10°C or more than the softening temperature of the one epoxy resin. Also, for example, the storage elastic modulus of the adhesive layer can be increased when a plural of epoxy resins with different weight average molecular weights are included in the adhesive layer, that is when the adhesive layer contains one epoxy resin, and the other epoxy resin of which weight average molecular weight is 370 or more and is larger in 300 or more than the weight average molecular weight of the one epoxy resin. In more specific, in the adhesive layer containing the epoxy resin and the curing agent, as described later, as the epoxy resin, a first epoxy resin with low softening temperature and low molecular weight, and a second epoxy resin with high softening temperature and high molecular weight may be included to increase the storage elastic modulus of the adhesive layer.

Also, in the adhesive layer containing the epoxy resin and the curing agent, as described later, the storage elastic modulus of the adhesive layer can be increased by including an acrylic resin soluble with the epoxy resin.

It should be noted that, when the curing agent that is liquid at a normal temperature is used, although the storage elastic modulus tends to decrease, there is a possibility that the storage stability may be degraded, and thus it is preferable to adjust the storage elastic modulus of the adhesive layer by adjusting components other than the curing agent; for example, by adjusting characteristics and the kind of a component such as the epoxy resin.

### (d) Pencil hardness

In the present embodiment, it is preferable that the surface pencil hardness differs in the first adhesive layer and in the second adhesive layer. Here, in general, in the adhesive layer, the higher the surface pencil hardness, the harder it tends to be, and the lower the surface pencil hardness, the softer it tends to be. For this reason, when the surface pencil hardness differs in the first adhesive layer and in the second adhesive layer, a curl is easily generated in the foaming adhesive sheet. Thus, the present embodiment is effective when the surface pencil hardness differs in the first adhesive layer and in the second adhesive layer.

In the case the surface pencil hardness differs in the first adhesive layer and in the second adhesive layer, when the surface pencil hardness of the first adhesive layer is higher than the surface pencil hardness of the second adhesive layer, it is preferable that the surface pencil hardness of the first adhesive layer is, for example, HB or more, and the surface pencil hardness of the second adhesive layer is, for example, less than HB. In this case, the surface pencil hardness of the first adhesive layer may be, for example, HB or more and 2H or less, and may be F or more and 2H or less. Also, in this case, the surface pencil hardness of the second adhesive layer may be, for example, B or less. It should be noted that when the surface pencil hardness of the second adhesive layer cannot be measured because the tack of the second adhesive layer is high, the surface pencil hardness of the second adhesive layer is determined as 6B or less.

Also, in the above case, when the surface pencil hardness of the first adhesive layer is in the above range, the first adhesive layer may have excellent slippage, and may also have excellent blocking resistance. Meanwhile, when the surface pencil hardness of the first adhesive layer is too high, the close adhesion of the first adhesive layer with respect to the substrate may be degraded.

Also, in the above case, when the surface pencil hardness of the second adhesive layer is in the above range, the close adhesion of the second adhesive layer to a member can be improved.

Meanwhile, the surface pencil hardness may be the same in the first adhesive layer and in the second adhesive layer.

Also, the surface pencil hardness may be high in both the first adhesive layer and the second adhesive layer. In this case, the surface pencil hardness of the first adhesive layer and the second adhesive layer is respectively, for example, preferably HB or more, may be HB or more and 2H or less, and may be F or more and 2H or less. When the pencil hardness is in the above range, the slippage may be excellent and the blocking resistance may also be excellent. Meanwhile, when the pencil hardness is too high, the close adhesion of the adhesive layer with respect to the substrate may be deteriorated.

Here, the pencil hardness may be determined in accordance with JIS K5600. In specific, below method is exemplified. First, a foaming adhesive sheet in A4 size is prepared and set onto a glass plate. Next, in accordance with JIS K5600, the pencil hardness of a surface where the adhesive layer is disposed in the foaming adhesive sheet that is to be tested, is measured by a pencil hardness testing device (with a level). The measurement conditions are, angle from horizontal state of the pencil: 45°, load: 750 g, test speed: 1 mm/sec, test length: 20 mm, and temperature: 23°C. Then, the maximum pencil hardness with which the surface of the adhesive layer of the foaming adhesive layer is not scratched when visually confirmed, is determined as the pencil hardness. As the pencil hardness testing device, for example, KT-VF2378-12 from TQC can be used.

The surface pencil hardness of the first adhesive layer and the second adhesive layer in the present embodiment may be controlled by, for example, the compositions and the like of the first adhesive layer and the second adhesive layer. Specifically, the pencil hardness may be controlled by, for example, the average particle size or the content of the foaming agent included in the adhesive layer. More specifically, the pencil hardness may be increased by increasing the average particle size of the foaming agent. Also, the pencil hardness may be increased by increasing the content of the foaming agent. Also, for example, the pencil hardness may be increased by including an inorganic filler in the adhesive layer. Also, for example, the pencil hardness may be increased by including a component having a rigid structure in the adhesive layer. Specifically, in the adhesive layer including an epoxy resin and a curing agent, examples of the component having a rigid structure may include a phenol resin.

### (e) Static friction coefficient

In the present embodiment, it is preferable that the surface static friction coefficient differs in the first adhesive layer and in the second adhesive layer. Here, in general, in the adhesive layer, the lower the surface friction coefficient, the harder it tends to be, and the higher the surface friction coefficient, the softer it tends to be. For this reason, when the surface static friction coefficient differs in the first adhesive layer and in the second adhesive layer, a curl is easily generated in the foaming adhesive sheet. Thus, the present embodiment is effective when the surface static friction coefficient differs in the first adhesive layer and in the second adhesive layer.

In the case the surface static friction coefficient differs in the first adhesive layer and in the second adhesive layer, when the surface static friction coefficient of the first adhesive layer is lower than the surface static friction coefficient of the second adhesive layer, it is preferable that the surface static friction coefficient of the first adhesive layer is, for example, 0.34 or less, and the surface static friction coefficient of the second adhesive layer is, for example, over 0.34. In this case, the surface static friction coefficient of the first adhesive layer may be, for example, 0.30 or less, and may be 0.26 or less. Also, the surface static friction coefficient of the first adhesive layer may be, for example, 0.16 or more. Also, in this case, the surface static friction coefficient of the second adhesive layer may be, for example, 0.38 or more.

Also, in the above case, when the surface static friction coefficient of the first adhesive layer is in the above range, the slippage of the first adhesive layer can be improved.

Meanwhile, the surface static friction coefficient may be the same in the first adhesive layer and in the second adhesive layer.

Also, the surface static friction coefficient may be high in both the first adhesive layer and in the second adhesive layer. In this case, the surface static friction coefficient of the first adhesive layer and the second adhesive layer may be respectively, for example, 0.34 or less, may be 0.30 or less, and may be 0.26 or less. Also, the static friction coefficient may be, for example, 0.16 or more. When the static friction coefficient is in the above range, the slippage can be improved.

Here, the static friction coefficient may be determined in accordance with JIS K7125. In specific, below method is exemplified. First, the foaming adhesive sheet is cut into 80 mm * 200 mm. Subsequently, the foaming adhesive sheet is placed still on a metal plate in a square shape that is horizontally placed still, and a slipping piece (63 mm * 63 mm, 200 g weight, bottom surface: felt) is put on a surface where the adhesive layer of the foaming adhesive sheet to be measured is disposed, and a friction is measured in the conditions of the test speed of 100 mm/min, the test length of 50 mm, the load cell of 10 N, and the temperature of 23°C to calculate the static friction coefficient between the surface where the adhesive layer of the foaming adhesive sheet to be measured is disposed, and the metal plate. As a device, friction measurement machine FRICTION TESTER TR-2 from Toyo Seiki Seisaku-sho, Ltd. can be used. Also, as the metal plate, for example, a stainless plate of which material is SUS304 and surface roughness Ra is 0.05 µm can be used.

In the present embodiment, the static friction coefficient of the surfaces of the first adhesive layer and the second adhesive layer can be controlled by, for example, adjusting the compositions of the first adhesive layer and the second adhesive layer, or adjusting the pencil hardness of the surfaces of the first adhesive layer and the second adhesive layer, and the like. In specific, the static friction coefficient can be controlled by the average particle size or the content of the foaming agent included in the adhesive layer. In more specific, as the average particle size of the foaming agent increases, the static friction coefficient tends to decrease. Also, as the content of the foaming agent increases, the static friction coefficient tends to decrease. Also, as the pencil hardness of the surface of the adhesive layer increases, the static friction coefficient tends to decrease.

### (2) Materials of first adhesive layer and second adhesive layer

The first adhesive layer and the second adhesive layer in the present embodiment contain a thermosetting adhesive agent. Also, at least one of the first adhesive layer and the second adhesive layer further contains a foaming agent.

### (a) Thermosetting adhesive agent

As the thermosetting adhesive agent included in the first adhesive layer and the second adhesive layer in the present embodiment, a thermosetting adhesive agent commonly used for an adhesive layer of a foaming adhesive sheet may be used. The thermosetting adhesive agent may be applied even when a member is not transparent, such as in a case of a metal member.

Also, examples of the thermosetting adhesive agent may include an epoxy resin-based adhesive agent, an acrylic resin-based adhesive agent, a phenolic resin-based adhesive agent, an unsaturated polyester resin-based adhesive agent, an alkyd resin-based adhesive agent, a urethane resin-based adhesive agent, and a thermosetting polyimide resin-based adhesive agent.

Among those, the thermosetting adhesive agent is preferably the epoxy resin-based adhesive agent. That is, the thermosetting adhesive agent preferably includes an epoxy resin and a curing agent. In general, the epoxy resin-based adhesive agent is excellent in properties such as mechanical strength, heat resistance, insulating property and chemical resistance, curing shrinkage is small, so that it may be used in a wide variety of applications.

A case wherein the thermosetting adhesive agent is the epoxy resin-based adhesive agent will be hereinafter explained with reference to examples.

### (i) Epoxy resin

The epoxy resin in the present embodiment is a compound including at least one or more epoxy group or glycidyl group, and cured by causing a cross-linking polymerization reaction by being used in combination with a curing agent. The epoxy resin also includes a monomer including at least one or more epoxy group or glycidyl group.

An epoxy resin generally used for an adhesive layer of a foaming adhesive sheet may be used as the epoxy resin.

When the tack of the first adhesive layer is lower than the tack of the second adhesive layer, as the thermosetting adhesive agent included in the first adhesive layer with low tack is, as the epoxy resin, it is preferable to include the later described first epoxy resin and second epoxy resin. Also, when the tack of both the first adhesive layer and the second adhesive layer is low, as the thermosetting adhesive agent included in the first adhesive layer and the second adhesive layer, as the epoxy resin, it is preferably to include the later described first epoxy resin and second epoxy resin.

In specific, as the epoxy resin, the thermosetting adhesive agent preferably includes a first epoxy resin with softening temperature of 50°C or more and an epoxy equivalent of 5000 g/eq or less, and a second epoxy resin with softening temperature higher than that of the first epoxy resin and a weight-average molecular weight of 20,000 or more. By using the first epoxy resin and the second epoxy resin in combination, the pressure-sensitive adhesion (tack property) of the adhesive layer may be decreased so that a foaming adhesive sheet having excellent sliding property may be obtained. Further, an adhesive layer having excellent blocking resistance and excellent adhesion after foamed and cured may be obtained.

When attempting only an improvement in adhesion after foamed and cured, for example, it is effective to use an epoxy resin with a lower molecular weight (low epoxy equivalent) than an epoxy resin with a high molecular weight (high epoxy equivalent). However, when the epoxy resin with a low molecular weight (low epoxy equivalent) is used, the epoxy resins with a low molecular weight (low epoxy equivalent) are assimilated with each other when, for example, the foaming adhesive sheet is rolled up into a roll, and the blocking easily occurs.

In contrast to this, if a first epoxy resin with relatively low softening temperature (relatively high crystallinity) and a low molecular weight (low epoxy equivalent) is used, when the temperature is higher than the softening temperature, the first epoxy resin is rapidly melted and turned into a liquid with a low viscosity. Therefore, it is easy to improve the adhesion after foamed and cured. Meanwhile, since the first epoxy resin is relatively high in crystallinity, the blocking may be suppressed from occurring, compared to an epoxy resin with relatively low crystallinity or an epoxy resin with no crystallinity. However, when only the first epoxy resin is used, there is a possibility that the blocking suppressing effect is not sufficient, or that the pressure-sensitive adhesion (tack property) of the adhesive layer is too high. Therefore, a second epoxy resin with relatively high softening temperature (with relatively low crystallinity) and high molecular weight is further used. Thereby, the blocking suppressing effect may be improved, and the pressure-sensitive adhesion (tack property) of the adhesive layer may be kept low.

Meanwhile, when the tack of the first adhesive layer is lower than the tack of the second adhesive layer, in the second adhesive layer with high tack, as the epoxy resin, it is preferable to use an epoxy resin that is liquid at a normal temperature such as a bisphenol A type epoxy resin and a bisphenol F type epoxy resin, and an epoxy resin with low softening point. The reason therefor is that the tack of the second adhesive layer can be easily adjusted to the specified range by using these epoxy resins.

The first epoxy resin and the second epoxy resin are the same as the descriptions in the section "(i-1) First epoxy resin" and "(i-2) Second epoxy resin" in "I. First embodiment A. Foaming adhesive sheet α) First aspect 2. First adhesive layer (1) Materials of first adhesive layer (a) Curable adhesive agent (i) Epoxy resin"; thus, the descriptions herein are omitted.

### (ii) Acrylic resin

When the thermosetting adhesive agent is the epoxy resin-based adhesive agent, the adhesive layer may further include an acrylic resin compatible with the epoxy resin. The acrylic resin is a resin compatibilized with the epoxy resin. Since the acrylic resin is compatible with the epoxy resin, the toughness of the adhesive layer is likely to be improved. As the result, the adhesion after foamed and cured may be improved. Further, the acrylic resin is believed to function as a compatibilizing agent of the foaming agent (such as a foaming agent whose shell part is an acrylonitrile copolymer resin), and the adhesion after foamed and cured is improved by being uniformly dispersed and foamed. Also, the flexibility due to the acrylic resin is exhibited so that the close adhesion with respect to the substrate after foamed and cured, and cracking resistance after foamed and cured may be improved. Also, the hardness of the adhesive layer surface may be maintained at high level, by the acrylic resin being compatibilized with the epoxy resin. Meanwhile, if the acrylic resin is incompatible with the epoxy resin, a flexible part is formed on the adhesive layer surface so that the interface with the adherend is not slippery enough, and the workability may be deteriorated.

The descriptions about the acrylic resin in the present embodiment are the same as the descriptions in the section "I. First embodiment A. Foaming adhesive sheet α) First aspect 2. First adhesive layer (1) Materials of first adhesive layer (a) Curable adhesive agent (ii) Acrylic resin"; thus, the descriptions herein are omitted.

### (iii) Curing agent

As the curing agent in the present embodiment, a curing agent of which curing reaction occurs by heating and generally is used in an epoxy resin based adhesive agent may be used. The curing agent is preferably solid at an ordinary temperature (23°C). The curing agent that is solid at the ordinary temperature may improve storage stability (pot life), compared to the curing agent that is liquid at the ordinary temperature. Also, the curing agent may be a latent curing agent. Also, a curing agent may be used alone, and 2 kinds or more thereof may be used.

When the tack of the first adhesive layer is lower than the tack of the second adhesive layer, in the second adhesive layer with high tack, a curing agent that is solid at the ordinary temperature and a curing agent that is liquid at the ordinary temperature may be used, but from the viewpoint of storage stability, usage of the curing agent that is solid at the ordinary temperature is preferable.

The descriptions of the curing agent are the same as the descriptions in the section "I. First embodiment A. Foaming adhesive sheet α) First aspect 2. First adhesive layer (1) Materials of first adhesive layer (a) Curable adhesive agent (iii) Curing agent"; thus, the descriptions herein are omitted.

### (b) Foaming agent

In the present embodiment, at least one of the first adhesive layer and the second adhesive layer contains a foaming agent.

Above all, it is preferable that the both of the first adhesive layer and the second adhesive layer contain the foaming agent. In this case, the adhesion of the first adhesive layer and the second adhesive layer after foamed and cured may be improved.

Meanwhile, in the case only one of the first adhesive layer and the second adhesive layer contains the foaming agent, when the foaming agent is a microcapsule type foaming agent, the foaming agent is presumed to work as a filler. For this reason, it is considered that the adhesive layer containing the foaming agent tends to be hard and the adhesive layer not containing the foaming agent tends to be soft. Thus, when only one of the first adhesive layer and the second adhesive layer contains the foaming agent, a curl is considered to be easily generated in the foaming adhesive sheet. Therefore, when only one of the first adhesive layer and the second adhesive layer contains the foaming agent, the present embodiment is considered to be effective.

Also, when the hardness of the first adhesive layer is harder than the hardness of the second adhesive layer, the first adhesive layer with high hardness preferably contains the foaming agent. When the first adhesive layer contains the foaming agent, the surface roughness increases, the friction coefficient decreases, and the slippage further improves.

As the foaming agent, a foaming agent of which foaming reaction occurs by heating and is generally used for an adhesive layer of a foaming adhesive sheet may be used.

The descriptions about the foaming agent are the same as the descriptions in the section "I. First embodiment A. Foaming adhesive sheet α) First aspect 2. First adhesive layer (1) Materials of first adhesive layer (b) Foaming agent" above; thus, the descriptions herein are omitted.

### (c) Other component

For example, when the thermosetting adhesive agent is the epoxy resin based adhesive agent, the adhesive layer in the present embodiment may include only the epoxy resin and the acrylic resin as the resin component, and may further include other resins. Examples of the other resins may include a urethane resin.

The descriptions about these other components are the same as the descriptions in the section "I. First embodiment A. Foaming adhesive sheet α) First aspect 2. First adhesive layer (1) Materials of first adhesive layer (c) Other component" above; thus, the descriptions herein are omitted.

### (3) Constitution of first adhesive layer and second adhesive layer

When the first adhesive layer and the second adhesive layer contain a foaming agent, the first adhesive layer and the second adhesive layer are capable of foaming at foaming magnification of, for example, 1.5 times or more and 15 times or less. The foaming magnification may be, for example, 3.5 times or more, may be 4 times or more, and may be 4.5 times or more. Also, in the above case, the foaming magnification may be, for example, 9 times or less, may be 8.5 times or less, and may be 8 times or less.

Here, the foaming magnification may be determined by the following formula.

Foaming magnification (times) = adhesive layer thickness after foamed and cured/adhesive layer thickness before foaming and curing

The thickness of the first adhesive layer and the second adhesive layer is respectively not particularly limited, but when the adhesive layer contains the foaming agent, it is preferably average particle size of the foaming agent or more; for example, it is 10 µm or more, may be 15 µm or more, and may be 20 µm or more. Meanwhile, the thickness of the first adhesive layer and the second adhesive layer is respectively, for example, 200 µm or less, may be 150 µm or less, and may be 100 µm or less. When the thickness of the adhesive layer is too thin, the close adhesion with respect to the substrate and the adhesion after foamed and cured may not be sufficiently obtained. Also, in the case the tack of the first adhesive layer is lower than the tack of the second adhesive layer, when the thickness of the first adhesive layer with low tack is too thin, there is a possibility that the curvature radius of the curl of the foaming adhesive sheet after placed still at the specified temperature and the specified humidity for the specified time may be decreased. Meanwhile, when the thickness of the adhesive layer is too thick, the quality of the surface may be deteriorated.

Here, the thickness of the first adhesive layer and the second adhesive layer is respectively a value measured from a cross-section in the thickness direction of the foaming adhesive sheet observed with a transmission electron microscope (TEM), a scanning electron microscope (SEM), or a scanning transmission type electron microscope (STEM), and may be an average value of the thickness at 10 locations selected at random. Incidentally, this is similar to a method for measuring the thickness of other layer included in the foaming adhesive sheet.

The first adhesive layer and the second adhesive layer may be a continuous layer, and may be a discontinuous layer. Example of the discontinuous layer may include patterns such as stripes and dots. Also, the surfaces of the first adhesive layer and the second adhesive layer may have a concavo-convex shape such as emboss.

The first adhesive layer and the second adhesive layer may be formed, for example, by applying an adhesive composition including the thermosetting adhesive agent, the foaming agent, and the like, and removing a solvent. Examples of application methods may include roll coating, reverse roll coating, transfer roll coating, gravure coating, gravure reverse coating, comma coating, rod coating, blade coating, bar coating, wire bar coating, die coating, lip coating, and dip coating.

The adhesive composition may include a solvent and may not include a solvent. Incidentally, the solvent in the present descriptions is in a broad sense including not only a strict solvent (a solvent for dissolving a solute) but also a dispersion medium. Also, the solvent included in the adhesive composition is volatilized and removed when the adhesive composition is applied and dried to form an adhesive layer.

The adhesive composition may be obtained by mixing each of the above described components and kneading and dispersing them, if necessary. As the mixing and dispersing methods, common kneading dispersers such as twin roll mills, triple roll mills, pebble mills, trommels, Szegvari attritors, high-speed impeller dispersers, high-speed stone mills, high-speed impact mills, Despar, high-speed mixers, ribbon blenders, cokneaders, intensive mixers, tumblers, blenders, dispersers, homogenizers, and ultrasonic dispersers, can be applied.

### 3. Substrate

The substrate in the present embodiment is disposed between the first adhesive layer and the second adhesive layer.

The substrate preferably has an insulating property. Also, it is preferable that the substrate is in a sheet form. The substrate may have a single layer structure, and may have a multiple layer structure. Also, the substrate may or may not have a porous structure inside.

The descriptions about the substrate are the same as the descriptions in the section "I. First embodiment A. Foaming adhesive sheet α) First aspect 4. Substrate" above; thus, the descriptions herein are omitted.

### 4. Curl adjusting layer

The foaming adhesive sheet in the present embodiment may include a curl adjusting layer on a surface of the second adhesive layer that is opposite side to the substrate. For example, in the case the tack of the first adhesive layer is lower than the tack of the second adhesive layer, a curl is easily generated in the foaming adhesive sheet, but when the curl adjusting layer is disposed on the surface of the second adhesive layer that is opposite side to the substrate, the curl may be prevented.

For example, in the foaming adhesive sheet 10 shown in FIG. 12, curl adjusting layer 7 is disposed on a surface of the second adhesive layer 3 that is opposite side to the substrate 2.

The curl adjusting layer may be, for example, a separator protecting the second adhesive layer, and may be a fiber layer. Above all, the curl adjusting layer is preferably a separator. The separator may be peeled off, and when the foaming adhesive sheet is disposed between two members, by peeling off the separator from the foaming adhesive sheet, the thickness of the foaming adhesive sheet may be decreased, and the inserting property can be improved.

### (1) Separator

In the present embodiment, a separator may be disposed on a surface of the second adhesive layer that is opposite side to the substrate.

The separator is not particularly limited as long as it may be peeled off from the second adhesive layer, and may have a strength to the extent capable of protecting the second adhesive layer. Examples of such separator may include a releasing film, and a releasing paper. Also, the separator may have a single layer structure, and may have a multiple layer structure.

Examples of the separator having a single layer structure may include a fluorine resin based film.

Also, examples of the separator having a multiple layer structure may include a stacked body including a releasing layer on one surface or both surfaces of a substrate. Examples of the substrate layer may include resin films such as polypropylene, polyethylene, and polyethylene terephthalate; and paper such as high-quality paper, coated paper, and impregnated paper. The material of the releasing paper is not particularly limited as long as it has releasing property, and examples may include a silicone compound, an organic compound modified silicone compound, a fluorine compound, an amino-alkyd compound, a melamine compound, an acrylic compound, a polyester compound, and a long-chain alkyl compound. Any one of an emulsion type, a solvent type, and a solventless type of these compounds may be used.

### (2) Fiber layer

In the present embodiment, a fiber layer may be disposed on a surface of the second adhesive layer that is opposite side to the substrate. In the case the second adhesive layer contains the thermosetting adhesive agent and the foaming agent, the fiber layer is a layer capable of transmitting or permeating the thermosetting adhesive agent at the time of foaming the second adhesive layer to expand.

Examples of the shape of the fiber layer may include a nonwoven fabric, a paper, a felt, a knit, and a fabric.

Examples of the fiber configuring the fiber layer may include fibers such as basalt fibers, vinylon fibers, polyarylate fibers, polyethylene fibers, polypropylene fibers, silicon carbide fibers, cellulose fibers, polyester fibers, nylon fibers, aramid fibers, polyphenylene sulfide fibers, liquid crystal polymer fibers, and glass fibers.

As the density of the fiber layer, it is not particularly limited as long as it is capable of transmitting or permeating the thermosetting adhesive agent at the time of foaming the second adhesive layer to expand, and for example, it is 200 g/cm³ or less, may be 100 g/cm³ or less, and may be 50 g/cm³ or less. When the density of the fiber layer is too high, there may be less void in the fiber layer, and there is a possibility that it may be difficult to transmit or permeate the thermosetting adhesive agent at the time of foaming the second adhesive layer, and sufficient adhesive force may not be obtained after foaming and curing the second adhesive layer. Meanwhile, the density of the fiber layer is, for example, 3 g/cm³ or more, may be 5 g/cm³ or more, and may be 7 g/cm³ or more.

Here, density (g/cm³) of the fiber layer can be calculated by dividing the basis weight (g/cm²) of the fiber layer by the thickness (cm) of the fiber layer.

The basis weight of the fiber layer can be measured by the following method. First, 10 pieces of the test piece of the fiber layer in a size of 100 mm * 100 mm are collected, and the mass (g) of each test piece is measured. Next, the mass (g) of each test piece is divided by the area (cm²) of each test piece to calculate the basis weight (g/cm²) of each test piece. The average value of the basis weights of total 10 test pieces is calculated and the average value is adopted as the basis weight.

Note that the density of the fiber layer can be adjusted by the method for producing the fiber layer and the production conditions.

The thickness of the fiber layer is not particularly limited as long as it is capable of transmitting or permeating the thermosetting adhesive agent at the time of foaming the second adhesive layer to expand, and for example, it is 100 µm or less, may be 80 µm or less, and may be 60 µm or less. When the thickness of the fiber layer is too thick, the amount of the thermosetting adhesive agent to be transmitted or permeated at the time of foaming the second adhesive layer may be less, and there is a possibility that the adhesive force of the second adhesive layer after foamed and cured may be degraded. Meanwhile, the thickness of the fiber layer is, for example, 6 µm or more, may be 8 µm or more, and may be 10 µm or more. If the thickness of the fiber layer is too thin, there is a possibility that a blocking may occur when processed into a roll shape.

Examples of the method for disposing the fiber layer on the surface of the second adhesive layer that is opposite side to the substrate may include a method in which the fiber layer is adhered utilizing the pressure-sensitive adhesion of the second adhesive layer, a method in which the fiber layer is adhered to the second adhesive layer interposing an additional layer including adhesion other than the second adhesive layer, a method in which an adhesive composition diluted by a solvent is applied on the fiber layer and dried, a method in which the second adhesive layer and the fiber layer are heat-laminated, and a method combining these.

### 5. First intermediate layer and second intermediate layer

The foaming adhesive sheet in the present embodiment may include a first intermediate layer between the substrate and the first adhesive layer. Also, the foaming adhesive sheet in the present embodiment may include a second intermediate layer between the substrate and the second adhesive layer. By disposing the first intermediate layer and the second intermediate layer, the close adhesion of the first adhesive layer and the second adhesive layer with respect to the substrate may further be improved. Further, by disposing the first intermediate layer and the second intermediate layer, for example, the stress applied to a bent portion when the foaming adhesive sheet is bent may be eased, or the stress applied to a cut portion when the foaming adhesive sheet is cut may be eased. As the result, lifting off or peeling off of the first adhesive layer and the second adhesive layer from the substrate may be suppressed when the foaming adhesive sheet is bent or cut.

For example, in the foaming adhesive sheet 10 shown in FIG. 13, first intermediate layer 4 is disposed between the substrate 2 and the first adhesive layer 1, and second intermediate layer 5 is disposed between the substrate 2 and the second adhesive layer 3. Incidentally, in FIG. 13, although the foaming adhesive sheet 10 includes both of the first intermediate layer 4 and the second intermediate layer 5, only either one may be included.

The foaming adhesive sheet may include at least one of the first intermediate layer and the second intermediate layer, and for example, only the first intermediate layer disposed between the substrate and the first adhesive layer may be included, only the second intermediate layer disposed between the substrate and the second adhesive layer may be included, and both of the first intermediate layer disposed between the substrate and the first adhesive layer, and the second intermediate layer disposed between the substrate and the second adhesive layer may be included. Above all, it is preferable that the first intermediate layer is disposed between the substrate and the first adhesive layer, and the second intermediate layer is disposed between the substrate and the second adhesive layer.

The descriptions about materials included in the first intermediate layer and the second intermediate layer, the thickness and the production method thereof are the same as the descriptions in the section "I. First embodiment A. Foaming adhesive sheet α) First aspect 5. Other constitution (1) First intermediate layer and second intermediate layer" above; thus, the descriptions herein are omitted.

### 6. Foaming adhesive sheet

The thickness of the foaming adhesive sheet in the present embodiment is, for example, 10 µm or more, and may be 20 µm or more. Meanwhile, the thickness of the foaming adhesive sheet is, for example, 1000 µm or less, and may be 200 µm or less.

The application of the foaming adhesive sheet in the present embodiment is not particularly limited. The foaming adhesive sheet in the present embodiment may be used, for example, when two members are adhered to each other by disposing the foaming adhesive sheet between the two members, and then, forming and curing the foaming adhesive sheet by heating. For example, in the case the tack of the first adhesive layer is lower than the tack of the second adhesive layer, the foaming adhesive sheet in the present embodiment may be preferably used when the second adhesive layer surface of the foaming adhesive sheet is adhered to the second member, and then the second member to which the foaming adhesive sheet is adhered is inserted to the hole, the groove or the like of the first member, and the foaming adhesive sheet is foamed and cured by heating to adhere the first member and the second member. Also, for example, in the case the tack of the first adhesive layer and the second adhesive layer is low, the foaming adhesive sheet in the present embodiment is preferably used when the foaming adhesive sheet is inserted between the first member and the second member, and then the foaming adhesive sheet is foamed and cured by heating to adhere the first member and the second member; when the foaming adhesive sheet is disposed on the second member, and then the second member to which the foaming adhesive sheet is disposed is inserted to the hole, the groove or the like of the first member and the foaming adhesive sheet is foamed and cured by heating to adhere the first member and the second member; and when the foaming adhesive sheet is disposed in the hole, the groove or the like of the first member, and then the second member is inserted to the hole, the groove or the like of the first member to which the foaming adhesive sheet is adhered, and the foaming adhesive sheet is foamed and cured by heating to adhere the first member and the second member. In specific, the foaming adhesive sheet in the present embodiment is used for adhering the coil and the stator in the motor, and adhering the rotor and the permanent magnet in the embedded magnet type motor.

The method for producing the foaming adhesive sheet in the present embodiment is not particularly limited, and appropriately selected depending on the layer structure of the foaming adhesive sheet.

### B. Method for producing a product

The method for producing a product in the present embodiment includes: a disposing step of disposing the foaming adhesive sheet described above between a first member and a second member; and an adhering step of adhering the first member and the second member by foaming and curing the foaming adhesive sheet by heating.

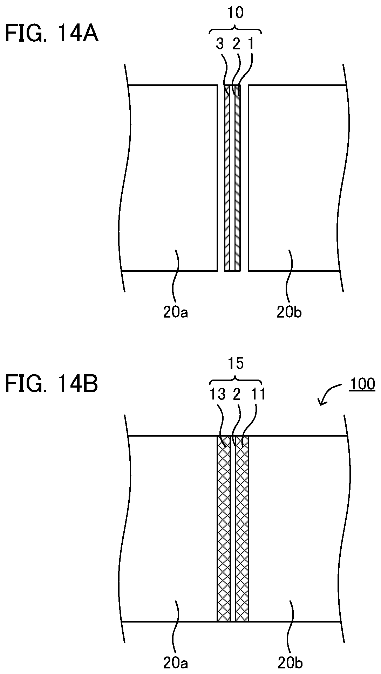

FIGS. 14A and 14B are process drawings illustrating an example of the method for producing a product in the present embodiment. First, as shown in FIG. 14A, foaming adhesive sheet 10 is disposed between first member 20a and second member 20b. Then, the first adhesive layer 1 and the second adhesive layer 3 of the foaming adhesive sheet 10 are formed and cured by heating. Thereby, as shown in FIG. 14B, the first member 20a and the second member 20b are adhered (bonded) by adhesive sheet 15 including the first adhesive layer 11 and the second adhesive layer 13 after foamed and cured. Thereby, product 100 in which the adhesive sheet 15 is disposed between the first member 20a and the second member 20b is obtained.

FIGS. 9A to 9C are process drawings illustrating an example of another method for producing a product in the present embodiment.
First, as shown in FIG. 9A, foaming adhesive sheet 10 is disposed on the second member 20b. On this occasion, in the foaming adhesive sheet 10, in the case the tack of the first adhesive layer 1 is lower than the tack of the second adhesive layer 3, the second adhesive layer 3 surface of the foaming adhesive sheet 10 is adhered to the second member 20b utilizing the tack of the second adhesive layer 3. Next, as shown in FIG. 9B, the second member 20b on which the foaming adhesive sheet 10 is disposed is inserted to the hole of the first member 20a. Next, as shown in FIG. 9C, the first adhesive layer 1 and the second adhesive layer 3 of the foaming adhesive sheet 10 are foamed and cured by heating. The first member 20a and the second member 20b are adhered (joined) by adhesive sheet 15 including first adhesive layer 11 and second adhesive layer 13 after foamed and cured. Thereby, product 100 in which the adhesive sheet 15 is disposed between the first member 20a and the second member 20b is obtained.

The method for producing a product in the present embodiment will be hereinafter explained.

### 1. Foaming adhesive sheet

In the method for producing a product in the present embodiment, as a foaming adhesive sheet, the foaming adhesive sheet described above is used.

When the foaming adhesive sheet includes a separator, the separator is peeled off from the foaming adhesive sheet at the time of disposing the foaming adhesive sheet between the first member and the second member.

Incidentally, the details of the foaming adhesive sheet are described in the section "A. Foaming adhesive sheet" above; thus, the description herein is omitted.

### 2. Disposing step

In the disposing step in the present embodiment, a method for disposing the foaming adhesive sheet between the first member and the second member is appropriately selected according to factors such as the constitution of the foaming adhesive sheet and the type of the first member and the second member. For example, in the case the second member is adhered and fixed in a hole or a groove of the first member, and when the tack of the first adhesive layer is lower than the tack of the second adhesive layer, there is a method in which the second adhesive layer surface of the foaming adhesive sheet is adhered to the second member utilizing the tack of the second adhesive layer of the foaming adhesive sheet, and then the second member to which the foaming adhesive sheet is adhered is disposed in the hole or the groove of the first member; and there is a method in which the second adhesive layer surface of the foaming adhesive sheet is adhered to the hole or the groove of the first member utilizing the tack of the second adhesive layer of the foaming adhesive sheet, and then the second member is disposed in the hole or the groove of the first member to which the foaming adhesive sheet is adhered. Also, for example, in the case the second member is adhered and fixed in the hole or the groove of the first member, and when the tack of the first adhesive layer and the second adhesive layer is low, there is a method in which the foaming adhesive sheet is disposed between the first member and the second member; there is a method in which the foaming adhesive sheet is disposed on the second member, and then the second member on which the foaming adhesive sheet is disposed is disposed in the hole or the groove of the first member; and there is a method in which the foaming adhesive sheet is disposed in the hole or the groove of the first member, and then the second member is disposed in the hole or the groove of the first member in which the foaming adhesive sheet is disposed.

### 3. Adhering step

In the adhering step in the present embodiment, the foaming adhesive sheet is foamed and cured by heating. The method by heating may be applied even when the first member and the second member are not transparent, such as a metal member.

The heating conditions are appropriately set according to, for example, the type of the thermosetting adhesive agent and foaming agent included in the first adhesive layer and the second adhesive layer, and the type of the substrate. The heating temperature may be, for example, 130°C or more, and 200°C or less. Also, the heating time may be, for example, 3 minutes or more and 3 hours or less.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### I. Examples of first embodiment

### [Production Example]

Firstly, adhesive compositions 1 to 3 having the following compositions were prepared.

### <Adhesive composition 1>

- Acrylic resin (PMMA-PBuA-PMMA (partially acrylamide group), Tg: -20°C, 120°C, Mw: 150,000): 13 parts by mass
- Epoxy resin A (bisphenol A novolac type, solid at ordinary temperature, softening temperature: 70°C, epoxy equivalent: 210 g/eq, Mw: 1300, melt viscosity at 150°C: 0.5 Pa·s): 40 parts by mass
- Epoxy resin B (BPA phenoxy type, solid at ordinary temperature, softening temperature: 110°C, epoxy equivalent: 8000 g/eq, Mw: 50,000 mass parts): 42 parts by mass
- Curing agent A (α-(hydroxy (or dihydroxy)phenylmethyl)-ω-hydropoly[biphenyl-4,4'-diylmethylene(hydroxy (or dihydroxy)phenylenemethylene)]): 6 parts by mass
- Curing catalyst (2-phenyl-4,5-dihydroxymethylimidazole average particle size: 3 µm, melting point: 230°C, reaction start temperature: 145°C to 155°C, active region: 155°C to 173°C (2PHZ-PW from Shikoku Chemicals Corporation): 8 parts by mass - Foaming agent (thermally expandable microcapsule, average particle size of 10 µm to 16 µm, expansion start temperature of 123°C to 133°C, maximum expansion temperature of 168°C to 178°C, core: hydrocarbon, shell: thermoplastic polymer): 13.5 parts by mass
- Solvent (methyl ethyl ketone) : 150 parts by mass

### <Adhesive composition 2>

- Acrylic resin (PMMA-PBuA-PMMA (partially acrylamide group), Tg: -20°C, 120°C, Mw: 150,000): 40 parts by mass
- Epoxy resin C (bisphenol A type, liquid at ordinary temperature, epoxy equivalent: 184 to 194 g/eq): 45 parts by mass
- Epoxy resin D (diaminodiphenyl methane type, high viscosity liquid, epoxy equivalent: 110 to 130 g/eq): 65 parts by mass
- Epoxy resin E (silicone modification, epoxy equivalent: 1200 g/mol): 20 parts by mass · Silane coupling agent (3-glycidoxypropyltrimethoxysilane): 2 parts by mass
- Curing agent B (phenol- formaldehyde polycondensate, softening temperature: 80°C, hydroxyl equivalent: 104 g/mol): 6 parts by mass
- Curing catalyst (2-phenyl-4,5-dihydroxymethylimidazole average particle size: 3 µm, melting point: 230°C, reaction start temperature: 145°C to 155°C, active region: 155°C to 173°C (2PHZ-PW from Shikoku Chemicals Corporation): 10 parts by mass
- Foaming agent (thermally expandable microcapsule, average particle size of 10 µm to 16 µm, expansion start temperature of 123°C to 133°C, maximum expansion temperature of 168°C to 178°C, core: hydrocarbon, shell: thermoplastic polymer): 20 parts by mass
- Solvent (methyl ethyl ketone): 114 parts by mass

### <Adhesive composition 3>

- Acrylic resin (PMMA-PBuA-PMMA (partially acrylamide group), Tg: -20°C, 120°C, Mw: 150,000): 10 parts by mass
- Epoxy resin A (bisphenol A novolac type, solid at ordinary temperature, softening temperature: 70°C, epoxy equivalent: 210 g/eq, Mw: 1300, melt viscosity at 150°C: 0.5 Pa·s): 15 parts by mass
- Epoxy resin C (bisphenol A type, liquid at ordinary temperature, epoxy equivalent: 184 to 194 g/eq) 23 parts by mass
- Epoxy resin F (aliphatic polyfunctional epoxy compound, epoxy equivalent: 173 g/eq): 13 parts by mass
- Silane coupling agent (3-glycidoxypropyltrimethoxysilane): 1 parts by mass
- Curing agent B (phenol- formaldehyde polycondensate, softening temperature: 80°C, hydroxyl equivalent: 104 g/mol): 19 parts by mass
- Curing catalyst (2-phenyl-4,5-dihydroxymethylimidazole, average particle size: 3 µm, melting point: 230°C, reaction start temperature: 145°C to 155°C, active region: 155°C to 173°C (2PHZ-PW from Shikoku Chemicals Corporation): 2 parts by mass
- Foaming agent (thermally expandable microcapsule, average particle size of 10 µm to 16 µm, expansion start temperature of 123°C to 133°C, maximum expansion temperature of 168°C to 178°C, core: hydrocarbon, shell: thermoplastic polymer): 8.5 parts by mass
- Storage stabilizer (borate ester compound): 9 parts by mass
- Solvent (methyl ethyl ketone) : 39 parts by mass

### [Example I-1]

As a substrate, polyethylene naphthalate (PEN film, Teonex Q5100 from Toyobo, thickness: 25 µm) was used. Also, to 100 mass parts of a polyester polymer, a curing agent (polyisocyanate) was compounded at the proportion of 15 mass parts, and a catalyst (trisdimethylaminomethyl phenol) was compounded at the proportion of 0.3 mass parts, further diluted with methyl ethyl ketone (MEK) so that the solid content was 15 mass%, to prepare a resin composition. The resin composition was applied to one surface of the substrate by a bar coater, dried for 1 minutes at 100°C in an oven to form a first intermediate layer having thickness of 2 µm. Next, the adhesive composition 1 was applied to the surface of the first intermediate layer, that is opposite to the substrate, using an applicator so that a thickness after application was 50 µm. Thereafter, it was dried for 3 minutes at 100°C in an oven to form a first adhesive layer.

Then, as a second separator, a release film (PET separator PET50×1-J2 from Nippa Co., Ltd., thickness: 50 µm) was used, adhesive composition 2 was applied to the release-treated surface of the release film, using an applicator so that a thickness after application was 50 µm. Thereafter, it was dried for 3 minutes at 100°C in an oven to form a second adhesive layer.

Then, on the substrate surface of a stacked body including a substrate, a first intermediate layer and a first adhesive layer, the second adhesive layer surface of a stacked body including a second separator and a second adhesive layer was laminated. Thereby, obtained was a foaming adhesive sheet wherein the first adhesive layer, the first intermediate layer, the substrate, the second adhesive layer and the second separator were disposed in this order.

### [Example I-2]

A foaming adhesive sheet was produced in the same manner as in Example I-1, except that the thickness of the first adhesive layer and the second adhesive layer was made 45 µm.

### [Example I-3]

A foaming adhesive sheet was produced in the same manner as in Example I-1, except that the adhesive composition 3 was used for forming the second adhesive layer, and the thickness of the second adhesive layer was made 45 µm.

### [Comparative Example I-1]

A foaming adhesive sheet was produced in the same manner as in Example I-1, except that the adhesive composition 2 was used for forming the first adhesive layer.

### [Comparative Example I-2]

A foaming adhesive sheet was produced in the same manner as in Comparative Example I-1, except that a polyphenylene sulfide (PPS) film (Torelina 25-3030, thickness of 25 µm from Toray Industries, Inc.) was used as a substrate.

### [Comparative Example I-3]

A foaming adhesive sheet was produced in the same manner as in Comparative Example I-1, except that the thickness of the substrate (PEN film) was made 50 µm.

### [Comparative Example I-4]

A foaming adhesive sheet was produced in the same manner as in Comparative Example I-1, except that a polyethylene terephthalate (PET) film (Lumirror #25-S105 from Toray Industries, Inc., thickness 50 µm) was used as the substrate.

### [Evaluation]

### (1) Tack of first adhesive layer and second adhesive layer

About the tack of the first adhesive layer, a tacking test machine "TAC-II" from RHESCA was used, and a cylindrical probe made of stainless having a diameter of 5 mm was pushed against a surface of the first adhesive layer of the foaming adhesive sheet at a load of 10.0 gf and speed of 30 mm/min, and kept for 1.0 second in the condition of 25°C, then peeled off at the speed of 30 mm/min, and the load at the time of peeling off was measured. This measurement was performed for five times, and the average value was determined as the tack.

The tack of the second adhesive layer was measured similarly to the tack of the first adhesive layer. On this occasion, the measurement of the tack of the second adhesive layer was performed after peeling off the second separator from the foaming adhesive sheet.

### (2) Loop stiffness

After peeling off the second separator from the foaming adhesive sheet, a test piece in a square shape having 10 mm width and 200 mm length was produced, and the loop stiffness was measured by the above described loop stiffness measurement method. As the measurement device, Loop Stiffness Tester (registered trademark) from Toyo Seiki Seisaku-sho, Ltd. was used. The environment during the measurement was temperature: 23°C and relative humidity: 50%.

### (3) Falling amount

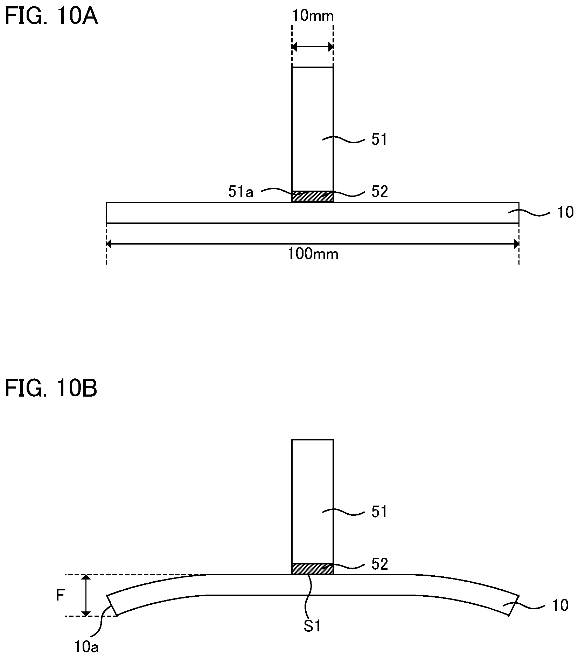

FIGS. 10A and 10B are diagrams explaining the method for measuring the amount the foaming adhesive sheet falls. The foaming adhesive sheet 10 was cut into a size having 10 mm width and 100 mm length after peeling off the second separator, and used as a test piece. Also, jig 51 was a rectangular parallelepiped shape, and under surface 51a of the jig 51 was a square shape, a flat surface, and horizontal. Also, to the under surface 51a of the jig 51, double-sided pressure-sensitive adhesive tape 52 ("Y-4920-25" from 3M) was adhered.

First, as shown in FIG. 10A, under an environment with normal temperature and normal humidity, the foaming adhesive sheet 10 was fixed by adhering the double-sided pressure-sensitive adhesive tape 52 surface of the jig 51 to the center of the foaming adhesive sheet 10. The adhesion area was 10 mm * 10 mm. On this occasion, in the case the double-sided pressure-sensitive adhesive tape 52 surface of the jig 51 was adhered to the first adhesive layer surface of the foaming adhesive sheet 10, the adhesion target surface was the first adhesive layer. Meanwhile, in the case the double-sided pressure-sensitive adhesive tape 52 surface of the jig 51 was adhered to the second adhesive layer surface of the foaming adhesive sheet 10, the adhesion target surface was the second adhesive layer.

Next, as shown in FIG. 10B, the jig 51 was lifted up vertically upward. At this time, end part 10a of the foaming adhesive sheet 10 fell vertically downward. Then, surface S1 of the double-sided pressure-sensitive adhesive tape 52 of the jig 51 was determined as a reference surface, and a distance in a vertical direction from the reference surface S1 until the end part 10a of the foaming adhesive sheet 10 was measured and determined as a falling amount F. As the falling amount, three pieces of the test piece were produced from the foaming adhesive sheet, the measurement was performed once per the test piece, and the average value of the three test pieces was calculated.

### (4) Adhering property

Similarly to the measurement of the falling amount, the foaming adhesive sheet was fixed by adhering the double-sided pressure-sensitive adhesive tape surface of the jig to the center of the test piece of the foaming adhesive sheet, and then the jig was lifted up vertically upward. On this occasion, the double-sided pressure-sensitive adhesive tape surface of the jig was adhered to the first adhesive layer surface of the foaming adhesive sheet. Next, a metal plate was disposed in down side of the foaming adhesive sheet lifted up by the jig, and the jig was lowered vertically downward, and the foaming adhesive sheet was adhered to the metal plate. Then, the state of the foaming adhesive sheet was visually observed to evaluate the adhering property with the below basis. A: The foaming adhesive sheet was adhered without folding and biting of bubbles.
B: Folding and biting of bubbles were generated in the foaming adhesive sheet.

### (5) Inserting property (slippage of the first adhesive layer at the time of insertion)

The foaming adhesive sheet cut into 5.5 cm * 8.0 cm, a hollow cylinder 1 having outer diameter 22 mm, thickness 1.5 mm and length 60 mm, and a hollow cylinder 2 having outer diameter 18 mm, thickness 1.0 m, and length 80 mm were prepared. Also, the second separator was peeled off from the foaming adhesive sheet, the second adhesive layer surface was adhered to the outer diameter part of the cylinder 2 so that the short side came to the circumferential direction, and thereby the foaming adhesive sheet was disposed. After that, the cylinder 2 was slowly pushed by hands and inserted to the hollow space of the cylinder 1, and the slippage of the first adhesive layer at that time was evaluated. The evaluation basis was as below.
A: There was no snagging when inserting.
B: There was a snag when inserting (the first adhesive layer stuck to the cylinder 1, making insertion difficult).

**[Table 1]**

| | First adhesie layer | Second adhesive layer |
|---|---|---|
| Example I-1 | Adhesive composition 1 | Adhesive composition 2 |
| Example I-2 | Adhesive composition 1 | Adhesive composition 2 |
| Example I-3 | Adhesive composition 1 | Adhesive composition 3 |
| Comp. Ex. I-1 | Adhesive composition 2 | Adhesive composition 2 |
| Comp. Ex. I-2 | Adhesive composition 2 | Adhesive composition 2 |
| Comp. Ex. I-3 | Adhesive composition 2 | Adhesive composition 2 |
| Comp. Ex. I-4 | Adhesive composition 2 | Adhesive composition 2 |

**[Table 2]**

| | | Ex. I-1 | Ex. I-2 | Ex. I-3 | Comp. Ex. I-1 | Comp. Ex. I-2 | Comp. Ex. I-3 | Comp. Ex. I-4 |
|---|---|---|---|---|---|---|---|---|
| Thickness of first adhesive layer (µm) | | 50 | 45 | 45 | 50 | 50 | 50 | 50 |
| Thickness of substrate (µm) | | 25 | 25 | 25 | 25 | 25 | 50 | 50 |
| Thickness of second adhesive layer (µm) | | 50 | 45 | 45 | 50 | 50 | 50 | 50 |
| Tack of first adhesive layer (gf) | | 0 | 0 | 0 | 449 | 461 | 410 | 397 |
| Tack of second adhesive layer (gf) | | 203 | 175 | 273 | 415 | 433 | 422 | 410 |
| Loop stiffness (mN/10mm) | | 105.8 | 111.7 | 114.7 | 10.3 | 7.4 | 77.8 | 50.2 |
| Falling amount (mm) | Adhesion target surface: First adhesive layer | 0 | 13 | 12 | 35 | 42 | 5 | 11 |
| | Adhesion target surface: Second adhesive layer | 10 | - | - | - | - | - | - |
| Adhering property | | A | A | A | B(Folding) | B(Folding) | A | A |
| Inserting property | | A | A | A | B | B | B | B |

In comparison of Examples I-1 to I-3 and Comparative Examples I-3 to I-4 with Comparative Examples I-1 to I-2, it was confirmed that the falling amount was little and the adhering property was excellent when the loop stiffness was 50 mN/ 10 mm or more. Also, in Examples I-1 to I-3, since the tack of the first adhesive layer and the tack of the second adhesive layer were respectively in the specified range, the inserting property was also excellent.

### II. Examples of second embodiment

### [Production Example]

First, adhesive compositions A and B having the following compositions were prepared.

### <Adhesive composition A>

- Acrylic resin (PMMA-PBuA-PMMA (partially acrylamide group), Tg: -20°C, 120°C, Mw: 150,000): 13 parts by mass
- Epoxy resin A: bisphenol A novolac type, solid at ordinary temperature, softening temperature: 70°C, epoxy equivalent: 210 g/eq, Mw: 1300, melt viscosity at 150°C: 0.5 Pa·s): 40 parts by mass
- Epoxy resin B (BPA phnoxy type, solid at ordinary temperature, softening temperature: 110°C, epoxy equivalent: 8000 g/eq, Mw: 50,000 mass parts): 42 parts by mass
- Curing agent A (α-(hydroxy (or dihydroxy)phenylmethyl)-ω-hydropoly[biphenyl-4,4'-diylmethylene(hydroxy (or dihydroxy)phenylenemethylene)]): 6 parts by mass
- Curing catalyst (2-phenyl-4,5-dihydroxymethylimidazole, average particle size: 3 µm, melting point: 230°C, reaction start temperature: 145°C to 155°C, active region: 155°C to 173°C (2PHZ-PW from Shikoku Chemicals Corporation): 8 parts by mass
- Foaming agent (thermally expandable microcapsule, average particle size of 10 µm to 16 µm, expansion start temperature of 123°C to 133°C, maximum expansion temperature of 168°C to 178°C, core: hydrocarbon, shell: thermoplastic polymer): 13.5 parts by mass
- Solvent (methyl ethyl ketone): 150 parts by mass

### <Adhesive composition B>

- Acrylic resin (PMMA-PBuA-PMMA (partially acrylamide group), Tg: -20°C, 120°C, Mw: 150,000): 40 parts by mass
- Epoxy resin C (bisphenol A novolac type, liquid at ordinary temperature, epoxy equivalent: 184 to 194 g/eq): 45 parts by mass
- Epoxy resin D (diaminodiphenyl methane type, high viscosity liquid, epoxy equivalent: 110 to 130 g/eq): 65 parts by mass
- Epoxy resin E (silicone modification, epoxy equivalent: 1200 g/mol): 20 parts by mass · Silane coupling agent (3-glycidoxypropyltrimethoxysilane): 2 parts by mass
- Curing agent B (phenol- formaldehyde polycondensate, softening temperature: 80°C, hydroxyl equivalent: 104 g/mol): 6 parts by mass
- Curing catalyst (2-phenyl-4,5-dihydroxymethylimidazole, average particle size: 3 µm, melting point: 230°C, reaction start temperature: 145°C to 155°C, active region: 155°C to 173°C (2PHZ-PW from Shikoku Chemicals Corporation): 10 parts by mass
- Foaming agent (thermally expandable microcapsule, average particle size of 10 µm to 16 µm, expansion start temperature of 123°C to 133°C, maximum expansion temperature of 168°C to 178°C, core: hydrocarbon, shell: thermoplastic polymer): 20 parts by mass
- Solvent (methyl ethyl ketone): 114 parts by mass

### [Example II-1]

As a substrate, polyethylene naphthalate (PEN film, Teonex Q51 from Toyobo Film Solutions, thickness: 25 µm) was used. Also, to 100 mass parts of a polyester polymer, a curing agent (polyisocyanate) was compounded at the proportion of 15 mass parts, and a catalyst (trisdimethylaminomethyl phenol) was compounded at the proportion of 0.3 mass parts, further diluted with methyl ethyl ketone (MEK) so that the solid content was 15 mass%, to prepare a resin composition. The resin composition was applied to one surface of the substrate by a bar coater, dried for 1 minutes at 100°C in an oven to form a first intermediate layer having thickness of 2 µm. Next, the adhesive composition was applied to the surface of the first intermediate layer, that is opposite to the substrate, using an applicator so that a thickness after application was 27 µm. Thereafter, it was dried for 3 minutes at 100°C in an oven to form a first adhesive layer.

Then, as a separator, a release film (PET separator PET50×1-J2 from Nippa Co., Ltd., thickness: 50 µm) was used, adhesive composition B was applied to the release-treated surface of the release film, using an applicator so that a thickness after application was 51 µm. Thereafter, it was dried for 3 minutes at 100°C in an oven to form a second adhesive layer.

Then, on the substrate surface of a stacked body including a substrate, a first intermediate layer and a first adhesive layer, the second adhesive layer surface of a stacked body including a separator and a second adhesive layer was laminated. After that, the separator was peeled off. Thereby, obtained was a foaming adhesive sheet wherein the first adhesive layer, the first intermediate layer, the substrate, and the second adhesive layer were disposed in this order.

### [Examples II-2 to II-5]

A foaming adhesive sheet was respectively produced in the same manner as in Example II-1, except that the thicknesses of the first adhesive layer and the second adhesive layer were respectively made the thicknesses as shown in below Table 2.

### [Comparative Example II-1]

A stacked body including a substrate, a first intermediate layer and a first adhesive layer was obtained in the same manner as in Example II-1. This stacked body was used as the foaming adhesive sheet.

### [Comparative Example II-2]

A stacked body including a substrate, a first intermediate layer and a first adhesive layer was obtained in the same manner as in Example II-3. This stacked body was used as the foaming adhesive sheet.

### [Comparative Example II-3]

A first intermediate layer was formed on a substrate in the same manner as in Example II-1. Also, a second adhesive layer was formed on a separator in the same manner as in Example II-3. Then, on the substrate surface of a stacked body including a substrate and a first intermediate layer, the second adhesive layer surface of a stacked body including a separator and a second adhesive layer was laminated. After that, the separator was peeled off. Thereby, obtained was a foaming adhesive sheet wherein the first intermediate layer, the substrate, and the second adhesive layer were disposed in this order.

### [Comparative Examples II-4 to II-5]

A foaming adhesive sheet was respectively produced in the same manner as in Comparative Example II-3, except that the thickness of the second adhesive layer was respectively made the thickness shown in below Table 2.

### [Comparative Example II-6]

A foaming adhesive sheet was produced in the same manner as in Example II-1, except that the thicknesses of the first adhesive layer and the second adhesive layer were respectively made the thicknesses as shown in below Table 2.

### [Evaluation]

### (1) Tack of first adhesive layer and second adhesive layer

About the tack of the first adhesive layer, a tacking test machine "TAC-II" from RHESCA was used, and a cylindrical probe made of stainless having a diameter of 5 mm was pushed against a surface of the first adhesive layer of the foaming adhesive sheet at a load of 10.0 gf and speed of 30 mm/min, and kept for 1.0 second in the condition of 25°C, then peeled off at the speed of 30 mm/min, and the load at the time of peeling off was measured. This measurement was performed for five times, and the average value was determined as the tack.

The tack of the second adhesive layer was measured similarly to the tack of the first adhesive layer.

### (2) Loop stiffness

A test piece in a square shape having 10 mm width and 200 mm length was produced from the foaming adhesive sheet, and the loop stiffness was measured by the above described method for measuring the loop stiffness. As the measurement device, Loop Stiffness Tester (D-R) from Toyo Seiki Seisaku-sho, Ltd. was used. The environment during the measurement was temperature: 23°C and relative humidity: 50%.

### (3) Adhering property

FIGS. 10A to 10B are diagrams explaining the evaluation method of adhering property of the foaming adhesive sheet. The foaming adhesive sheet 10 was cut into a size of 10 mm width and 100 mm length and used as a test piece. Also, jig 51 was a rectangular parallelepiped shape, and under surface 51a of the jig 51 was a square shape, a flat surface, and horizontal. Also, to the under surface 51a of the jig 51, double-sided pressure-sensitive adhesive tape 52 ("Y-4920-25" from 3M) was adhered.

First, as shown in FIG. 10A, under an environment with normal temperature and normal humidity, the foaming adhesive sheet 10 was fixed by adhering the double-sided pressure-sensitive adhesive tape 52 surface of the jig 51 to the center of the foaming adhesive sheet 10. The adhesion area was 10 mm * 10 mm. At this time, the double-sided pressure-sensitive adhesive tape 52 surface of the jig 51 was adhered to the first adhesive layer surface of the foaming adhesive sheet 10.

Next, as shown in FIG. 10B, the jig 51 was lifted up vertically upward. Next, although not illustrated, a metal plate was disposed in down side of the foaming adhesive sheet lifted up by the jig, the jig was lowered vertically downward, and thereby the foaming adhesive sheet was adhered to the metal plate. Then, the state of the foaming adhesive sheet was visually observed to evaluate the adhering property with the below basis.
A: The foaming adhesive sheet was adhered without folding and biting of bubbles.
B: Folding or biting of bubbles was generated in the foaming adhesive sheet.

**[Table 3]**

| | Ex. II-1 | Ex. II-2 | Ex. II-3 | Ex. II-4 | Ex. II-5 | Comp. Ex. II-1 | Comp. Ex. II-2 | Comp. Ex. II-3 | Comp. Ex. II-4 | Comp. Ex. II-5 | Comp. Ex. II-6 |
|---|---|---|---|---|---|---|---|---|---|---|---|
| Thickness of first adhesive layer (µm) | 27 | 27 | 52 | 52 | 52 | 27 | 52 | 0 | 0 | 0 | 27 |
| Thickness of first intermediate layer (µm) | 2 | 2 | 2 | 2 | 2 | 2 | 2 | 2 | 2 | 2 | 2 |
| Thickness of substrate (µm) | 25 | 25 | 25 | 25 | 25 | 25 | 25 | 25 | 25 | 25 | 25 |
| Thickness of second adhesive layer (µm) | 51 | 76 | 26 | 51 | 76 | 0 | 0 | 26 | 51 | 76 | 26 |
| Total thickness (µm) | 105 | 130 | 105 | 130 | 155 | 54 | 79 | 53 | 78 | 103 | 80 |
| Tack of first adhesive layer (gf) | 0 | 0 | 0 | 0 | 0 | 0 | 0 | - | - | - | 0 |
| Tack of second adhesive layer (gf) | 86 | 191 | 62 | 75 | 184 | - | - | 64 | 75 | 178 | 70 |
| Curvature radius (mm) | 15.1 | 16.3 | 15.5 | 19.6 | 25.4 | 12.2 | 14.2 | ∞ No curl | ∞ No curl | ∞ No curl | 14.2 |
| Loop stiffness (mN/10mm) | 49.4 | 47.3 | 76.1 | 76.6 | 80.0 | 53.0 | 76.1 | 10.3 | 9.1 | 9.0 | 58.5 |
| Adhering property | A | A | A | A | A | - | - | B (Folding) | B (Folding) | B (Folding) | A |

From Table 3, it was confirmed that the adhering property was excellent when the curvature radius of the curl of the foaming adhesive sheet after placed still at the specified temperature and specified humidity for the specified time was the specified value or more, as well as when the loop stiffness of the foaming adhesive sheet was the specified value or more.

Incidentally, in the present disclosure, for example, the below aspects of the inventions are provided:
[1] A foaming adhesive sheet comprising a first adhesive layer, a substrate, and a second adhesive layer, in this order, wherein
   the first adhesive layer and the second adhesive layer contain a curable adhesive agent;
   at least one of the first adhesive layer and the second adhesive layer further contains a foaming agent; a tack of the first adhesive layer is 0 gf or more and less than 10 gf;
   a tack of the second adhesive layer is 10 gf or more and 500 gf or less; and
   a loop stiffness is 50 mN/10 mm or more.
[2] The foaming adhesive sheet according to [1], wherein the first adhesive layer contains the foaming agent.
[3] The foaming adhesive sheet according to [2], wherein the first adhesive layer and the second adhesive layer contain the foaming agent.
[4] A foaming adhesive sheet comprising a first adhesive layer, a substrate, a second adhesive layer, and a pressure-sensitive adhesive layer, in this order, wherein
   the first adhesive layer and the second adhesive layer contain a curable adhesive agent and a foaming agent;
   the pressure-sensitive adhesive layer contains a pressure-sensitive adhesive agent or a curable adhesive agent;
   a tack of the first adhesive layer is 0 gf or more and less than 10 gf;
   a tack of the pressure-sensitive adhesive layer is 10 gf or more; and
   a loop stiffness is 50 mN/10 mm or more.
[5] The foaming adhesive sheet according to [4], wherein a tack of the second adhesive layer is 0 gf or more and less than 10 gf.
[6] The foaming adhesive sheet according to any one of [1] to [5], wherein a thickness of the substrate is thinner than a thickness of the first adhesive layer and a thickness of the second adhesive layer.
[7] A foaming adhesive sheet comprising a first adhesive layer, a substrate, and a second adhesive layer, in this order, wherein
   a composition of the first adhesive layer is different from a composition of the second adhesive layer;
   the first adhesive layer and the second adhesive layer contain a thermosetting adhesive agent;
   at least one of the first adhesive layer and the second adhesive layer further contains a foaming agent, and a curvature radius of a curl of the foaming adhesive sheet after placed still at a temperature of 60°C and a humidity of 10 %RH or less for 15 hours is 15 mm or more; and
   a loop stiffness is 45 mN/10 mm or more.
[8] The foaming adhesive sheet according to [7], wherein the first adhesive layer and the second adhesive layer contain the foaming agent.
[9] The foaming adhesive sheet according to [7] or [8], wherein a thickness of the substrate is thinner than a thickness of the first adhesive layer and a thickness of the second adhesive layer.
[10] The foaming adhesive sheet according to any one of [7] to [9], wherein a tack of the first adhesive layer is 0 gf or more and less than 10 gf, and a tack of the second adhesive layer is 10 gf or more and 500 gf or less.
[11] The foaming adhesive sheet according to any one of [7] to [10], further comprising a curl adjusting layer on a surface of the second adhesive layer that is opposite side to the substrate.
[12] A method for producing a product, the method comprising:
   a disposing step of disposing the foaming adhesive sheet according to any one of [1] to [11] between a first member and a second member; and
   an adhering step of adhering the first member and the second member by foaming and curing the foaming adhesive sheet by heating.

### Reference Signs List

- 1: first adhesive layer
- 2: substrate
- 3: second adhesive layer
- 4: first intermediate layer
- 5: second intermediate layer
- 6: pressure-sensitive adhesive layer
- 7: curl adjusting layer
- 10: foaming adhesive sheet
- 15: adhesive sheet after formed and cured
- 20a: first member
- 20b: second member
- 100: product

## Claims

1. A foaming adhesive sheet comprising a first adhesive layer, a substrate, and a second adhesive layer, in this order, wherein
a composition of the first adhesive layer is different from a composition of the second adhesive layer;
the first adhesive layer and the second adhesive layer contain a thermosetting adhesive agent;
at least one of the first adhesive layer and the second adhesive layer further contains a foaming agent;
a curvature radius of a curl of the foaming adhesive sheet after placed still at a temperature of 60°C and a humidity of 10 %RH or less for 15 hours is 15 mm or more; a loop stiffness is 45 mN/10 mm or more; and
wherein the curvature radius and loop stiffness are measured as set out in the description.

2. The foaming adhesive sheet according to claim 1, wherein the first adhesive layer and the second adhesive layer contain the foaming agent.

3. The foaming adhesive sheet according to claim 1, wherein a thickness of the substrate is thinner than a thickness of the first adhesive layer and a thickness of the second adhesive layer.

4. The foaming adhesive sheet according to claim 1, wherein a tack of the first adhesive layer before curing is 0 mN (0 gf) or more and less than 98 mN (10 gf), a tack of the second adhesive layer before curing is 98 mN (10 gf) or more and 4900 mN (500 gf) or less, and the tack is measured using a tacking test machine (TAC-II from RHESCA CO., LTD) using a cylindrical probe made of stainless steel having a diameter of 5 mm which is pushed against the surface of the adhesive layer at a load of 98 mN (10 gf) and a speed of 30 mm/min and kept for one second at a temperature of 25 °C, then peeled off at a speed of 30 mm/min.

5. The foaming adhesive sheet according to claim 1, further comprising a separator or a fiber layer on a surface of the second adhesive layer that is opposite side to the substrate.

6. A method for producing a product, the method comprising:
a disposing step of disposing the foaming adhesive sheet according to any one of claims 1 to 5 between a first member and a second member; and
an adhering step of adhering the first member and the second member by foaming and curing the foaming adhesive sheet by heating.
